# EUROPEAN PATENT APPLICATION

(11) **EP 2 824 500 A1**
(43) Date of publication of application: **14.01.2015**
(21) Application number: 13758301.9
(22) Date of filing: 09.01.2013
(51) Int. Cl.: G02B 27/22

(54) **MULTIPLE THREE-DIMENSIONAL DISPLAY**

(30) Priority: 06.03.2012 KR 20120023096; 06.03.2012 KR 20120023094; 06.03.2012 KR 20120023093; 06.03.2012 KR 20120023095
(71) Applicant: LG Electronics Inc., Youngdungpo-gu Seoul 150-721 (KR)
(72) Inventor: KIM, Choonsub, Seoul 137-724 (KR); HA, Jongsu, Seoul 137-724 (KR); LEE, Deugjin, Seoul 137-724 (KR); HA, Kisoo, Seoul 137-724 (KR); CHOI, Manyong, Seoul 137-724 (KR); LEE, Deokgeun, Seoul 137-724 (KR)
(74) Representative: Katérle, Axel
(86) International application number: PCT/KR2013/000146
(87) International publication number: WO 2013/133525

(57) **Abstract**

Disclosed herein is a multiple 3-D display device. A multiple 3-D display device in accordance with an embodiment of the present invention may include a first panel, a first 3-D filter in front of the first panel, a second panel disposed adjacent to the first panel in a first direction, and a second 3-D filter disposed in front of the second panel. The interval between the first 3-D filter and the second 3-D filter in the first direction may be smaller than an interval between the first panel and the second panel.

## Description

### BACKGROUND OF THE INVENTION

### Field of the Invention

The present invention relates to a multi-three-dimensional (3-D) display device.

### Discussion of the Related Art

In general, a 3-D display device is an apparatus for enabling a viewer to visually recognize a 2-D image as a 3-D image by enabling the viewer to recognize a left eye image in his or her left eye and to recognize a the right eye image in his or her right eye.

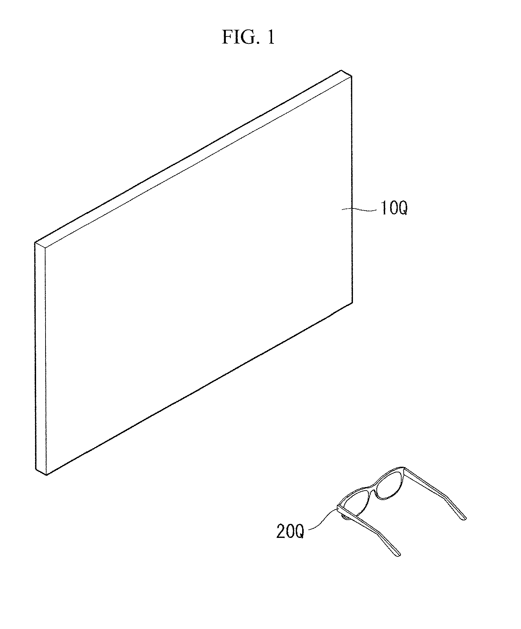

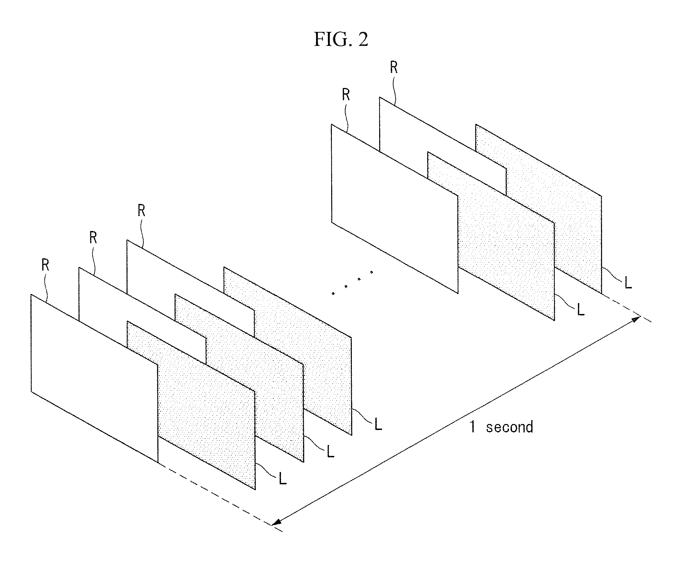

FIGS. 1 and 2 are diagrams illustrating a known 3-D display device.

Referring to FIG. 1, the known 3-D display device may include a display panel 10Q configured to display an image and 3-D glasses 20Q.

The display panel 10Q may display a specific image on its screen.

The 3-D glasses 20Q may include a left eye lens corresponding to a left eye image and a right eye lens corresponding to a right eye image.

A method of implementing a 3-D image is described in brief below. As illustrated in FIG. 2, if an image according to a total of 120 frames (e.g., a 120 Hz scheme) is implemented per second, 60 right eye frames R and 60 left eye frames L may alternately implement the image.

Furthermore, in the right eye frame R, a right eye lens 302 may be turned on and a left eye lens 301 may be turned off. In the left eye frame L, the left eye lens 301 may be turned on and the right eye lens 302 may be turned off.

In this case, an image according to the left eye frame L is recognized by the left eye of a viewer and an image according to the right eye frame R is recognized by the right eye of the viewer, so the viewer may recognize a 3-D image due to the point of view between both eyes.

However, the known 3-D display device is problematic in that only a viewer who wears the 3-D glasses 20Q may recognize a 3-D image.

### Summary of the Invention

An object of the present invention is to provide a multiple 3-D display device that enables a viewer who does not wear 3-D glasses to watch a 3-D image.

A multiple 3-D display device in accordance with an embodiment of the present invention may include a first panel, a first 3-D filter in front of the first panel, a second panel disposed adjacent to the first panel in a first direction, and a second 3-D filter disposed in front of the second panel. The interval between the first 3-D filter and the second 3-D filter in the first direction may be smaller than an interval between the first panel and the second panel.

Furthermore, each of the first and the second 3-D filters may include a pixel area for transmitting light generated by a left eye pixel or right eye pixel of each of the first and the second panels without changing the phase of the light.

Furthermore, the direction in which the pixel area extends may be an oblique direction on the basis of the side of the first and the second 3-D filters.

Furthermore, the width of at least one of the first 3-D filter and the second 3-D filter in the first direction may be greater than the width of each of the first panel and the second panel.

Furthermore, the first panel may be spatially separated from the first 3-D filter, and the second panel may be spatially separated from the second 3-D filter.

Furthermore, the first 3-D filter and the second panel may be overlapped or the second 3-D filter and the first panel may be overlapped in the width direction of the first and the second panels.

Furthermore, the length of the first 3-D filter may be different from the length of the second 3-D filter in the first direction.

The multiple 3-D display device may further include a first transparent substrate disposed between the first panel and the first 3-D filter and a second transparent substrate disposed between the first panel and the second 3-D filter.

The multiple 3-D display device may further include a structure disposed at a boundary portion of the first panel and the second panel. The structure may include a portion disposed between the first panel and the first 3-D filter and a portion disposed between the second panel and the second 3-D filter.

Furthermore, the structure may include a body portion extended in the width direction of the first and the second panels and configured to include a portion disposed between the first 3-D filter and the second 3-D filter, a first extension portion extended from the body portion in the first direction and disposed in front of the first 3-D filter, a second extension portion extended from the body portion in the first direction and disposed in front of the second 3-D filter, a third extension portion extended from the body portion in the first direction and disposed between the first panel and the first 3-D filter, and a fourth extension portion extended from the body portion in the first direction and disposed between the second panel and the second 3-D filter.

Furthermore, each of the first and the second 3-D filters may include a pixel area for transmitting light generated by a left eye pixel or right eye pixel of each of the first and the second panels without changing a phase of the light. The first panel and the second panel may include a first area and a second area opposite the first area. The first area of the first panel and the second area of the second panel may be disposed adjacent to each other. Assuming that an interval between the center of a first pixel group placed in the first area of the first panel and the center of the first pixel area of the first 3-D filter, corresponding to the first pixel group, in the first direction is a first interval, an interval between the center of the second pixel group placed in the second area of the first panel and the center of the second pixel area of the first 3-D filter, corresponding to the second pixel group, in the first direction is a second interval, an interval between the center of a third pixel group placed in the second area of the second panel and the center of the third pixel area of the second 3-D filter, corresponding to the third pixel group, in the first direction, is a third interval, and an interval between the center of a fourth pixel group placed in the first area of the second panel and the center of the fourth pixel area of the first 3-D filter, corresponding to the fourth pixel group, in the first direction, is a fourth interval, the first interval may be smaller than the second interval and the third interval may be smaller than the fourth interval.

Furthermore, the pixel area may include lens units protruded from each of the first and the second panels so that the lens units become distant from the first and the second panels.

Furthermore, the direction in which the lens units are extended may be an oblique direction based on the sides of the first and the second 3-D filters.

Furthermore, each of the first and the second 3-D filters may include blocking units configured to partitioning adjacent pixel area.

Furthermore, the direction in which the blocking units are extended may be an oblique direction based on the sides of the first and the second 3-D filters.

Furthermore, an air gap may be formed between the first panel and the first 3-D filter and between the second panel and the second 3-D filter.

The multiple 3-D display device may further include a first side cove disposed in the second area of the first panel and a second side cover disposed in the first area of the second panel. The first side cover may be connected to the first 3-D filter, and the second side cover may be connected to the second 3-D filter.

Furthermore, the body portion further may include a portion disposed between the first panel and the second panel in the first direction.

### Brief Description of the Drawings

FIGS. 1 and 2 are diagrams illustrating a known 3-D display device;
FIGS. 3 to 13 are diagrams illustrating the configuration of a multi-plasma display device and a method of manufacturing the same in accordance with embodiments of the present invention; and

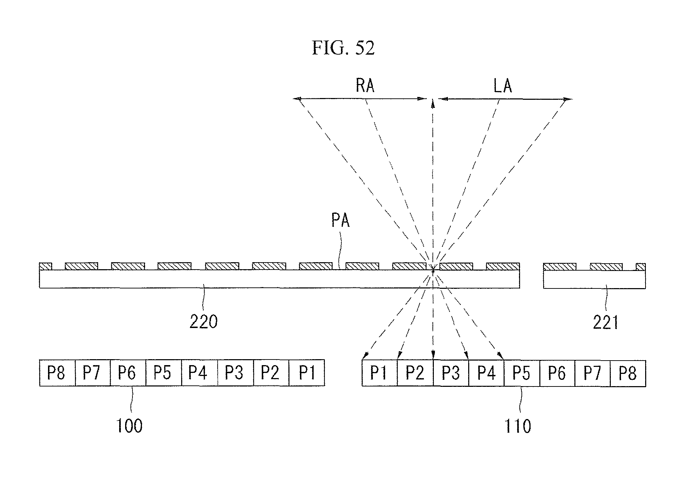

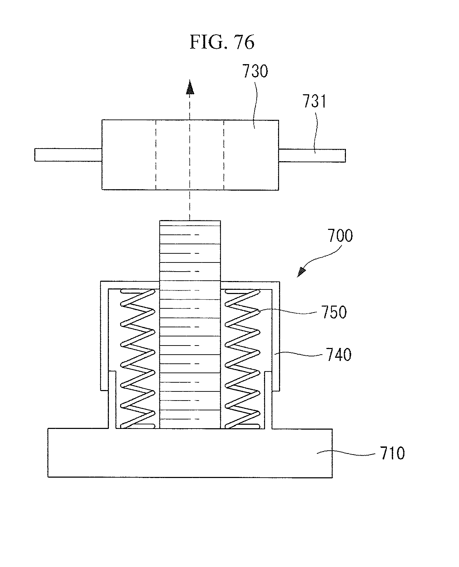

FIGS. 14 to 113 are diagrams illustrating a multi-display device in accordance with an embodiment of the present invention.

### Detailed Description of the Embodiments

Hereinafter, a multiple 3-D display device and a method of manufacturing the same in accordance with embodiments of the present invention are described in detail with reference to the accompanying drawings.

The present invention may be modified in various ways and may be implemented to have several embodiments. Specific embodiments are illustrated in the drawings and are described in detail. It is however to be understood that the present invention is not intended to be limited to the specific embodiments, but that the specific embodiments include all modifications, equivalents, and substitutions which fall within the spirit and technical scope of the present invention.

In describing the present invention, terms, such as the first and the second, may be used to describe various elements, but the elements should not be restricted by the terms. The terms are used to only distinguish one element from the other element. For example, a first element may be named a second element without departing from the scope of the present invention. Likewise, a second element may be named a first element. The term "and/or" includes a combination of a plurality of related and illustrated items or any one of a plurality of related and described items.

A term "and/or" includes a combination of a plurality of related and illustrated items or any one of a plurality of related and described items.

When it is said that one element is "connected" or "coupled" with the other element, it should be understood that one element may be directly connected or coupled with the other element, but a third element may exist between the two elements. In contrast, when it is said that one element is "directly connected" or "directly coupled" with the other element, it should be understood that a third element does not exist between the two elements.

The terms used in this application are used to only describe specific embodiments and are not intended to restrict the present invention. An expression of the singular number includes an expression of the plural number unless clearly defined otherwise in the context.

In this application, terms, such as "comprise" or "have", are intended to designate that characteristics, numbers, steps, operations, elements, or parts which are described in the specification, or a combination of them exist, and should not be understood that they exclude the existence or possible addition of one or more other characteristics, numbers, steps, operations, elements, parts, or combinations of them in advance.

All terms used herein, unless defined otherwise, have the same meanings as those typically understood by those having ordinary skill in the art. The terms, such as ones defined in common dictionaries, should be interpreted to have the same meanings as terms in the context of pertinent technology, and should not be interpreted to have ideal or excessively formal meanings unless clearly defined in the specification.

Furthermore, the following embodiments are intended to fully describe the present invention to a person having ordinary knowledge in the art to which the present invention pertains. Accordingly, the shapes, sizes, etc. of components in the drawings may be exaggerated to make the description clear

Furthermore, although a Plasma Display Panel (PDP) is described as an example of a display panel, a display panel that may be applied to the present invention is not limited to the PDP, but may be a Liquid Crystal Display (LCD), a Field Emission Display (FED), and an Organic Light Emitting Display (OLED).

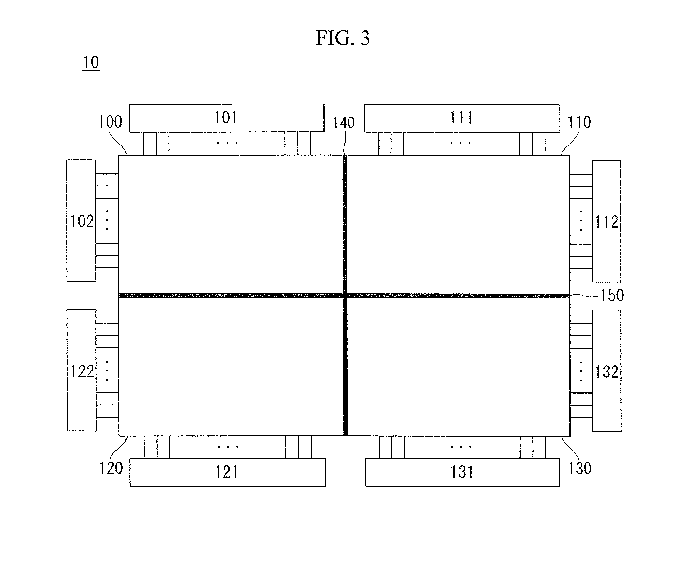

FIGS. 3 to 13 are diagrams illustrating the configuration of a multi-plasma display device and a method of manufacturing the same in accordance with embodiments of the present invention.

Referring to FIG. 3, the multi-plasma display device 10 may include a plurality of PDPs 100, 110, 120, and 130.

A (1-1)-th driving unit 101 and a (1-2)-th driving unit 102 may supply driving signals to the first panel 100 of the plurality of PDPs 100 to 130. In this case, the (1-1)-th driving unit 101 and the (1-2)-th driving unit 102 may be merged into a single integrated driving unit.

Furthermore, a (2-1)-th driving unit 111 and a (2-2)-th driving unit 112 may supply driving signals to the second panel 110.

As described above, different driving units may be configured to supply driving signals to the respective PDPs 100, 110, 120, and 130.

Furthermore, a boundary area, that is, a seam portion 140, 150 may be formed between two adjacent PDPs. Such a seam portion 140, 150 may be called an area between two adjacent PDPs.

The multi-plasma display device 10 may include the seam portion 140, 150 between two adjacent PDPs of the PDPs 100 to 130 because the individual PDPs 100 to 130 are disposed adjacent to each other to implement an image.

In FIG. 3, each of the driving units may be a driving board.

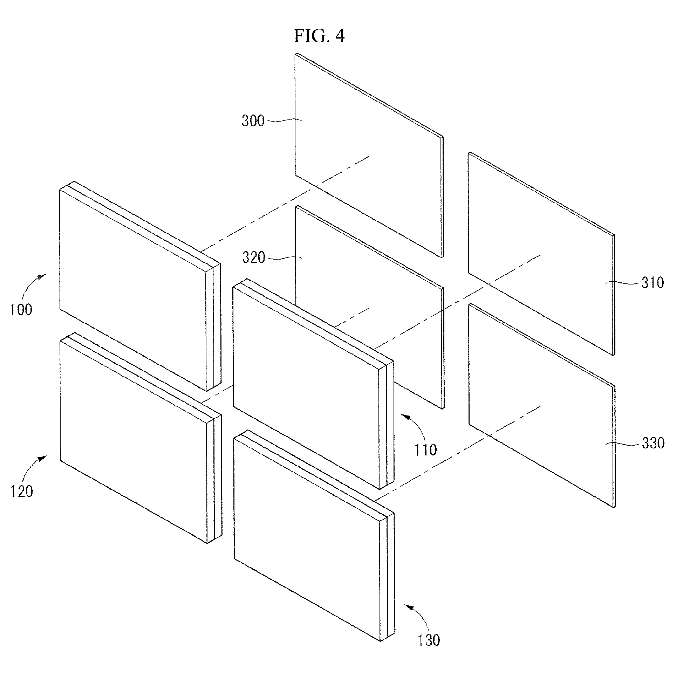

Referring to FIG. 4, in the multi-plasma display device in accordance with an embodiment of the present invention, a first plate 300 may be disposed on the rear of the first panel 100, that is, on the rear substrate of the first panel 100. Furthermore, a second plate 310 may be disposed on the rear of the second panel 110, a third plate 320 may be disposed on the rear of the third panel 120, and a fourth plate 330 may be disposed on the rear of the fourth panel 130. In this case, the first, the second, the third, and the fourth plates 300 to 330 may include metallic materials and each may be called a heat dissipation plate, a heat dissipation frame, a chassis, or a metal plate.

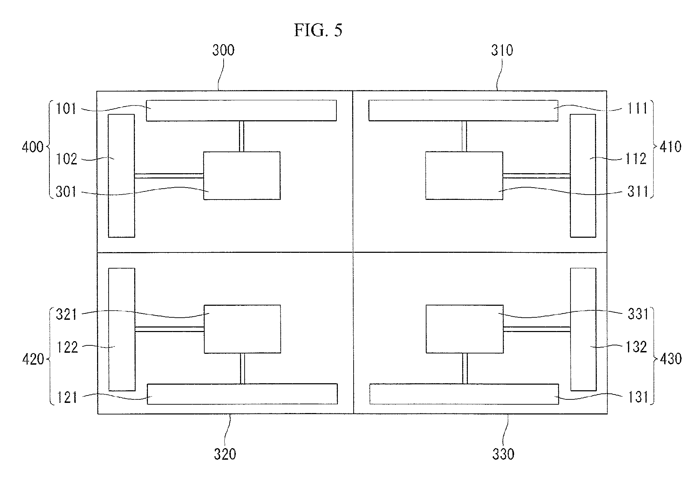

Furthermore, driving boards 1010 to 1320 configured to supply driving signals to the first, the second, the third, and the fourth panels 100 to 130 may be disposed on the rears of the first, the second, the third, and the fourth plates 300 to 330. For example, as illustrated in FIG. 5, the (1-1)-th driving unit 101, the (1-2)-th driving unit 102, and a first control unit 301 may be disposed on the rear of the first plate 300 in a board form. Furthermore, the (2-1)-th driving unit 111, the (2-2)-th driving unit 112, and a second control unit 311 may be disposed on the rear of the second plate 310 in a board form. Furthermore, a (3-1)-th driving unit 121, a (3-2)-th driving unit 122, and a third control unit 321 may be disposed on the rear of the third plate 320 in a board form. Furthermore, a (4-1)-th driving unit 131, a (4-2)-th driving unit 132, and a fourth control unit 331 may be disposed on the rear of the fourth plate 330 in a board form.

In this case, the (1-1)-th, the (2-1)-th, the (3-1)-th, and the (4-1)-th driving units 101, 111, 121, and 131 may supply driving signals to the address electrodes of the first, the second, the third, and the fourth panels 300 to 330. Furthermore, the (1-2)-th, the (2-2)-th, the (3-2)-th, and the (4-2)-th driving units 102, 112, 122, and 132 may supply driving signals to the scan electrodes and sustain electrodes of the first, the second, the third, and the fourth panels 300 to 330. Furthermore, the first, the second, the third, and the fourth control units 301, 311, 321, and 331 may control the (1-1)-th, the (2-1)-th, the (3-1)-th, and the (4-1)-th driving units 101, 111, 121, and 131 and the (1-2)-th, the (2-2)-th, the (3-2)-th, and the (4-2)-th driving units 102, 112, 122, and 132.

In this case, the first control unit 301, the (1-1)-th driving unit 101, and the (1-2)-th driving unit 102 may be collectively called a first driving unit. The first driving unit may be considered to supply driving signals to the first PDP 100. Furthermore, the first driving unit may compute the Average Power Level (APL) of image data corresponding to the first PDP 100.

In this case, the second control unit 311, the (2-1)-th driving unit 111, and the (2-2)-th driving unit 112 may be collectively called a second driving unit. The second driving unit may be considered to supply driving signals to the second PDP 110. Furthermore, the second driving unit may compute the APL of image data corresponding to the second PDP 110.

In this case, the third control unit 321, the (3-1)-th driving unit 121, and the (3-2)-th driving unit 122 may be collectively called a third driving unit. The third driving unit may be considered to supply driving signals to the third PDP 120. Furthermore, the third driving unit may compute the APL of image data corresponding to the third PDP 120.

In this case, the fourth control unit 331, the (4-1)-th driving unit 131, and the (4-2)-th driving unit 132 may be collectively called a fourth driving unit. The fourth driving unit may be considered to supply driving signals to the fourth PDP 130. Furthermore, the second driving unit may compute the APL of image data corresponding to the fourth PDP 140.

FIG. 3 illustrates that the control units 301 to 331 have been disposed on the respective rears of the first, the second, the third, and the fourth plates 300 to 330, but the first, the second, the third, and the fourth control units 301 to 331 may be integrated into a single board.

Each of the PDPs 100 to 130 may implement an image using a frame including a plurality of subfields.

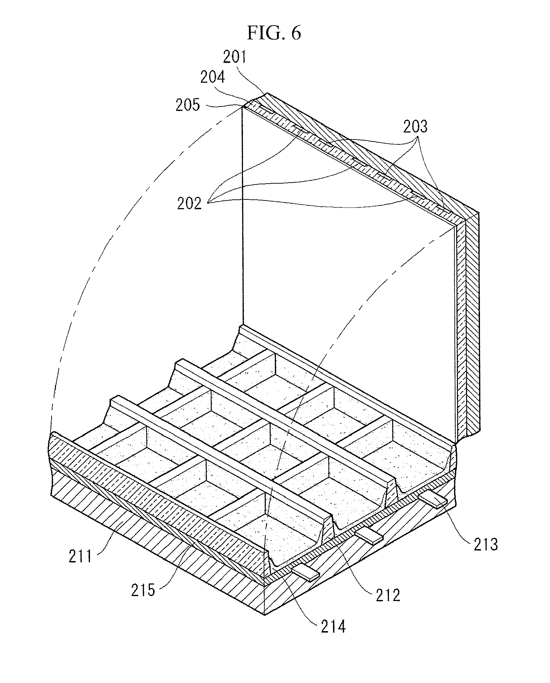

As illustrated in FIG. 6, each of the first, the second, the third, and the fourth PDPs 100 to 130 may include a rear substrate 211 in which a plurality of second electrodes 213 X configured to cross a plurality of first electrodes 202 Y and 203 Z is formed.

In this case, the first electrodes 202 and 203 may include scan electrodes 202 Y parallel to each other and sustain electrodes 203 Z parallel to each other. The second electrode 213 may be called an address electrode.

An upper dielectric layer 204 configured to limit the discharge currents of the scan electrodes 202 Y and the sustain electrodes 203 Z and to provide insulation between the scan electrodes 202 Y and the sustain electrodes 203 Z may be disposed in a front substrate 201 in which the scan electrodes 202 Y and the sustain electrodes 203 Z are formed.

A protection layer 205 configured to facilitate discharge conditions may be formed in the front substrate 201 in which the upper dielectric layer 204 is formed. Such a protection layer 205 may include materials having a high secondary electron emission coefficient, for example, magnesium oxide (MgO).

The address electrodes 213 X may be formed on the rear substrate 211. A lower dielectric layer 215 configured to cover the address electrodes 213 X and insulate the address electrodes 213 X may be formed on the rear substrate 211 in which such address electrodes 213 X are formed.

Barrier ribs 212 configured to partition discharge spaces, that is, discharge cells and to have a stripe type, a well type, a delta type, or a beehive type may be formed on the lower dielectric layer 215. Accordingly, first discharge cells configured to emit red (R) light, second discharge cells configured to emit blue (B) light, and third discharge cells configured to emit green (G) light may be formed between the front substrate 201 and the rear substrate 211. The first, the second, and the third discharge cells R, G, and B may collectively form a pixel.

In the discharge cell, the address electrode 213 may intersect the scan electrodes 202 and the sustain electrodes 203. That is, in the discharge cell, the address electrode 213 is formed at a point where it intersects the scan electrodes 202 and the sustain electrodes 203.

The discharge cell partitioned by the barrier ribs 212 may be filled with a specific discharge gas.

Furthermore, a fluorescent layer 214 configured to display an image when an address discharge is generated may be formed in the discharge cell partitioned by the barrier ribs 212. For example, a first fluorescent layer configured to generate red (R) light, a second fluorescent layer configured to generate blue (B) light, and a third fluorescent layer configured to generate green (G) light may be formed in the discharge cell partitioned by the barrier ribs 212.

Furthermore, the address electrodes 213 formed on the rear substrate 211 may have substantially the same width or thickness, but the width or thickness of the address electrode 213 within the discharge cell may be different from that of the address electrode 213 outside the discharge cell. For example, the width or thickness of the address electrode 213 within the discharge cell may be wider or thicker than that of the address electrode 213 outside the discharge cell.

When a specific signal is applied to at least one of the scan electrode 202, the sustain electrode 203, and the address electrode 213, a discharge may be generated in the discharge cell. When a discharge is generated in the discharge cell as described above, ultraviolet rays may be generated by a discharge gas that fills the discharge cell. Such ultraviolet rays may be radiated to the fluorescent particles of the fluorescent layer 214. As a result, the fluorescent particles to which the ultraviolet rays have been radiated emit a visible ray, and thus a specific image may be displayed on a screen of the PDP 100.

An image frame for implementing the gray level of an image in the PDP is described below.

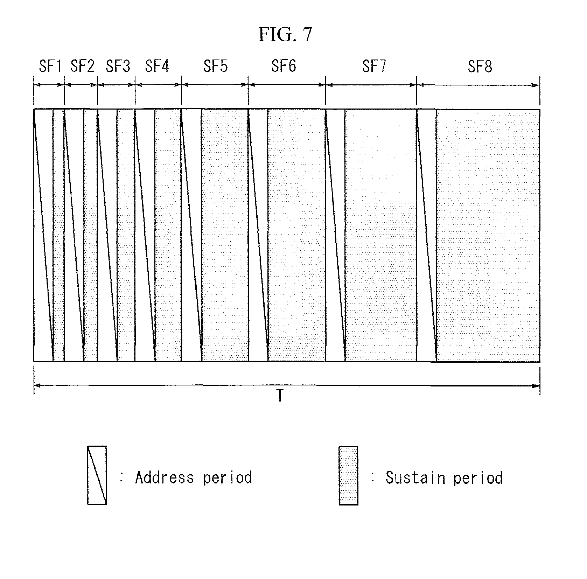

Referring to FIG. 7, a frame for implementing the gray level of an image may include a plurality of subfields SF1 to SF8.

Furthermore, each of the plurality of subfields may include an address period in which a discharge cell from which a discharge will not be generated is selected or a discharge cell from which a discharge is generated is selected and a sustain period in which a gray level is implemented depending on the number of times of discharges.

For example, if an image is to be displayed using 256 gray levels, for example, a single frame may be divided into 8 subfields SF1 to SF8 as illustrated in FIG. 7, and each of the 8 subfields SF1 to SF8 may include the address period and the sustain period.

Alternatively, at least one of the plurality of subfields of the frame may further include a reset period for resetting.

Furthermore, at least one of the plurality of subfields of the frame may not include the sustain period.

The weight of a corresponding subfield may be set by controlling the number of sustain signals supplied in the sustain period. That is, a specific weight may be applied to each of the subfields using the sustain period. For example, the weight of each of the subfields may be set so that it is increased in the ratio of 2ⁿ (where n = 0, 1, 2, 3, 4, 5, 6, 7) in such a manner that the weight of the first subfield is set to 2⁰ and the weight of the second subfield is set to 2¹. As described above, various gray levels of an image may be implemented by controlling the number of sustain signals supplied in the sustain period of each of the subfields depending on the weight of each of the subfields.

In this case, FIG. 7 illustrates that a single image frame includes 8 subfields, but the number of subfields forming a single image frame may be variously changed. For example, a single image frame may include 12 subfields from a first subfield to a twelfth subfield, or a single image frame may include 10 subfields.

Furthermore, in FIG. 7, the subfields have been arranged in order of increasing weight in a single image frame, but the subfields may be arranged in order of decreasing weight in a single image frame or the subfields may be arranged regardless of weight.

A driving waveform for driving each of the PDPs 100 to 130 is described below.

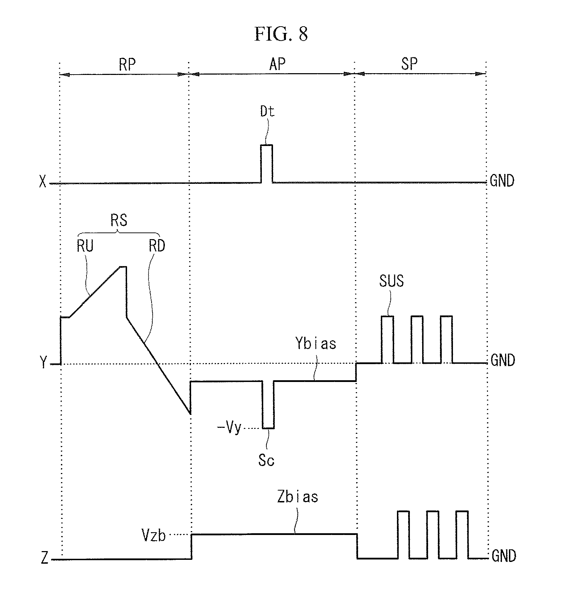

Referring to FIG. 8, in a reset period RP in which at least one of a plurality of subfields of a frame, a reset signal RS may be supplied to a scan electrode Y. In this case, the reset signal RS may include a ramp-up signal RU having a gradually rising voltage and a ramp-down signal RD having a gradually falling voltage.

For example, in the set-up period SU of the reset period RP, the ramp-up signal RU may be supplied to the scan electrode Y. In a set-down period SD subsequent to the set-up period SU, the ramp-down signal RD may be supplied to the scan electrode Y.

When the ramp-up signal RU is supplied to the scan electrode Y, a weak dark discharge, that is, a set-up discharge, is generated in a corresponding discharge cell due to the ramp-up signal RU. A distribution of wall charges within the discharge cell may become regular by the set-up discharge.

After the ramp-up signal RU is supplied, when the ramp-down signal RD is supplied to the scan electrode Y, a weak erase discharge, that is, a set-down discharge, is generated within the discharge cell. Wall charges of the degree that an address discharge may be stably generated may remain in the discharge cell due to the set-down discharge.

In an address period AP after the reset period RP, a scan reference signal Ybias having voltage higher than the lowest voltage of the ramp-down signal RD may be supplied to the scan electrode Y.

Furthermore, in the address period AP, a scan signal Sc that falls from the voltage of the scan reference signal Ybias may be supplied to the scan electrode Y.

The pulse width of the scan signal Sc supplied to the scan electrode Y in the address period AP of at least one subfield may be different from that of the scan signal Sc of another subfield. For example, the width of a scan signal in a subfield that is placed behind in time may be smaller than that of a scan signal in a subfield that is placed ahead in time. Furthermore, the width of a scan signal according to order of arranged subfields may be gradually reduced as in 2.6 microsecond (*µ*s), 2.3 *µs,* 2.1*µ*s, 1.9 *µ*s or may be reduced as in 2.6 *µ*s, 2.3 *µ*s*,* 2.3 *µ*s, 2.1 *µ*s, ... , 1.9 *µ*s.

As described above, when the scan signal Sc is supplied to the scan electrode Y, a data signal Dt may be supplied to an address electrode X in response to the scan signal Sc.

When such a scan signal and such a data signal are supplied, a voltage difference between the scan signal Sc and the data signal Dt and a wall voltage attributable to wall charges generated in the reset period RP are added together. As a result, an address discharge may be generated in a discharge cell to which the data signal Dt is supplied.

Furthermore, in the address period AP in which the address discharge is generated, a sustain reference signal Zbias may be supplied to a sustain electrode Z so that the address discharge is effectively generated between the scan electrode Y and the address electrode X.

In a sustain period SP after the address period AP, sustain signals SUS may be supplied to at least one of the scan electrode Y and the sustain electrode Z. For example, the sustain signals may be alternately supplied to the scan electrode Y and the sustain electrode Z.

When the sustain signal SUS is supplied, a sustain discharge, that is, a display discharge, may be generated between the scan electrode Y and the sustain electrode Z of a discharge cell selected by the address discharge because a wall voltage within the discharge cell and the sustain voltage Vs of the sustain signal SUS are added together.

A method of manufacturing the multi-plasma display device in accordance with an embodiment of the present invention is described in brief below.

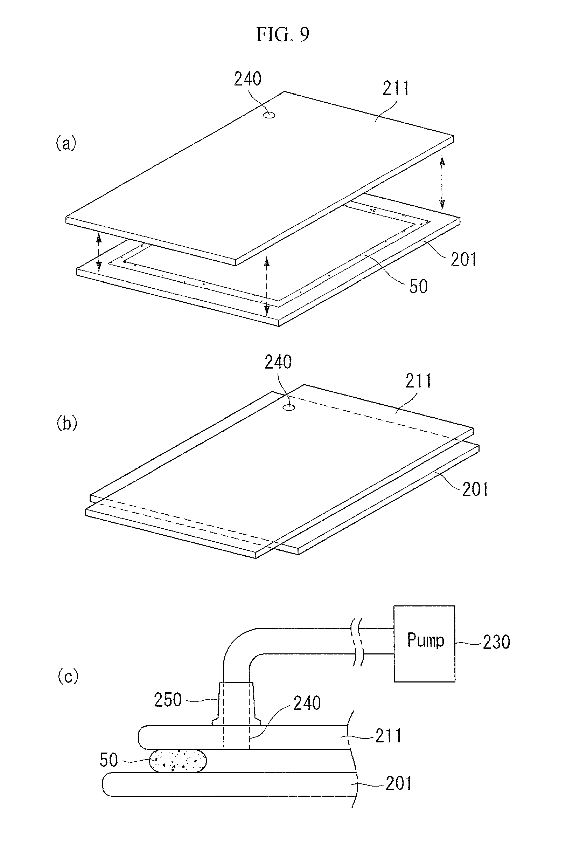

Referring to FIG. 9, a seal portion 50 is formed at the edge of at least one of the front substrate 201 and the rear substrate 211 in which an exhaust hole 240 is formed, as illustrated in (a). The front substrate 201 and the rear substrate 211 may be bonded together, as illustrated in (b).

As illustrated in (c), an exhaust tip 250 may be connected to the exhaust hole 240, and an exhaust pump 230 may be connected to the exhaust tip 250.

Furthermore, impurity gases remaining in the discharge space between the front substrate 201 and the rear substrate 211 may be externally discharged using the exhaust pump 230. Furthermore, a discharge gas, such as argon (Ar), neon (Ne), or xenon (Xe), may be injected into the discharge space.

The discharge space between the front substrate 201 and the rear substrate 211 may be seamed using such a method.

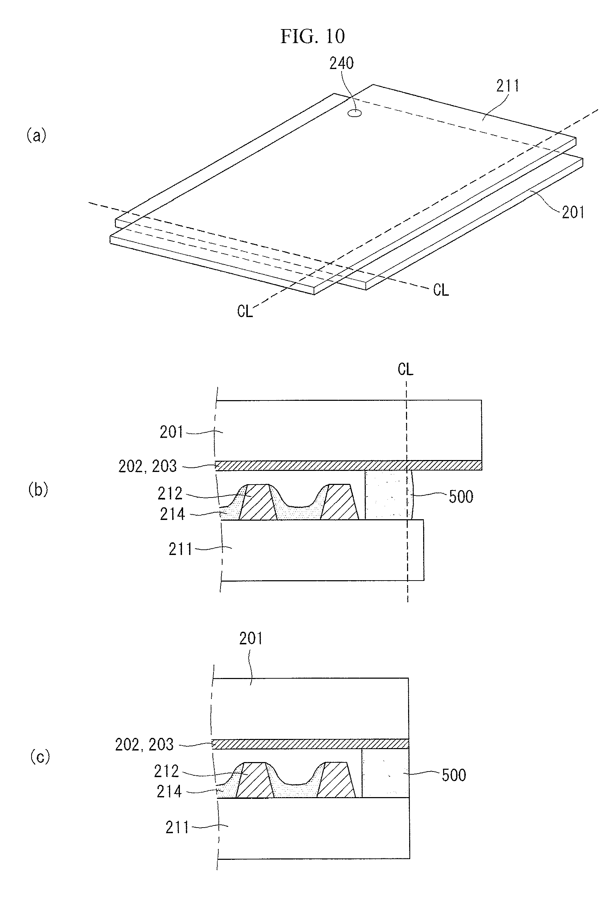

Thereafter, as illustrated in (a) of FIG. 10, part of the front substrate 201 and the rear substrate 211 may be cut along a specific cutting line CL in the state in which the front substrate 201 and the rear substrate 211 have been bonded together after the discharge space between the front substrate 201 and the rear substrate 211 is seamed. In this case, grinding may be performed along with the cutting. For example, the long side on one side of and the short side on the other side of each of the front substrate 201 and the rear substrate 211 may be cut and grinded.

Accordingly, as illustrated in (b) and (c) of FIG. 10, at least one of the front substrate 201 and the rear substrate 211 can be prevented from being excessively protruded in at least one portion that has been cur. As a result, the size of a portion on which an image is not displayed can be reduced.

The seal portion 50 may also be cut in the process of cutting part of the front substrate 201 and the rear substrate 211, as illustrated in (b) and (c) of FIG. 10. If the seal portion 50 is cut as described above, the size of the portion on which an image is not displayed can be further reduced.

A plurality of the PDPs fabricated using a method, such as that of FIG. 10, may be disposed adjacent to each other to form a multi-PDP.

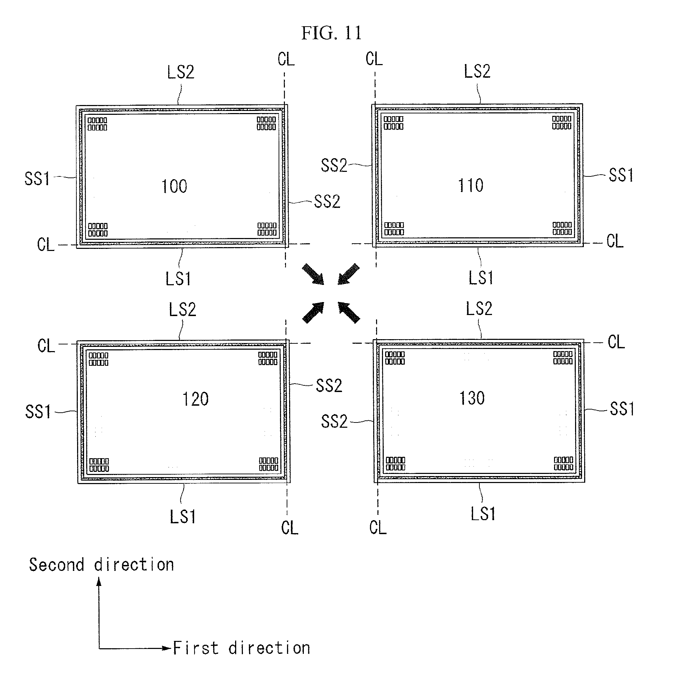

For example, as illustrated in FIG. 11, the first panel 100, the second panel 110, the third panel 120, and the fourth panel 130 may be disposed in a 2x2 matrix form.

Furthermore, the first panel 100, the second panel 110, the third panel 120, and the fourth panel 130 may be disposed so that the cutting faces thereof are adjacent to one another.

For example, a cutting and grinding process may be performed on the second short side SS2 and second long side LS2 of each of the first panel 100, the second panel 110, the third panel 120, and the fourth panel 130.

Furthermore, the first panel 100 and the second panel 110 may be disposed so that the second short side SS2 of the first panel 100 and the second short side SS2 of the second panel 110 are adjacent to each other, and the third panel 120 and the fourth panel 130 may be disposed so that the second short side SS2 of the third panel 120 and the second short side SS2 of the fourth panel 130 are adjacent to each other.

Furthermore, the first panel 100 and the third panel 120 may be disposed so that the second long side LS2 of the first panel 100 and the second long side LS2 of the third panel 120 are adjacent to each other, and the second panel 110 and the fourth panel 130 may be disposed so that the second long side LS2 of the second panel 110 and the second long side LS2 of the fourth panel 130 are adjacent to each other.

In a multi-PDP according to a comparison example different from the multi-PDP of the present invention, a viewer may recognize that an image implemented by the multi-PDP 10 is discontinuously seen through the seam areas 140 and 150.

In contrast, if the first panel 100, the second panel 110, the third panel 120, and the fourth panel 130 are disposed so that the cutting faces thereof are adjacent to one another as in the case of FIG. 11 in accordance with an embodiment of the present invention, the size of the seam areas 140 and 150 of the multi-PDP 10 can be reduced and therefore a more natural image can be implemented.

An example in which the first panel 100, the second panel 110, the third panel 120, and the fourth panel 130 are disposed in a 2x2 matrix form has been illustrated. For example, the plurality of panels may be disposed in various forms, such as a 1×2 matrix form or a 2×1 matrix form.

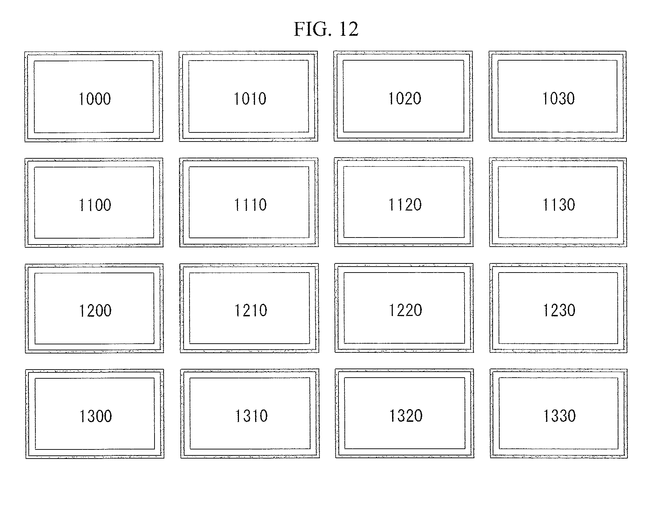

For example, as illustrated in FIG. 12, the plurality of panels may be disposed in a 4x4 matrix form. In this case, an example of the 4x4 matrix form has been illustrated, but a matrix form of 3×3 or higher may also be identically used.

If a multi-PDP is constructed using a number of panels as described above, the panels may be disposed substantially in the same pattern.

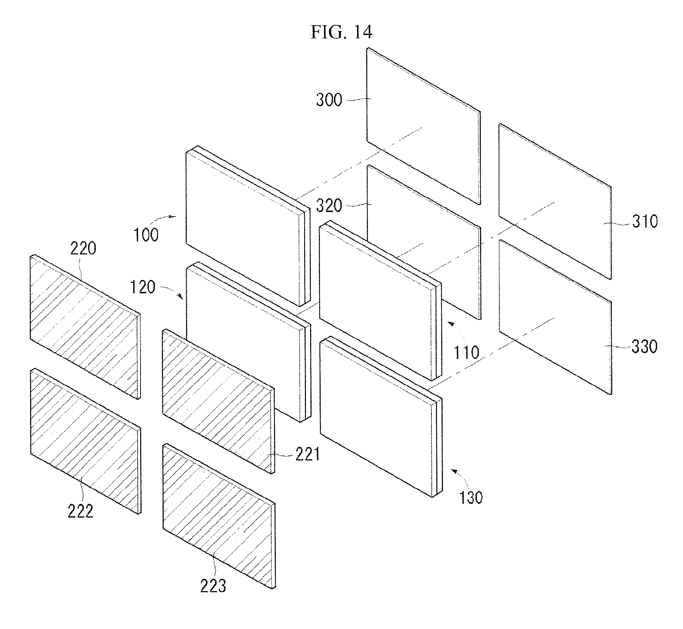

A first panel 1000, a second panel 1010, a fifth panel 1100, and a sixth panel 1110 that belong to first to sixteenth panels 1000 to 1330 arranged in a 4x4 matrix form of FIG. 12 are described as an example below, which correspond to the case of FIG. 14.

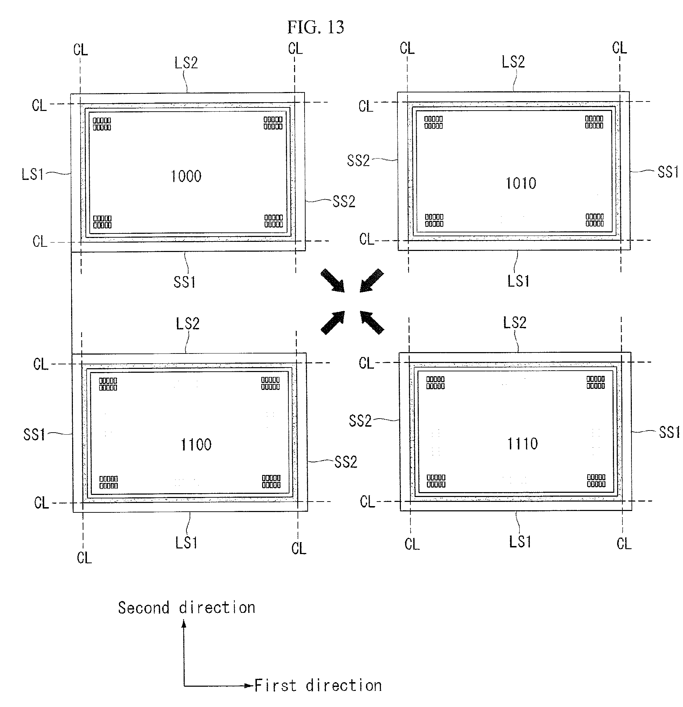

Referring to FIG. 13, the first panel 1000 and the second panel 1010 may be disposed adjacent to each other in a first direction, the first panel 1000 and the fifth panel 1100 may be disposed adjacent to each other in a second direction that crosses the first direction, the sixth panel 1110 and the second panel 1010 may be disposed adjacent to each other in the second direction, and the sixth panel 1110 and the fifth panel 1100 may be disposed adjacent to each other in the first direction.

Furthermore, a cutting and grinding process may be performed on the first and the second short sides SS1 and SS2 and the first and the second long sides LS1 and LS2 of the first panel 1000, the second panel 1010, the fifth panel 1100, and the sixth panel 1110, respectively.

Furthermore, the first panel 1000 and the second panel 1010 may be disposed so that the second short side SS2 of the first panel 1000 and the first short side SS1 of the second panel 1010 are adjacent to each other. The fifth panel 1100 and the sixth panel 1110 may be disposed so that the second short side SS2 of the fifth panel 1100 and the first short side SS1 of the sixth panel 1110 adjacent to each other.

Furthermore, the first panel 1000 and the fifth panel 1100 may be disposed so that the second long side LS2 of the first panel 1000 and the first long side LS1 of the fifth panel 1100 are adjacent to each other. The second panel 1010 and the sixth panel 1110 may be disposed so that the second long side LS2 of the second panel 1010 and the first long side LS1 of the sixth panel 1110 are adjacent to each other.

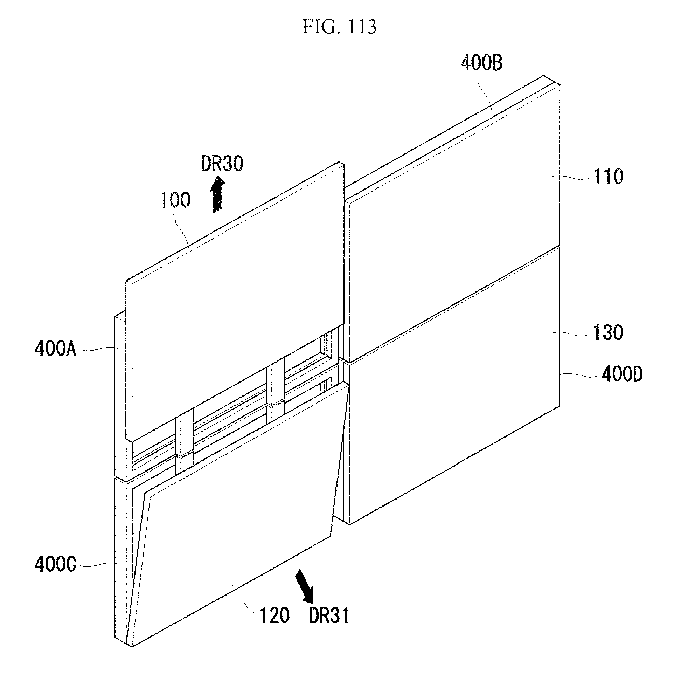

FIGS. 14 and 113 are diagrams illustrating a multi-display device in accordance with an embodiment of the present invention. A PDP is described below as an example of a display panel.

Referring to FIG. 14, 3-D filters 220, 221, 222, and 223 may be disposed in the respective PDPs 100 to 130. For example, the first 3-D filter 220 may be disposed in front of the first panel 100, the second 3-D filter 221 may be disposed in front of the second panel 110, the third 3-D filter 222 may be disposed in front of the third panel 120, and the fourth 3-D filter 223 may be disposed in front of the fourth panel 130.

If the first, the second, the third, and the fourth 3-D filters 220 to 223 are disposed in front of the respective PDPs 100 to 130 as described above, a viewer may watch a 3-D image although the viewer does not wear 3-D glasses.

A method of implementing a 3-D image is described below. Although the first panel 100 and the first 3-D filter 220 are described below as an example, the following contents may also be identically applied to the second, the third, and the fourth panels 110 to 130 and the second to the fourth 3-D filters 221 to 223.

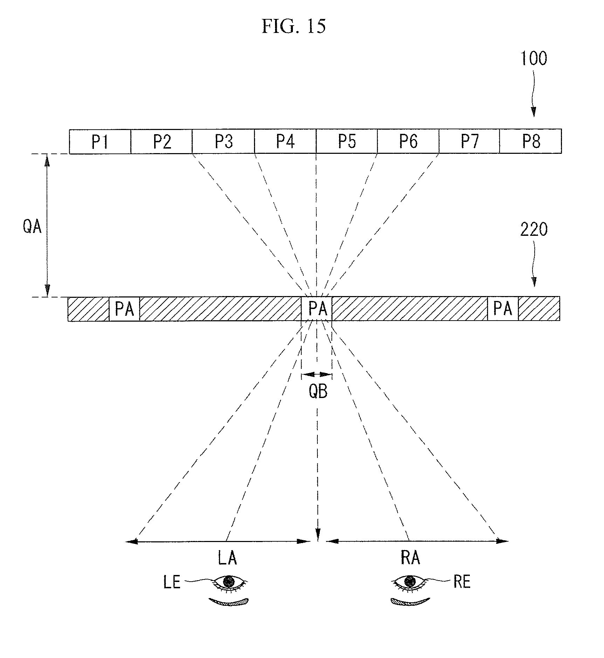

As illustrated in FIG. 15, a PDP, for example, the first panel 100 may include a plurality of pixels P1 to P8. In this case, the pixel may include a red (R) discharge cell, a green (G) discharge cell, and a blue (B) discharge cell.

Furthermore, a 3-D filter, for example, the first 3-D filter 220 may include pixel areas PA that transmit light generated by the first panel 100 without changing the phase of the light. In this case, a single pixel area PA may correspond to a plurality of the pixels. Accordingly, the number of pixel areas PA formed in the first 3-D filter 220 may be smaller than the number of pixels formed in the first panel 100.

Furthermore, the first 3-D filter 220 may be physically separated from the first panel 100 at a specific interval QA.

Furthermore, the width QB of the pixel area PA of the first 3-D filter 220 may be smaller than the interval QA between the first panel 100 and the first 3-D filter 220.

A viewer placed at a specific location may detect light generated by specific pixels P3 to P6 through the pixel area PA, as illustrated in FIG. 15.

For example, light generated by the third and the fourth pixels P3 and P4 of the plurality of pixels of the first panel 100 may travel to a right eye area RA through the pixel area PA. Accordingly, the right eye RE of a viewer may detect the light generated by the third and the fourth pixels P3 and P4.

Furthermore, light generated by the fifth and the sixth pixels P5 and P6 of the plurality of pixels of the first panel 100 may travel to a left eye area LA through the pixel area PA. Accordingly, the left eye LE of the viewer may detect light generated by the fifth and the sixth pixels P5 and P6.

In this case, the pixel recognized by the right eye RE of the viewer may be called a right eye pixel, and the pixel recognized by the left eye LE of the viewer may be called a left eye pixel. An image into which the point of view between both eyes has been incorporated may be displayed on the right eye pixel and the left eye pixel. That is, an image corresponding to the right eye of a viewer may be implemented in a right eye pixel, and an image corresponding to the left eye of the viewer may be implemented in a right eye pixel.

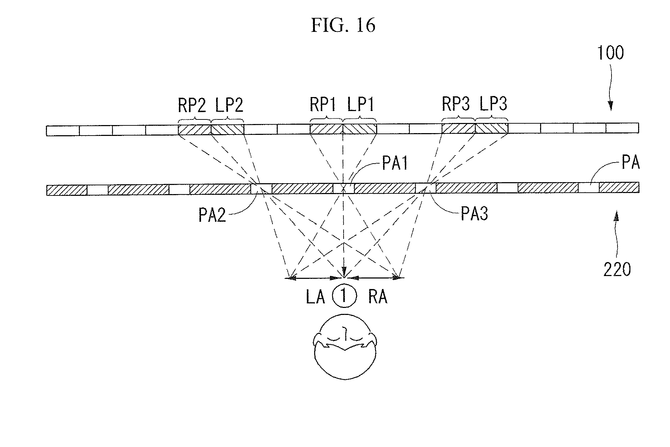

For example, it is assumed that a viewer watches an image at a specific location , as illustrated in FIG. 16.

In such a case, the viewer may detect an image of a first right eye pixel RP1 through the first pixel area PA1 of the first 3-D filter 220, may detect an image of a second right eye pixel RP2 through the second pixel area PA2 of the first 3-D filter 220, and may detect an image of a third right eye pixel RP3 through the third pixel area PA3 of the first 3-D filter 220, through his or her right eye.

Furthermore, the viewer may detect an image of a first left eye pixel LP1 through the first pixel area PA1 of the first 3-D filter 220, may detect an image of a second left eye pixel LP2 through the second pixel area PA2 of the first 3-D filter 220, and may detect an image of a third left eye pixel LP3 through the third pixel area PA3 of the first 3-D filter 220, through his or her left eye.

In such ways, a viewer may recognize an image displayed on the first panel 100 in a 3-D way.

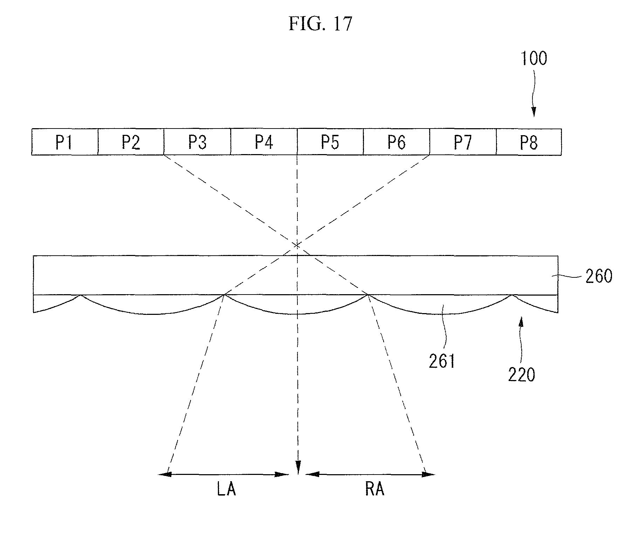

Referring to FIG. 17, the first 3-D filter 220 may be configured to have lenses protruded in a direction that becomes distant from the first panel 100. In other words, the first 3-D filter 220 may include a base substrate 260 and lens units 261 disposed in the base substrate 260.

The base substrate 260 may be substantially transparent in such a way as to transmit light.

The lens unit 261 may refract externally incident light so that an image according to right eye pixels is recognized by the right eye of a viewer and an image according to left eye pixels is recognized by the left eye of a viewer. The size and shape of the lens unit 261 may be changed in various ways.

In such a case, the lens unit 261 may correspond to a pixel area.

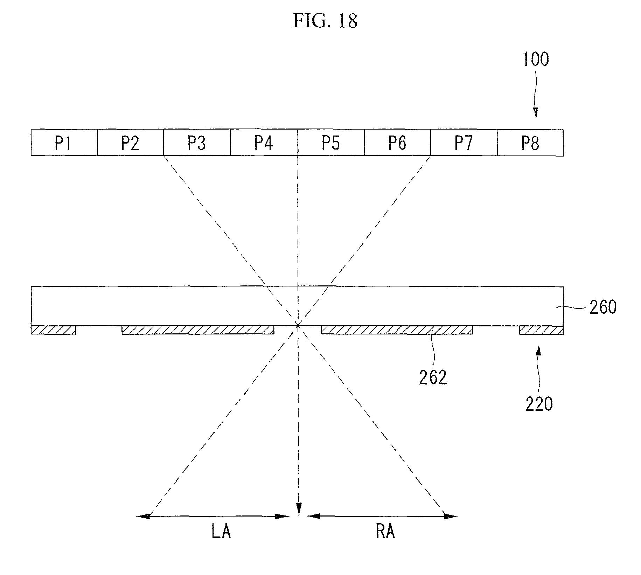

Referring to FIG. 18, the first 3-D filter 220 may include the base substrate 260 and blocking units 262 configured to partition adjacent pixel areas PA. In this case, the blocking unit 262 may absorb incident light. To this end, the blocking units 262 may be made of black pigments.

A viewer may recognize an image according to right eye pixels through his or her right eye and may recognize an image according to left eye pixels through his or her left eye, through the pixel area PA partitioned by the blocking units 262.

The blocking unit 262 may have a variety of types of shapes.

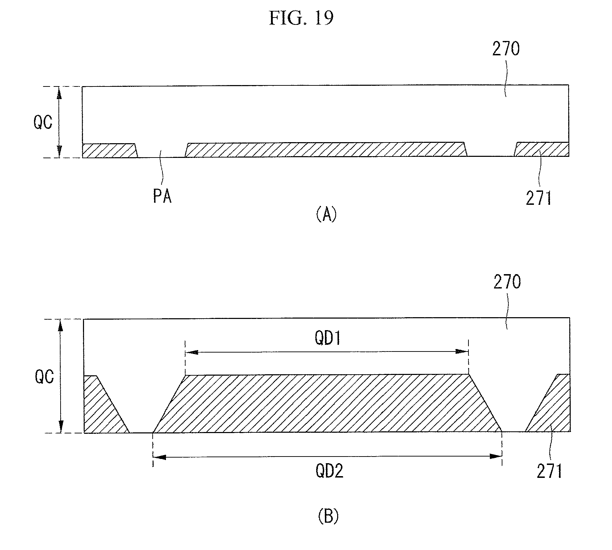

For example, as illustrated in (A) of FIG. 19, blocking units 271 may be engraved in a base substrate 270. More specifically, the blocking units 271 may be formed by forming specific grooves in the base substrate 270 and filling the grooves with black materials.

If the blocking units 271 are formed using the engraving method as described above, the thickness QC of the base substrate 270 may be thicker than the thickness of base substrate 260 illustrated in FIGS. 17 and 18.

Alternatively, as illustrated in (B) of FIG. 19, the width QD2 of the blocking unit 271 on a surface of the base substrate 270 may be greater than the width QD1 of the blocking unit 271 within the base substrate 270.

The pixel area may have various patterns.

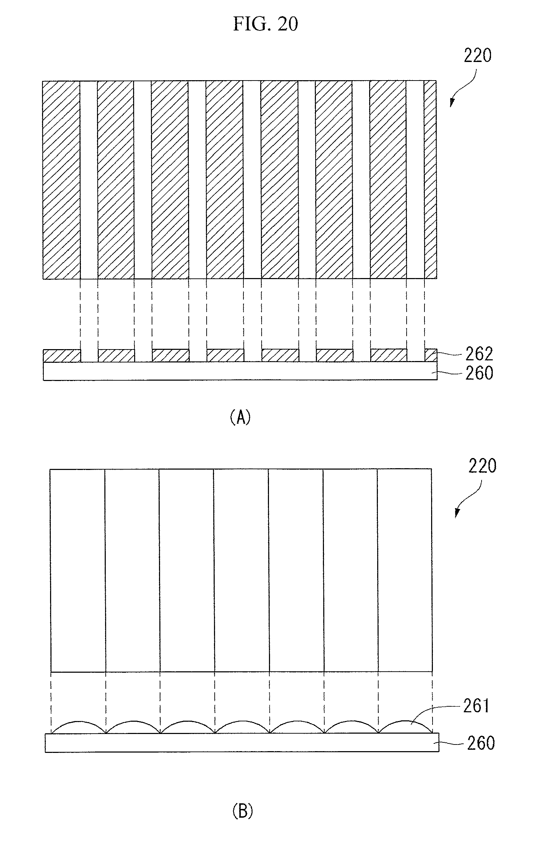

For example, as illustrated in (A) and (B) of FIG. 20, the blocking units 262 or lens units 261 of the first 3-D filter 220 may be formed in a vertical direction, for example, in the vertical direction on the basis of a display panel. In such a case, the pixel areas may have patterns formed in the vertical direction.

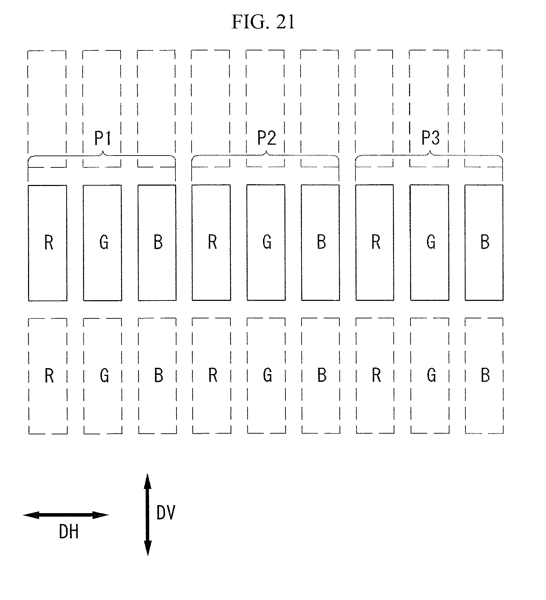

If the pixel areas of the first 3-D filter 220 have the vertical patterns as described above, a plurality of discharge cells or unit cells arranged in parallel in the horizontal direction DH of the display panel may gather to form pixels P1, P2, and P3, as illustrated in FIG. 21. For example, if the pixel areas of the first 3-D filter 220 have vertical patterns, R, G, and B discharge cells parallel to each other in the horizontal direction DH of the panel may be distinguished as a single pixel.

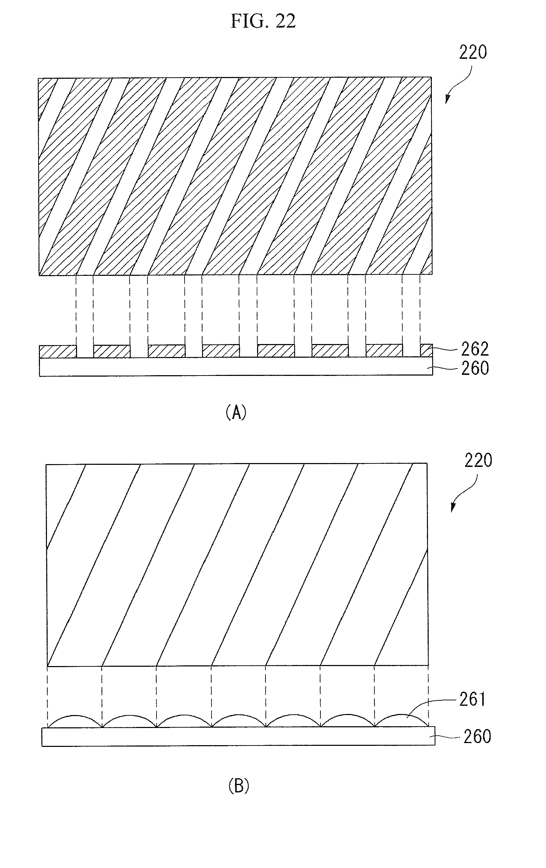

Alternatively, as illustrated in (A) and (B) of FIG. 22, the blocking units 262 or lens units 261 of the first 3-D filter 220 may be formed in an oblique direction, for example, in an oblique direction on the basis of a display panel. In other words, the direction along which the blocking units 262 or lens units 261 of the first 3-D filter 220 travel may be an oblique direction on the basis of the side of the first 3-D filter 220. In such a case, the pixel areas may have patterns formed in the oblique direction.

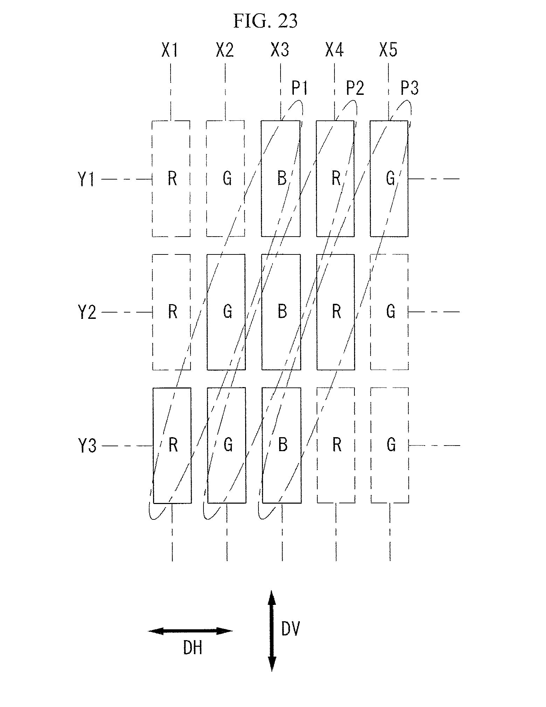

If the pixel areas of the first 3-D filter 220 have the oblique patterns as described above, a plurality of discharge cells or unit cells obliquely arranged in the oblique direction of a display panel may gather to form pixels P1, P2, and P3, as illustrated in FIG. 23.

For example, a blue (B) discharge cell corresponding to a third address electrode X3 and a first scan electrode Y1, a green (G) discharge cell corresponding to a second address electrode X2 and a second scan electrode Y2, and a red (R) discharge cell corresponding to a first address electrode X1 and a third scan electrode Y3 may form the first pixel P1.

Furthermore, a red (R) discharge cell corresponding to a fourth address electrode X4 and the first scan electrode Y1, a blue (B) discharge cell corresponding to the third address electrode X3 and the second scan electrode Y2, and a green (G) discharge cell corresponding to the second address electrode X2 and the third scan electrode Y3 may from the second pixel P2. A green (G) discharge cell corresponding to a fifth address electrode X5 and the first scan electrode Y1, a red (R) discharge cell corresponding to the fourth address electrode X4 and the second scan electrode Y2, and a blue (B) discharge cell corresponding to the third address electrode X3 and the third scan electrode Y3 may form the third pixel P3.

When the case of FIG. 23 is compared with the case of FIG. 21, the entire resolution is the same in the cases of FIGS. 21 and 23, but vertical resolution in the case of FIG. 23 may be lower than that in the case of FIG. 21 and horizontal resolution in the case of FIG. 23 may be higher than that in the case of FIG. 21.

A structure configured to maintain the interval between the panel and the 3-D filter may be disposed between two adjacent PDPs. The structure is described below.

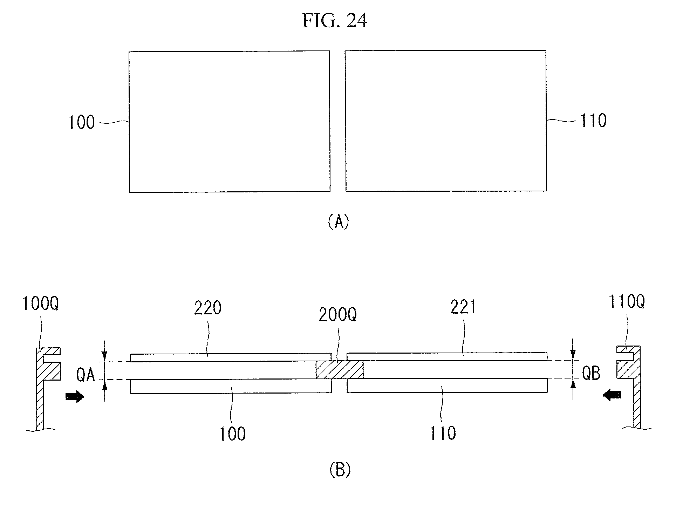

If the first panel 100 and the second panel 110 are disposed adjacent to each other as illustrated in (A) of FIG. 24, the multiple 3-D display device in accordance with an embodiment of the present invention may further include side covers 100Q and 110Q and a structure 200Q disposed on the sides of the first panel 100 and the second panel 110.

For example, it is assumed that each of the first panel 100 and the second panel 110 includes a first area and a second area opposite the first area and the first area of the first panel 100 and the second area of the second panel 110 are disposed adjacent to each other. In other words, as illustrated in (B) of FIG. 24, the left of the first panel 100 is the second area and the right thereof is the first area, and the left of the second panel 110 is the second area and the right thereof is the first area.

The first area and second area of each of the first panel 100 and the second panel 110 are hereinafter defined as described above.

In such a case, the first side cover 100Q may be placed on the side of the first panel 100 and the first 3-D filter 220 in the second area of the first panel 100 and may maintain the interval QA between the first panel 100 and the first 3-D filter 220. Furthermore, the first side cover 100Q may be connected to the first 3-D filter 220.

Furthermore, the second side cover 110Q may be placed on the side of the second panel 110 and the second 3-D filter 221 in the first area of the second panel 110 and may maintain the interval QB between the second panel 110 and the second 3-D filter 221. Furthermore, the second side cover 110Q may be connected to the second 3-D filter 221.

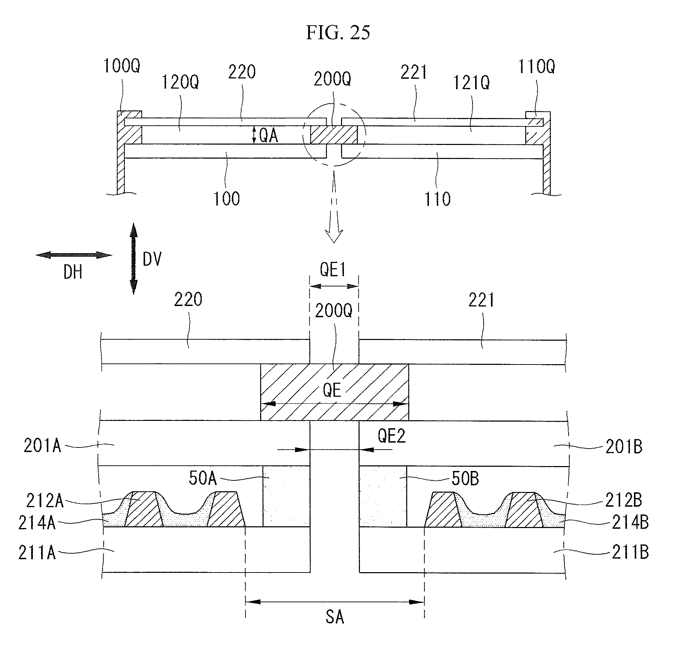

Furthermore, as illustrated in (B) of FIG. 25, the structure 200Q may include the boundary portion of the first panel 100 and the second panel 110, that is, a portion disposed between the first and the second panels 100 and 110 and between the first and the second 3-D filters 220 and 221 between the first area of the first panel 100 and the second area of the second panel 110. Furthermore, the structure 200Q may be overlapped with the first and the second panels 100 and 110 and the first and the second 3-D filters 220 and 221 in the vertical direction DV of the first and the second panels 100 and 110.

That is, the structure 200Q may enable the first panel 100 to be spatially separated from the first 3-D filter 220 and enable the second panel 110 to be spatially separated from the second 3-D filter 221. To this end, the structure 200Q is disposed at the boundary area of the first panel 100 and the second panel 110, and it may maintain the interval QA between the first panel 100 and the first 3-D filter 220 and the interval QB between the second panel 110 and the second 3-D filter 221. To this end, the width QE of the structure 200Q in the horizontal direction DH of the first and the second panels 100 and 110 may be greater than each of an interval QE1 between adjacent 3-D filters and an interval QE2 between adjacent panels.

Furthermore, the structure 200Q may be overlapped with a dummy area placed in the outer wall of an active area on which a screen is displayed in the vertical direction DV of the first, the second panel 100, 110. In other words, the structure 200Q may be overlapped with a seam area SA between the first panel 100 and the second panel 110 in the vertical direction DV of the first and the second panels 100 and 110. More specifically, the structure 200Q may be overlapped with the seal layers 50A and 50B of the first panel 100 and the second panel 110 in the vertical direction DV of the first and the second panels 100 and 110.

When the structure 200Q maintains the interval between the first and the second panels 100 and 110 and the interval between the first and the second 3-D filters 220 and 221 as described above, air gaps 120Q and 121Q may be formed between the first panel 100 and the first 3-D filter 220 and between the second panel 110 and the second 3-D filter 221, respectively.

If the structure 200Q maintains the interval between the first and the second panels 100 and 110 and the interval between the first and the second 3-D filters 220 and 221 as described above, a viewer placed in front of the first and the second panels 100 and 110 can watch a 3-D image of excellent picture quality.

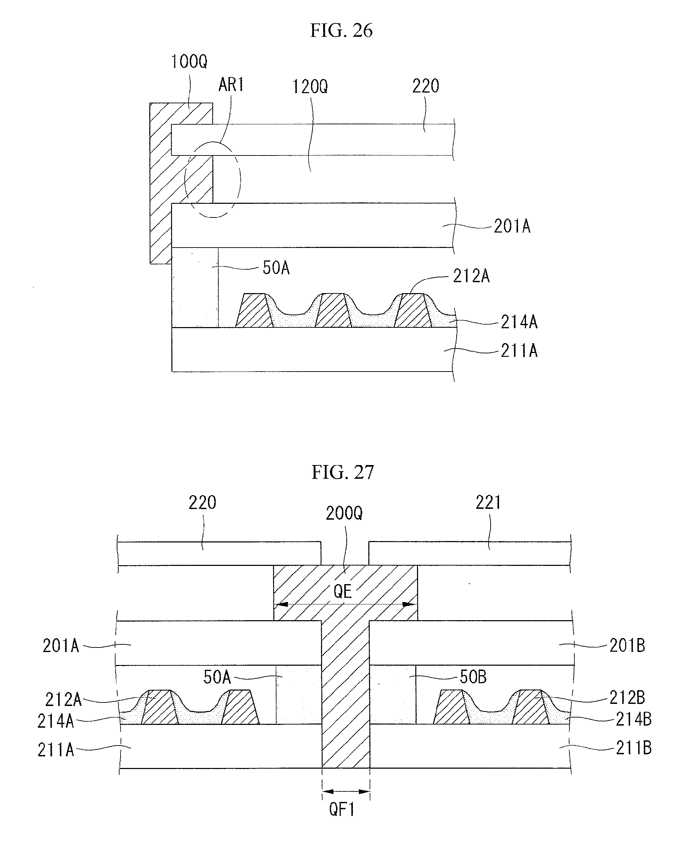

Referring to FIG. 26, the first side cover 100Q may include a portion AR1 disposed between the first panel 100 and the first 3-D filter 220 in the second area of the first panel 100. Furthermore, although not illustrated, the second side cover 110Q may include a portion disposed between the second panel 110 and the second 3-D filter 221 in the first area of the second panel 110.

In such a case, the interval between the first and the second panels 100 and 110 and the interval between the first and the second 3-D filters 220 and 221 may be regularly maintained.

Referring to FIG. 27, the structure 200Q may further include a portion disposed between the first panel 100 and the second panel 110 in the horizontal direction DH of the first and the second panels 100 and 110, in addition to the portions the first panel 100 and the first 3-D filter 220 and between the second panel 110 and the second 3-D filter 221. In such a case, the structural stability of the multiple 3-D display device can be improved.

In this case, the thickness QE of the structure 200Q in an area overlapped with the air gaps 120Q and 121Q in the horizontal direction DH of the first and the second panels 100 and 110 may be greater than the thickness QF1 of the structure 200Q in an area overlapped with the first and the second panels 100 and 110. In such a case, the size of the seam area SA can be prevented from being excessively increased.

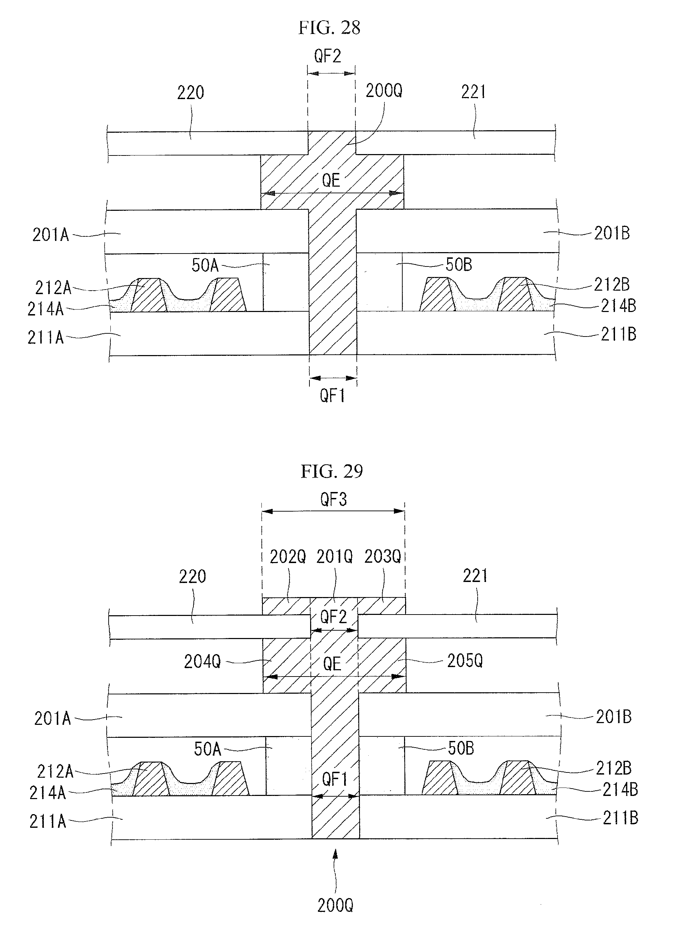

Referring to FIG. 28, the structure 200Q may include a portion overlapped with the first and the second 3-D filters 220 and 221 in the horizontal direction of the first and the second panels 100 and 110.

In this case, the thickness QE of the structure 200Q in the area overlapped with the air gaps 120Q and 121Q in the horizontal direction DH of the first and the second panels 100 and 110 may be greater than the thickness QF2 of the structure 200Q in the area overlapped with the first and the second 3-D filters 220 and 221.

Referring to FIG. 29, the structure 200Q may include portions on the front surface of the first and the second 3-D filters 220 and 221. In such a case, the structure 200Q may restrict the first and the second 3-D filters 220 and 221 more tightly.

Furthermore, the thickness QF2 of the structure 200Q in the area overlapped with the first and the second 3-D filters 220 and 221 in the horizontal direction DH of the first and the second panels 100 and 110 may be smaller than the thickness QF23 of the structure 200Q in an area placed on the front surface of the first and the second 3-D filters 220 and 221.

The structure 200Q may be described below in other expressions.

As illustrated in FIG. 29, the structure 200Q may include a body portion 201Q that extends in the vertical direction DV of the first and the second panels 100 and 110.

The structure 200Q may further include a first extension portion 202Q extended from the body portion 201Q in the horizontal direction DH of the first and the second panels 100 and 110 and placed in front of the first 3-D filter 220 and a second extension portion 203Q placed in front of the second 3-D filter 221.

The structure 200Q may further include a third extension portion 204Q extended from the body portion 201Q in the horizontal direction of the first and the second panels 100 and 110 and disposed between the first panel 100 and the first 3-D filter 220 and a fourth extension portion 205Q extended from the body portion 201Q in the horizontal direction of the first and the second panels 100 and 110 and disposed between the second panel 110 and the second 3-D filter 221.

Furthermore, the body portion 201Q of the structure 200Q may include a portion disposed between the first panel 100 and the second panel 110 in the horizontal direction of the first and the second panels 100 and 110.

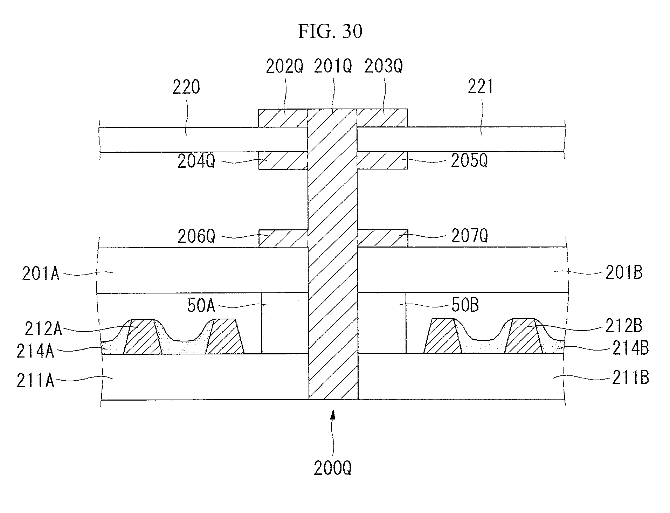

Referring to FIG. 30, the third extension portion 204Q may neighbor the first 3-D filter 220 and the fourth extension portion 205Q may neighbor the second 3-D filter 221 in the vertical direction of the first and the second panels 100 and 110.

In such a case, the structure 200Q may further include a fifth extension portion 206Q extended from the body portion 201Q in the horizontal direction of the first and the second panels 100 and 110 and configured to neighbor the first panel 100 and a sixth extension portion 207Q extended from the body portion 201Q in the horizontal direction of the first and the second panels 100 and 110 and configured to neighbor the second panel 110, in the area between the first panel 100 and the first 3-D filter 220.

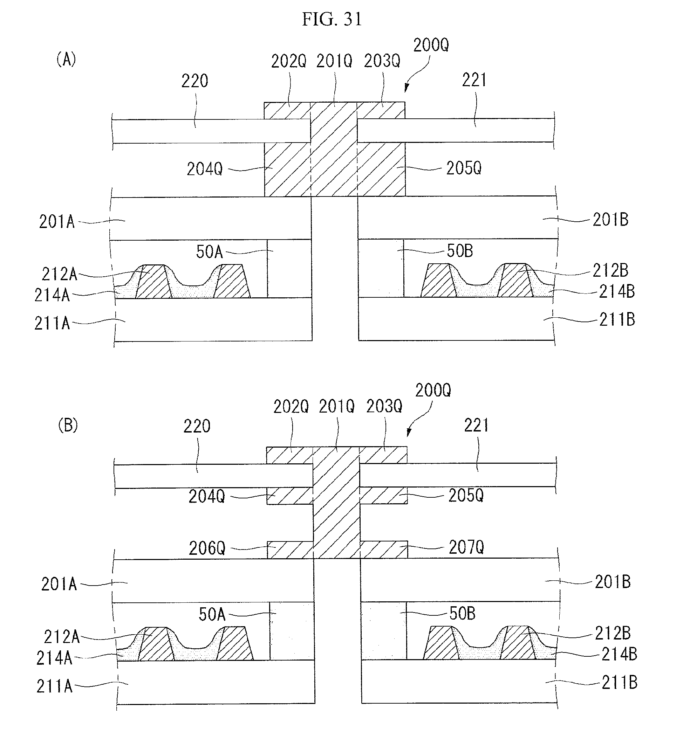

Alternatively, as illustrated in (A) and (B) of FIG. 31, the structure 200Q includes portions placed on the front surface of the first and the second 3-D filters 220 and 221, but a portion disposed between the first panel 100 and the second panel 110 in the horizontal direction of the first and the second panels 100 and 110 may be omitted.

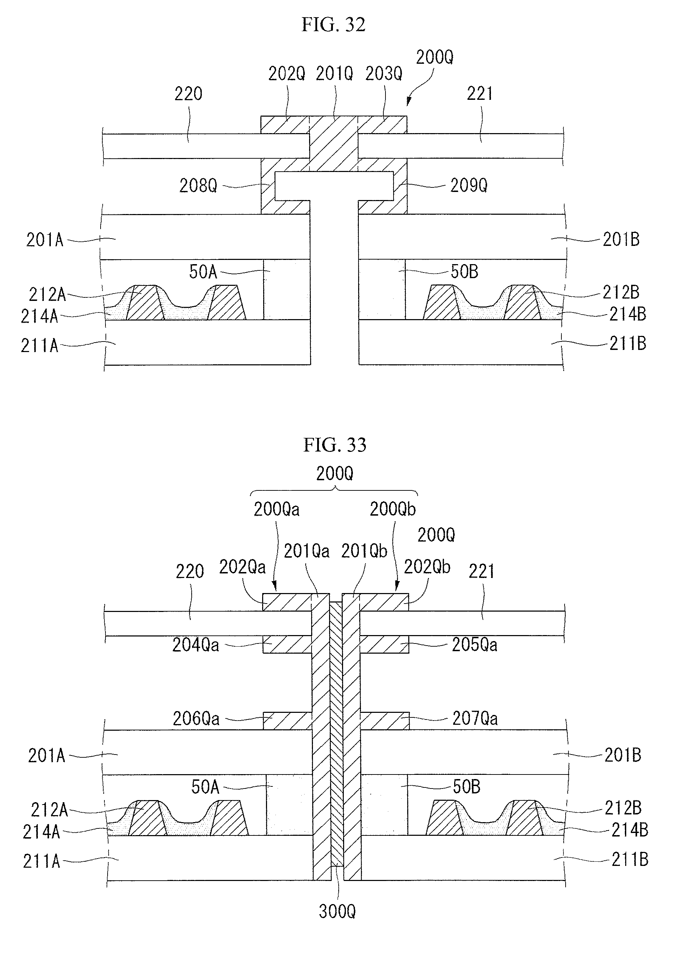

Alternatively, as illustrated in FIG. 32, the structure 200Q may include the body portion 201Q, the first and the second extension portions 202Q and 203Q, and seventh and eighth extension portions 208Q and 209Q.

In this case, the seventh and the eighth extension portions 208Q and 209Q may include portions extended from the body portion 201Q and configured to travel in the horizontal direction of the first and the second panels 100 and 110 and portions configured to travel in the vertical direction of the first and the second panels 100 and 110. Furthermore, the seventh and the eighth extension portion 208Q and 209Q are disposed between the first and the second panels 100 and 110 and between the first and the second 3-D filters 220 and 221 and may maintain the interval between the first and the second panels 100 and 110 and the interval between the first and the second 3-D filters 220 and 221.

The number of structures 200Q may be plural.

For example, as illustrated in FIG. 33, the structure 200Q may include a first structure 200Qa configured to neighbor the first panel 100 and a second structure 200Qb configured to neighbor the second panel 110. Furthermore, an adhesive layer 300Q may be formed between the first structure 200Qa and the second structure 200Qb.

The first structure 200Qa may include a first body portion 201Qa extended in the vertical direction DV of the first and the second panels 100 and 110, a (1-1)-th extension portion 202Qa extended from the first body portion 201Qa in the horizontal direction DH of the first and the second panels 100 and 110 and placed in front of the first 3-D filter 220, a (3-1)-th extension portion 204Qa extended from the first body portion 201Qa in the horizontal direction DH of the first and the second panels 100 and 110 and disposed between the first panel 100 and the first 3-D filter 220, and a (5-1)-th extension portion 206Qa extended from the first body portion 201Qa in the horizontal direction DH of the first and the second panels 100 and 110 in an area between the first panel 100 and the first 3-D filter 220 and configured to neighbor the first panel 100.

Furthermore, the second structure 200Qb may include a second body portion 201Qb extended in the vertical direction DV of the first and the second panels 100 and 110, a (2-1)-th extension portion 202Qb extended from the second body portion 201Qb in the horizontal direction DH of the first and the second panels 100 and 110 and placed in front of the second 3-D filter 221, a (5-1)-th extension portion 205Qb extended from the second body portion 201Qb in the horizontal direction DH of the first and the second panels 100 and 110 and disposed between the second panel 110 and the second 3-D filter 221, and a (6-1)-th extension portion 207Qb extended from the second body portion 201Qb in the horizontal direction of the first and the second panels 100 and 110 in an area between the second panel 110 and the second 3-D filter 221 and configured to neighbor the second panel 110.

Furthermore, the adhesive layer 300Q may be disposed between the first body portion 201Qa and the second body portion 201Qb.

In such a case, a portion disposed between the first panel 100 and the second panel 110 in the horizontal direction DH of the first and the second panels 100 and 110 may be omitted from the first, the second body portion 201Qa, 201Qb.

In order to maintain the interval between the first and the second panels 100 and 110 and the interval between the first and the second 3-D filters 220 and 221, a transparent substrate may be disposed between the first and the second panels 100 and 110 and between the first and the second 3-D filters 220 and 221. This is described below.

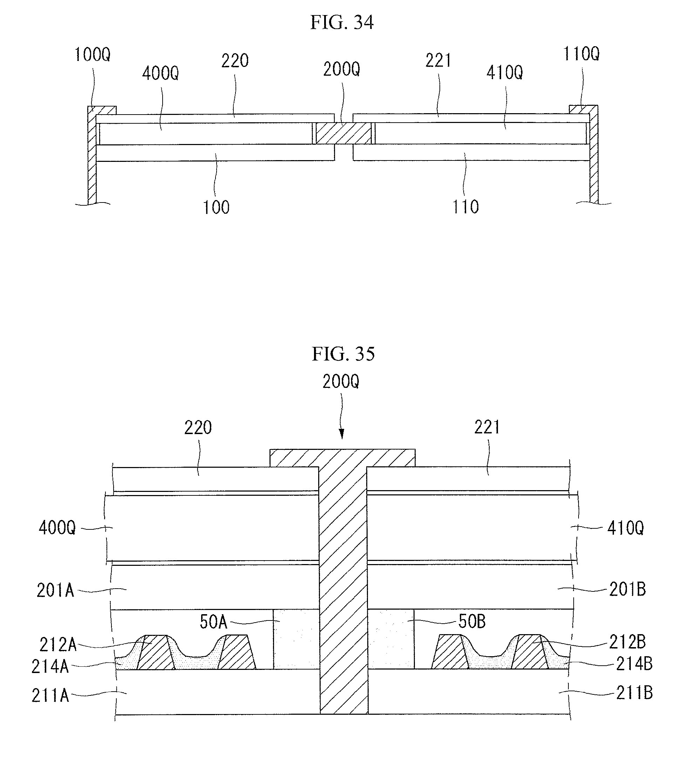

Referring to FIG. 34, the multiple 3-D display device in accordance with an embodiment of the present invention may further include a first transparent substrate 400Q disposed between the first panel 100 and the first 3-D filter 220 and a second transparent substrate 410Q disposed between the second panel 110 and the second 3-D filter 221.

In such a case, the interval between the panels and the 3-D filters can be regularly maintained over the entire multiple 3-D display device.

Such a transparent substrate 400Q, 410Q may be a substrate made of glass materials or a substrate made of resin materials.

Although the transparent substrate is disposed between the panel and the 3-D filter as described above, a structure may be added.

For example, as illustrated in FIG. 35, the structure 200Q may include a portion disposed between the first transparent substrate 400Q and the second transparent substrate 410Q in the horizontal direction of the first and the second panels 100 and 110. Furthermore, the structure 200Q may further include a portion placed on the front surface of the first and the second 3-D filters 220 and 221.

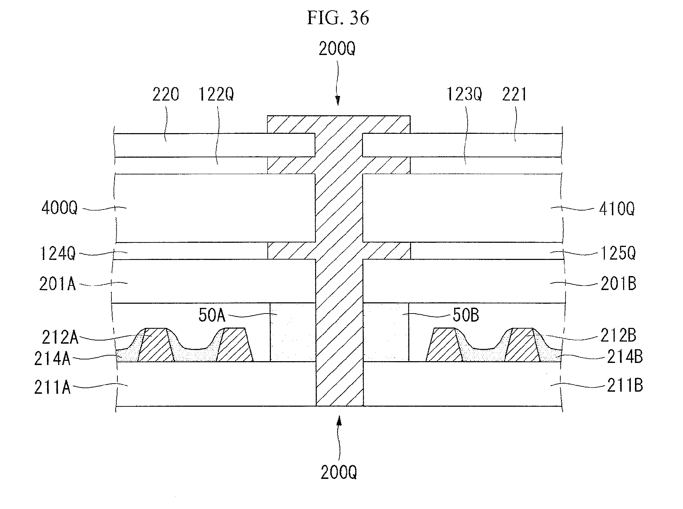

Referring to FIG. 36, the structure 200Q may include the portion 206Q disposed between the first panel 100 and the first transparent substrate 400Q and the portion 207Q disposed between the second panel 110 and the second transparent substrate 410Q. The structure 200Q may further include the portion 204Q disposed between the first 3-D filter 220 and the first transparent substrate 400Q and the portion 205Q disposed between the second 3-D filter 221 and the second transparent substrate 410Q.

In other words, the fifth extension portion 206Q of the structure 200Q may be placed between the first panel 100 and the first transparent substrate 400Q, and the sixth extension portion 207Q may be placed between the second panel 110 and the second transparent substrate 410Q. Furthermore, the third extension portion 204Q of the structure 200Q may be disposed between the first 3-D filter 220 and the first transparent substrate 400Q, and the fourth extension portion 205Q the structure 200Q may be disposed between the second 3-D filter 221 and the second transparent substrate 410Q.

In such a case, an air gap 124Q may be formed between the first panel 100 and the first transparent substrate 400Q, and an air gap 125Q may also be formed between the second panel 110 and the second transparent substrate 410Q.

Furthermore, an air gap 122Q may be formed between the first 3-D filter 220 and the first transparent substrate 400Q, and an air gap 123Q may also be formed between the second 3-D filter 221 and the second transparent substrate 410Q.

An example in which the multiple 3-D display device in accordance with an embodiment of the present invention includes three or more PDPs is described below.

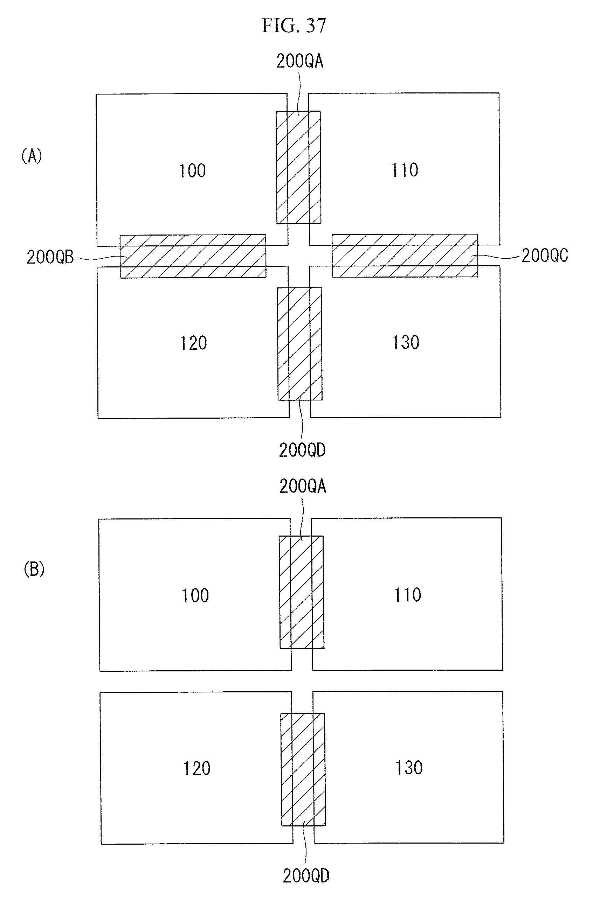

For example, a case where the first panel 100, the second panel 110, the third panel 120, and the fourth panel 130 are arranged in a 2x2 matrix form as illustrated in FIG. 37 is assumed.

In such a case, as illustrated in (A) of FIG. 37, structures 200QA, 200QB, 200QC, and 200QD may be disposed between the first panel 100 and the second panel 110, between the first panel 100 and the third panel 120, between the second panel 110 and the fourth panel 130, and between the third panel 120 and the fourth panel 130, respectively.

Alternatively, as illustrated in (B) of FIG. 37, the structures 200QA and 200QD may be disposed between the first panel 100 and the second panel 110 and between the third panel 120 and the fourth panel 130. That is, the structures may be omitted from between the first panel 100 and the third panel 120 and between the second panel 110 and the fourth panel 130.

The structures 200QA and 200QD preferably may be disposed between two adjacent panels in the horizontal direction because image characteristics according to the horizontal direction of a display panel have a great influence on picture quality on the nature of the visual characteristics of a human eye, as illustrated in (B) of FIG. 37.

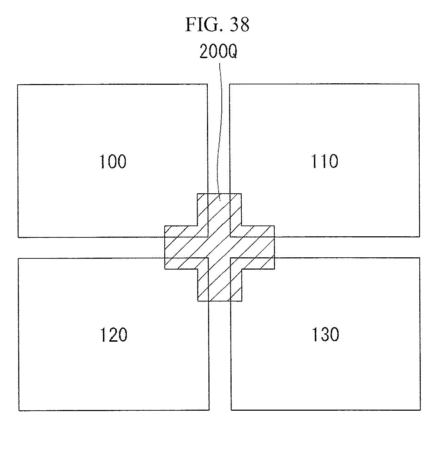

Alternatively, as illustrated in FIG. 38, the structure 200Q may be disposed at the common boundary part of the first, the second, the third, and the fourth panels 100 to 130, that is, at the center portion of the multiple 3-D display device.

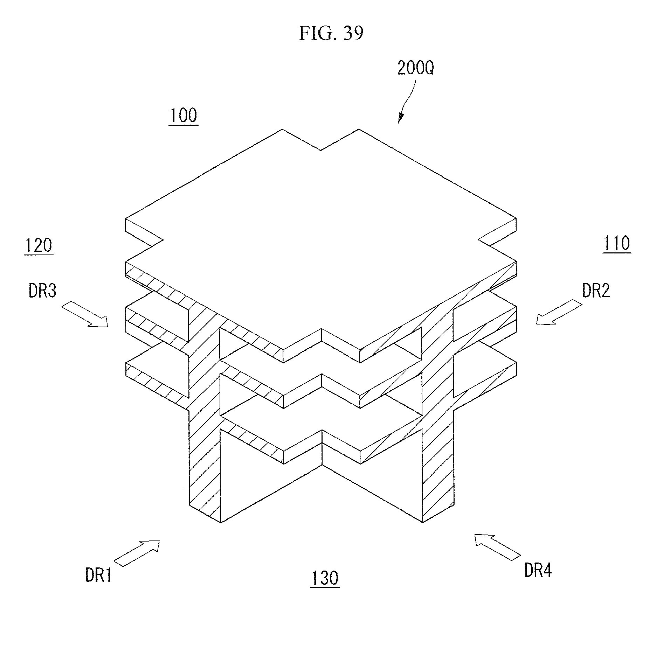

In such a case, as illustrated in FIG. 39, a section of the structure 200Q in an area overlapped with the first panel 100 and the third panel 120 in a vertical direction, that is, a section of the structure 200Q viewed in a third direction DR3, a section of the structure 200Q in an area overlapped with the second panel 110 and the fourth panel 130 in the vertical direction, that is, a section of the structure 200Q viewed in a fourth direction DR4, a section of the structure 200Q in an area overlapped with the first panel 100 and the second panel 110 in a horizontal direction, that is, a section of the structure 200Q viewed in a second direction DR2, and a section of the structure 200Q in an area overlapped with the third panel 120 and the fourth panel 130 in the horizontal direction, that is, a section of the structure 200Q viewed in a first direction DR1 may be the same.

The transparent substrate may be attached to the panel.

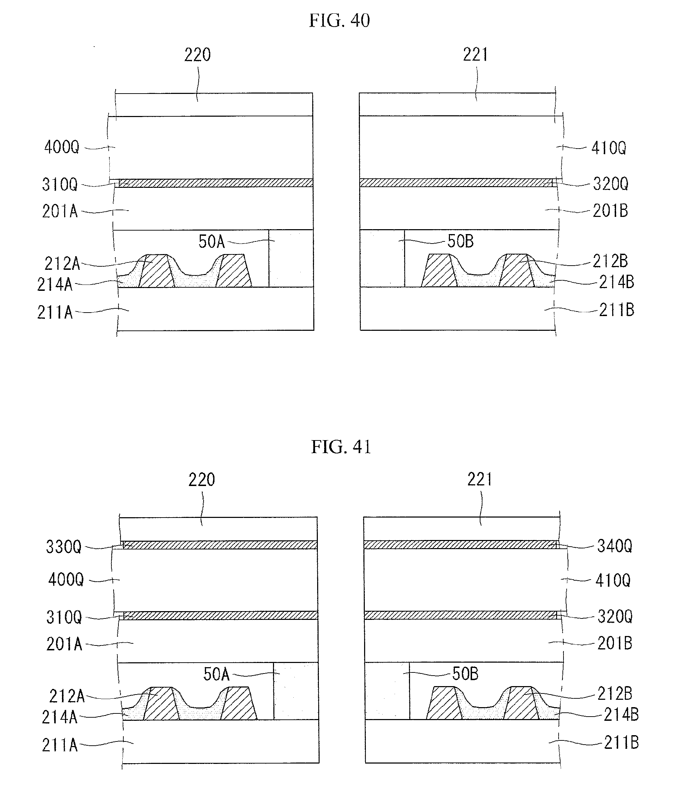

For example, as illustrated in FIG. 40, the first transparent substrate 400Q may be attached to the first panel 100, and the second transparent substrate 410Q may be attached to the second panel 110.

In such a case, a first adhesive layer 310Q may be formed between the first transparent substrate 400Q and the first panel 100, and a second adhesive layer 320Q may be formed between the second transparent substrate 410Q and the second panel 110.

Alternatively, as illustrated in FIG. 40, a third adhesive layer 330Q may be formed between the first transparent substrate 400Q and the first 3-D filter 220, and a fourth adhesive layer 340Q may be formed between the second transparent substrate 410Q and the second 3-D filter 221.

If the transparent substrate is attached to the panel using adhesives as described above, the interval between the panel and the 3-D filter can be regularly maintained even without a separate structure.

The 3-D filter may be attached using adhesives.

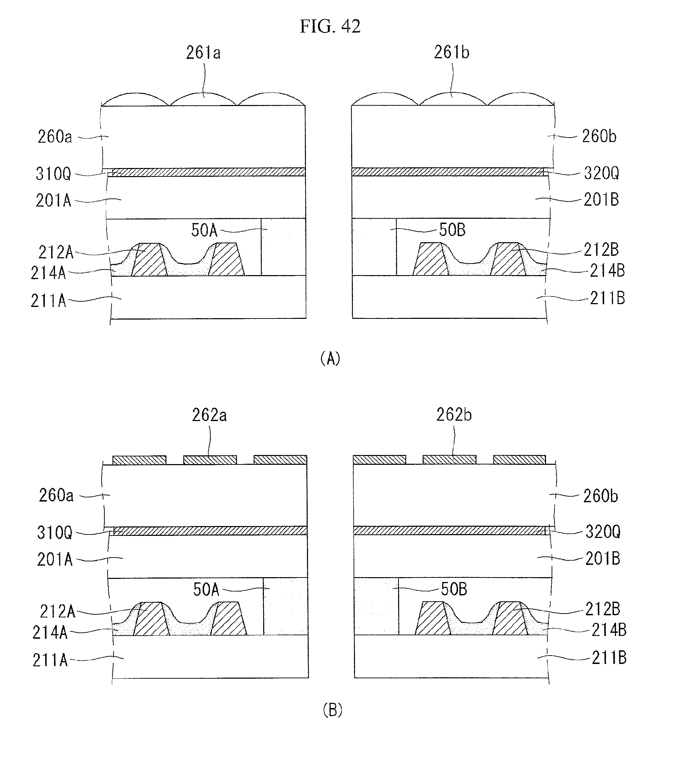

For example, as illustrated in (A) of FIG. 42, if the 3-D filter includes a base substrate 260a, 260b and lens units 261a, 261b, the adhesive layer 310Q, 320Q may be disposed between the base substrate 260a, 260b and the first, the second panel 100, 110 so that the base substrate 260a, 260b may be attached to the first, the second panel 100, 110.

Alternatively, as illustrated in (B) of FIG. 42, if the 3-D filter includes the base substrate 260a, 260b and blocking units 262a, 262b, the adhesive layer 310Q, 320Q may be disposed between the base substrate 260a, 260b and the first, the second panel 100, 110.

This may be possible when the thickness of the base substrate 260a, 260b is sufficiently thick.

The interval between two adjacent 3-D filters may be smaller than the interval between two adjacent panels. This is described below, but a description of portions described in detail above is omitted for simplicity.

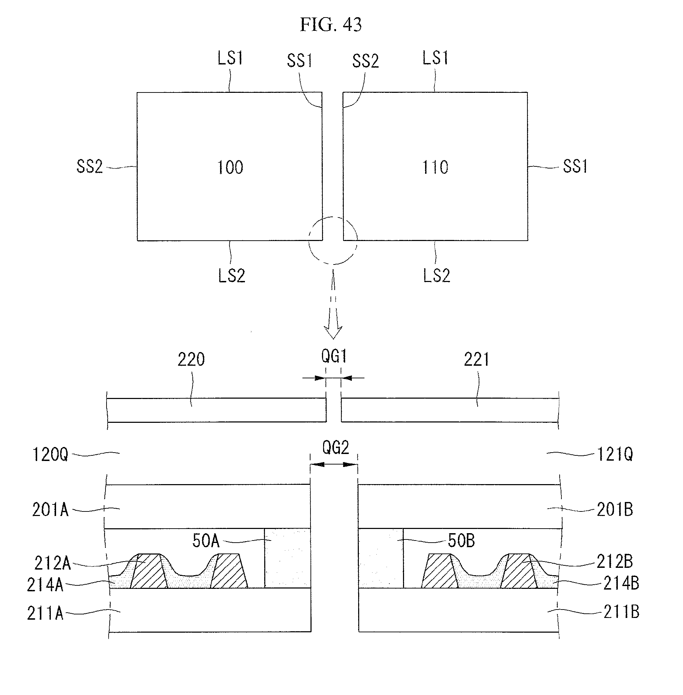

Referring to (A) of FIG. 43, each of the first and the second panels 100 and 110 may include a first long side LS1, a second long side LS2 corresponding to the first long side LS1, a first short side SS1 coming in contact with the first long side LS1 and the second long side LS2, and a second short side SS2 corresponding to the first short side SS1. In this case, the first short side SS1 of the first, the second panel 100, 110 may correspond to a first area, and the second short side SS2 may correspond to a second area.

In this case, the first 3-D filter 220 and the second 3-D filter 221 may be spaced apart from each other at a specific interval QG1 in the horizontal direction of the first and the second panels 100 and 110. Furthermore, the first panel 100 and the second panel 110 may be spaced apart from each other at a specific interval QG2. The interval QG1 between the first 3-D filter 220 and the second 3-D filter 221 may be smaller than the interval QG2 between the first panel 100 and the second panel 110.

That is, the first 3-D filter 220 and the second 3-D filter 221 may be disposed relatively closely.

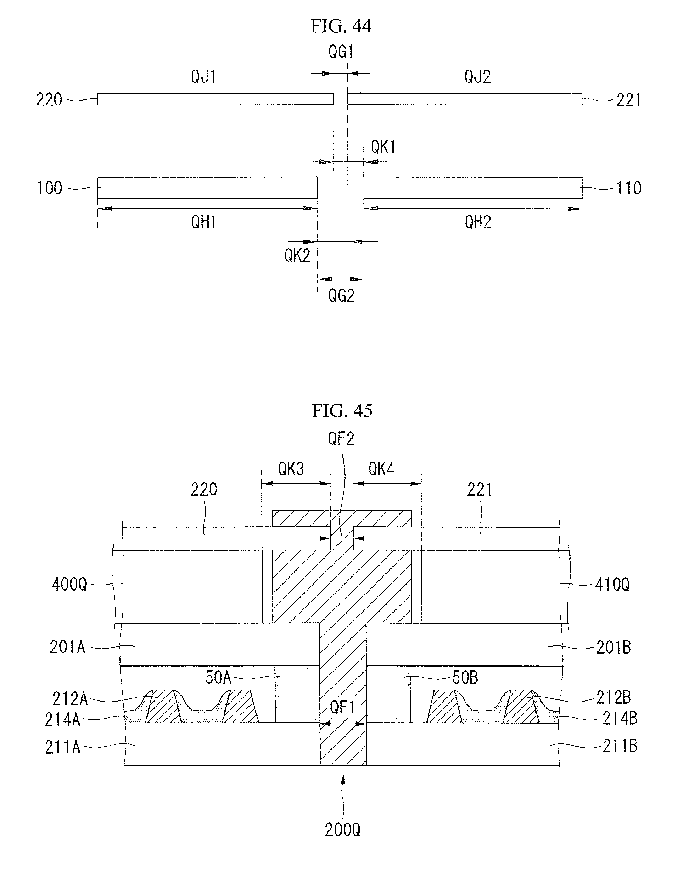

In such a case, as illustrated in FIG. 44, each of an interval QK1 between the first 3-D filter 220 and the second panel 110 and an interval QK2 between the second 3-D filter 221 and the first panel 100 in the horizontal direction of the first and the second panels 100 and 110 may be smaller than the interval QG2 between the first panel 100 and the second panel 110.

Furthermore, the length QJ1 of the first 3-D filter 220 may be longer than the length QH1 of the first panel 100 in the horizontal direction of the first and the second panels 100 and 110.

Furthermore, the length QJ2 of the second 3-D filter 221 may be longer than the length QH2 of the second panel 110 in the horizontal direction of the first and the second panels 100 and 110.

In such a case, the air gaps 120Q and 121Q may be formed between the first 3-D filter 220 and the first panel 100 and between the second 3-D filter 221 and the second panel 110.

Furthermore, the structure 200Q may be disposed in an area between the first panel 100 and the second panel 110.

For example, as illustrated in FIG. 45, the width QF2 of a portion overlapped with the first and the second 3-D filters 220 and 221 of the structure 200Q in the horizontal direction of the first and the second panels 100 and 110 may be smaller than the width QF1 of a portion overlapped with the first and the second panels 100 and 110. In such a case, although the structure 200Q is applied, the interval between the first 3-D filter 220 and the second 3-D filter 221 in the horizontal direction of the first and the second panels 100 and 110 may be smaller than the interval between the first panel 100 and the second panel 110.

In such a case, the first, the second transparent substrate 400Q, 410Q may be disposed between the first, the second panel 100, 110 and the first, the second 3-D filter 220, 221. Furthermore, the first 3-D filter 220 may be further extended by a specific length QK3 compared to the first transparent substrate 400Q, and the second 3-D filter 221 may be further extended by a specific length QK4 compared to the second transparent substrate 410Q.

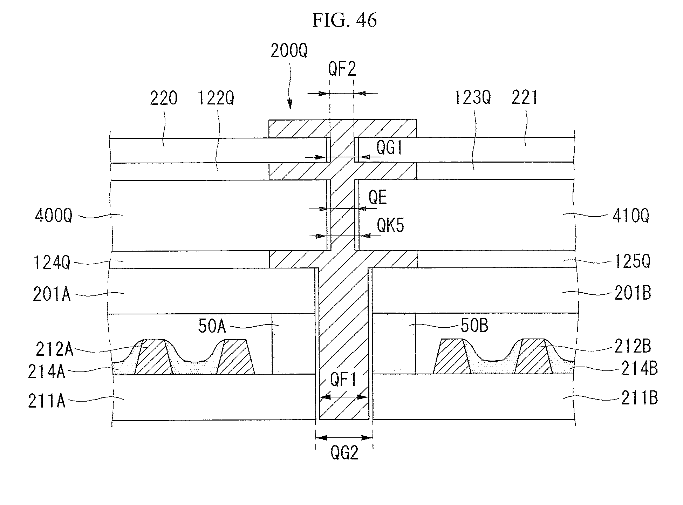

Alternatively, as illustrated in FIG. 46, the width QE of a portion overlapped with the first and the second transparent substrates 400Q and 410Q of the structure 200Q in the horizontal direction of the first and the second panels 100 and 110 may be smaller than the width QF1 of the portion overlapped with the first and the second panels 100 and 110. In such a case, each of the interval QG1 between the first 3-D filter 220 and the second 3-D filter 221 and an interval QG5 between the first transparent substrate 400Q and the second transparent substrate 410Q in the horizontal direction of the first and the second panels 100 and 110 may be smaller than the interval QG2 between the first panel 100 and the second panel 110.

If the interval QG1 between the first 3-D filter 220 and the second 3-D filter 221 is smaller than the interval QG2 between the first panel 100 and the second panel 110 as described above, at least one of the first 3-D filter 200 and the second 3-D filter 221 may be overlapped with the area between the first panel 100 and the second panel 110 in the vertical direction of the first and the second panels 100 and 110.

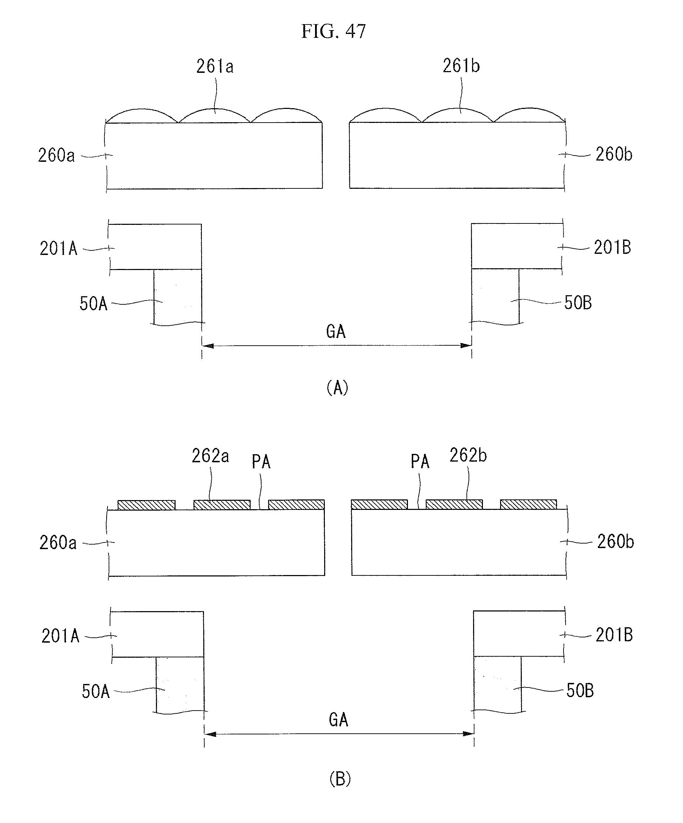

For example, if the 3-D filter 220, 221 includes the base substrate 260a, 260b and the lens units 261a, 261b as illustrated in (A) of FIG. 47, at least one or some of the lens units 261a, 261b of the first, the second 3-D filter 220, 221 may be overlapped with an area GA between the first panel 100 and the second panel 110.

Alternatively, if the 3-D filter 220, 221 includes the base substrate 260a, 260b and the blocking units 262a, 262b as illustrated in (B) of FIG. 47, at least one or some of the blocking units 262a, 262b of the first, the second 3-D filter 220, 221 may be overlapped with the area GA between the first panel 100 and the second panel 110. Alternatively, at least one of the pixel areas PA of the first 3-D filter 220 and the second 3-D filter 221 may be overlapped with the area GA between the first panel 100 and the second panel 110.

If the interval between two adjacent 3-D filters in the area between two adjacent panels is smaller than the interval between the two adjacent panels as described above, the size of the seam area SA between the two adjacent panels may be made so that it is seen to be small.

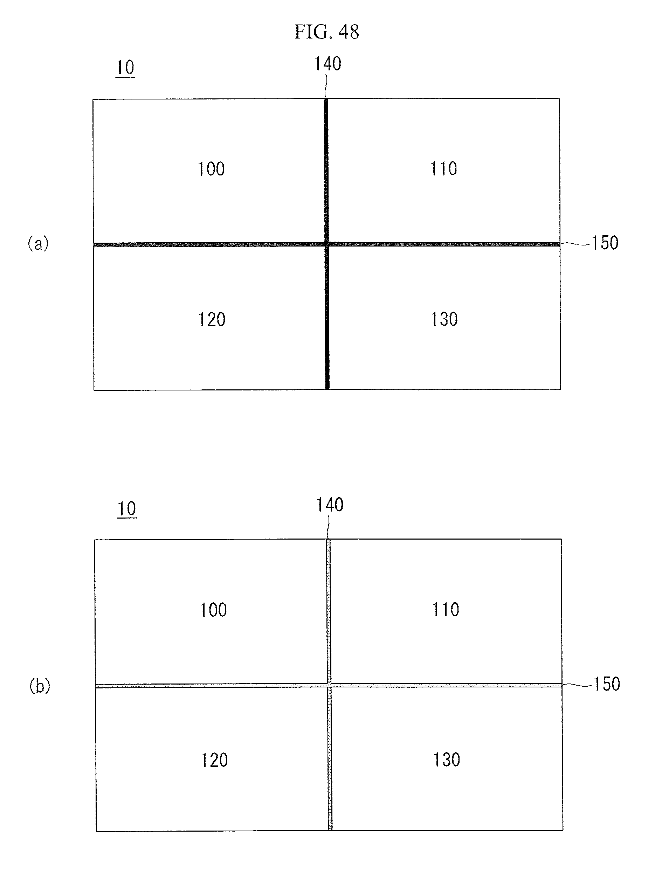

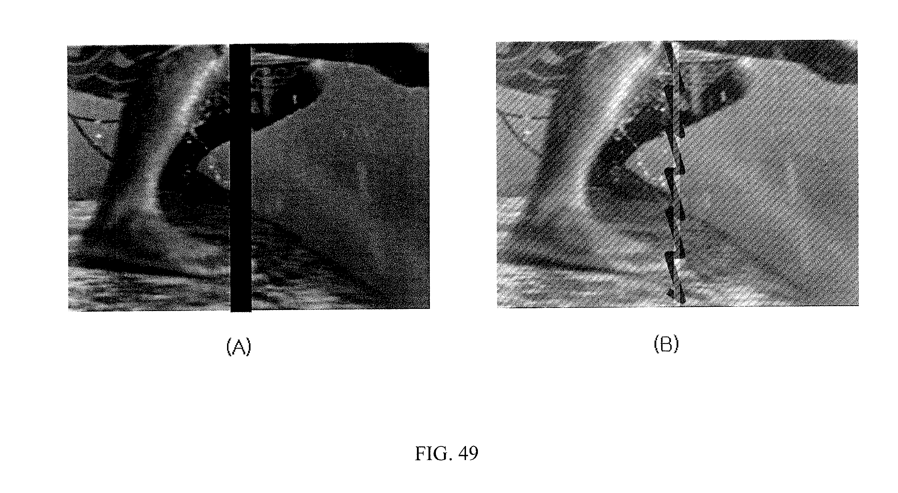

For example, if the interval between two adjacent 3-D filters in the area between two adjacent panels is greater than or the same as the interval between the two adjacent panels, the seam area SA may be significantly seen, as illustrated in (A) of FIG. 48 and (A) of FIG. 49.

In contrast, if the interval between two adjacent 3-D filters in the area between two adjacent panels is made smaller than the interval between the two adjacent panels as in an embodiment of the present invention, an optical effect that enables the seam area SA to be seen to be dim or small can be obtained, as illustrated in (B) of FIG. 48 and (B) of FIG. 49.

The reason for this is that light is refracted so that the size of the seam area SA is seen to be small in the seam area SA between the first and the second 3-D filters 220 and 221.

Accordingly, picture quality of a 3-D image implemented on a screen of the multiple 3-D display device can be improved.

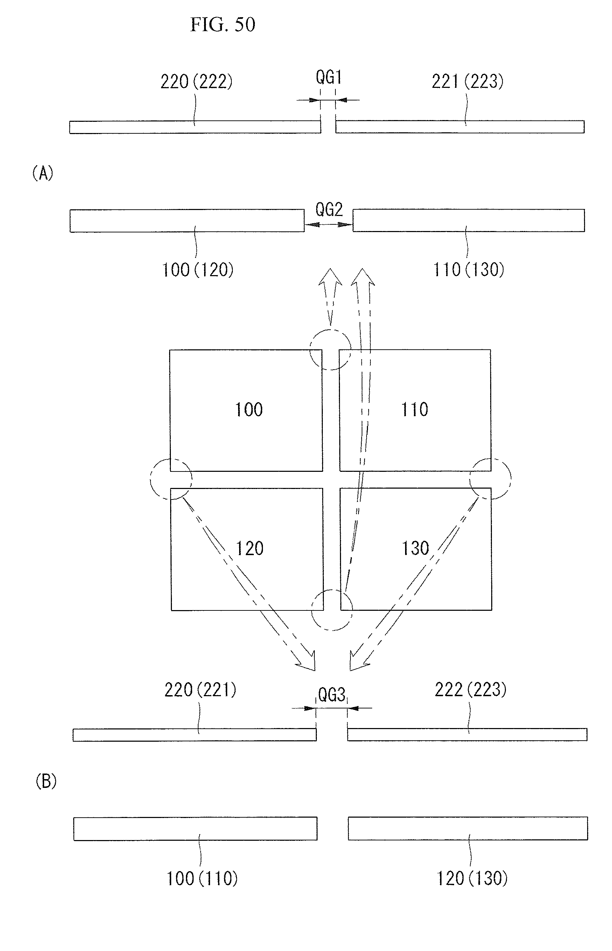

It is assumed that the first panel 100, the second panel 110, the third panel 120, and the fourth panel 130 are arranged in a 2x2 matrix form as illustrated in FIG. 50.

In such a case, as illustrated in (A) of FIG. 50, an interval QG2 between two panels adjacent to each other in the horizontal direction, for example, the first panel 100 and the second panel 110 (or the interval between the third panel 120 and the fourth panel 130) may be greater than an interval QG1 between the first 3-D filter 220 and the second 3-D filter 221 (or the interval between the third 3-D filter 222 and the fourth 3-D filter 223).

In contrast, as illustrated in (B) of FIG. 50, an interval QG3 between two panels adjacent to each other in the horizontal direction, for example, the first panel 100 and the third panel 120 (or the interval between the second panel 110 and the fourth panel 130) may be the same as the interval QG3 between the first 3-D filter 220 and the third 3-D filter 222 (or the interval between the second 3-D filter 221 and the fourth 3-D filter 223).

The size of at least one 3-D filter may be made greater than that of a display panel. This is described below, and redundant descriptions are omitted.

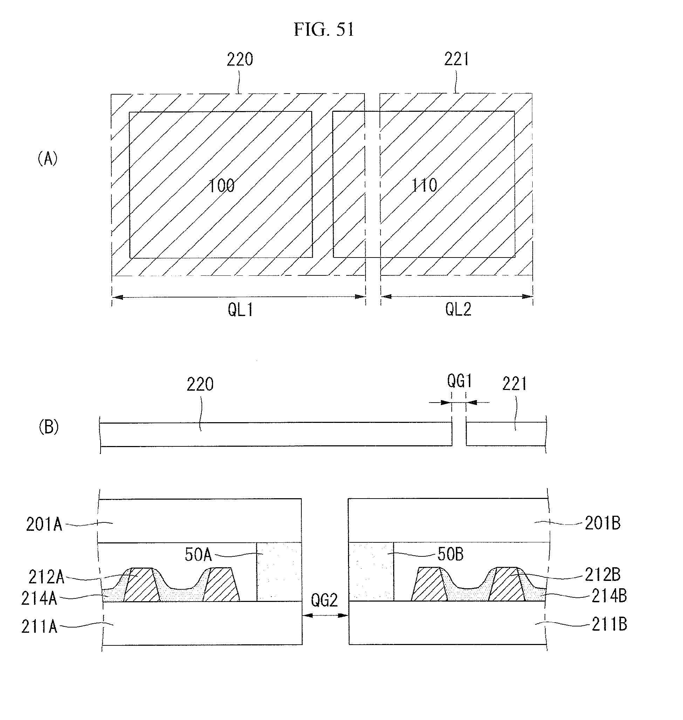

As illustrated in (A) of FIG. 51, at least one of the widths QL1 and QL2 of the first 3-D filter 220 and the second 3-D filter 221 disposed in front of the first panel 100 and the second panel 110 may be greater than the width of one of the first panel 100 and the second panel 110. In this case, a case where the width QL1 of the first 3-D filter 220 is greater than the width of one of the first and the second panels 100 and 110 is described below as an example.

Furthermore, as illustrated in (B) of FIG. 51, the interval QG1 between the first 3-D filter 220 and the second 3-D filter 221 in the horizontal direction of the first and the second panels 100 and 110 may be smaller than the interval QG2 between the first panel 100 and the second panel 110.

Furthermore, the length QL1 of the first 3-D filter 220 and the length QL2 of the second 3-D filter 221 in the horizontal direction of the first and the second panels 100 and 110 may be different. In this case, the length QL1 of the first 3-D filter 220 is illustrated as being longer than the length QL2 of the second 3-D filter 221, and vice versa.

Furthermore, the first 3-D filter 220 may be overlapped with part of the second panel 110 in addition to the first panel 100 in the vertical direction of the first and the second panels 100 and 110.

In such a case, the first 3-D filter 220 may be overlapped with pixels of the second panel 110 in addition to pixels of the first panel 100 in the vertical direction of the first and the second panels 100 and 110. At least one pixel area PA of the first 3-D filter 220 may correspond to or may be overlapped with pixels of the second panel 110 in the vertical direction of the first and the second panels 100 and 110.

Accordingly, a viewer may watch some images of the second panel 110 through the first 3-D filter 220, and a structure opposite the aforementioned structure may be possible.

In the aforementioned structure, as described with reference to FIGS. 48 and 49, a visual effect that enables the seam area SA to be seen to be small or dim can be obtained.

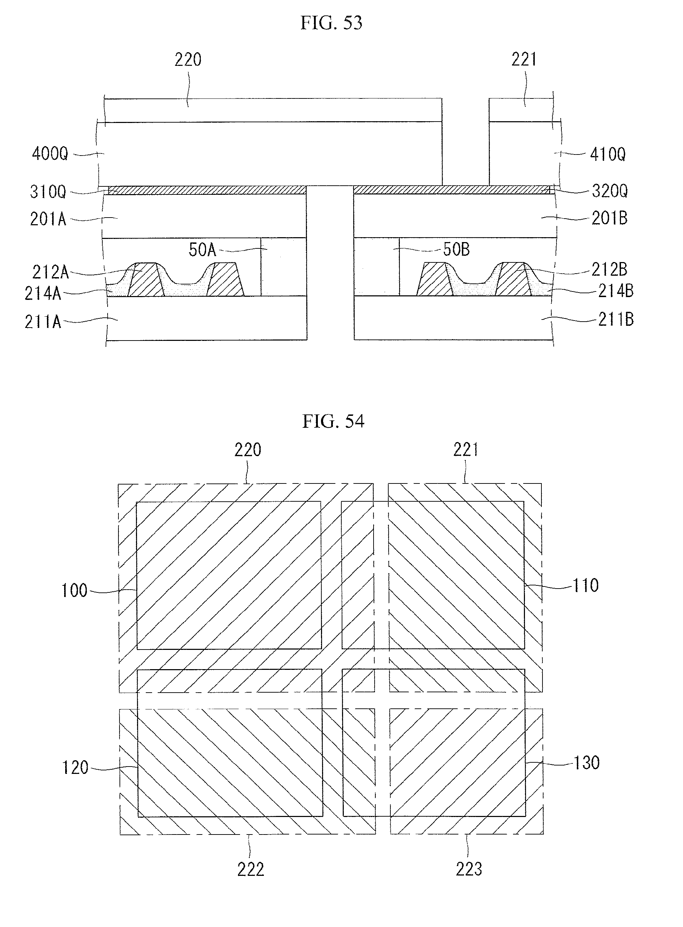

Referring to FIG. 53, the first transparent substrate 400Q disposed between the first 3-D filter 220 and the first panel 100 may include a portion overlapped with the second panel 110 in the vertical direction of the first and the second panels 100 and 110, and a structure opposite the aforementioned structure may be possible.

In such a case, the first adhesive layer 310Q may be formed between the first transparent substrate 400Q and the first panel 100, and the second adhesive layer 320Q may be formed between the first transparent substrate 400Q and the second panel 110 and between the second transparent substrate 410Q and the second panel 110.

It is assumed that the first panel 100, the second panel 110, the third panel 120, and the fourth panel 130 are arranged in a 2x2 matrix form as illustrated in FIG. 54.

In such a case, the first 3-D filter 220 may be overlapped with the second, the third, and the fourth panels 110, 120, and 130 in addition to the first panel 100.

Furthermore, the second 3-D filter 221 may be overlapped with the second panel 110 and the fourth panel 130, and the third 3-D filter 222 may be overlapped with the third panel 120 and the fourth panel 130.

In contrast, the fourth 3-D filter 223 may be overlapped with the fourth panel 130.

In such a case, a visual effect that enables the size of the seam area SA between two adjacent panels to be seen to be small or dim can be obtained.

Such a case corresponds to a structure in which the size of the seam area SA in the vertical direction and the horizontal direction is seen to be small or dim.

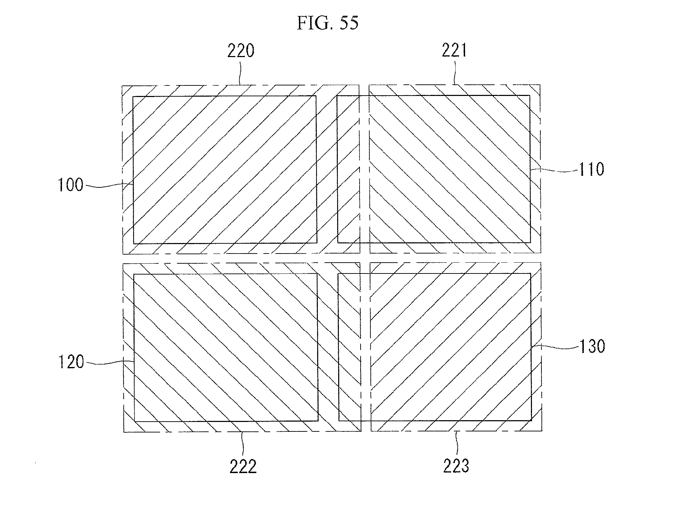

Alternatively, as illustrated in FIG. 55, the first 3-D filter 220 may be overlapped with the second panel 110 in addition to the first panel 100.

Furthermore, the third 3-D filter 222 may be overlapped with the third panel 120 and the fourth panel 130.

In contrast, the second 3-D filter 221 may be overlapped with the second panel 130, and the fourth 3-D filter 223 may be overlapped with the fourth panel 130.

In such a case, a visual effect that enables the size of the seam area SA between two panels adjacent to each other in the horizontal direction to be seen to be small or dim can be obtained.

In a multiple 3-D display device in accordance with an embodiment of the present invention, the center view of each of PDPs preferably may be moved to the area of two adjacent panels.

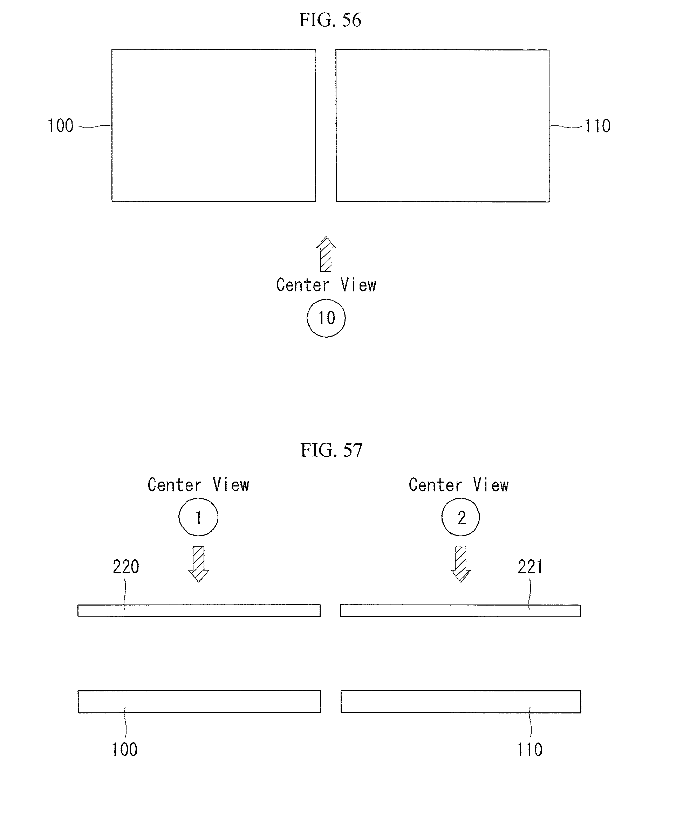

For example, if the first panel 100 and the second panel 110 are adjacent to each other in a multiple 3-D display device in accordance with an embodiment of the present invention, a center view may be placed in the boundary area of the first panel 100 and the second panel 110, as illustrated in FIG. 56.

If the center view of the first panel 100 is formed at a location and the center view of the second panel 110 is formed at a location as illustrated in FIG. 57, an image displayed on the first panel 100 may be seen by a viewer who watches the image at the location in a 3-D way, but an image displayed on the second panel 110 may be seen by the viewer as if the image has been distorted. Furthermore, an image displayed on the second panel 110 may be seen by a viewer who watches the image at the location in a 3-D way, but an image displayed on the first panel 100 may be seen by the viewer as if the image has been distorted.

In contrast, in a multiple 3-D display device in accordance with an embodiment of the present invention, if the center view is moved to an area between two adjacent panels as in the case of FIG. 56, a viewer who watches an image at a location may recognize both an image displayed on the first panel 100 and an image displayed on the second panel 110 to be normal 3-D images.

This is described in detail below.

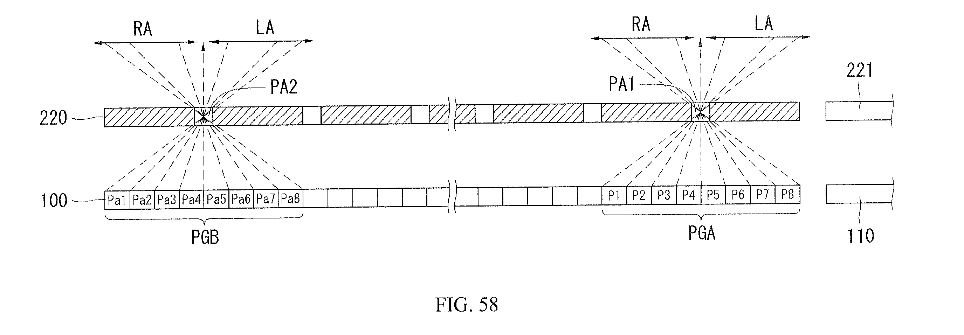

First, it is assumed that as illustrated in FIG. 58, the first 3-D filter 220 includes a first pixel area PA1 and a second pixel area PA2, the first pixel area PA1 corresponds to the first to eight pixels P1 to P8 of the first panel 100, and the second pixel area PA2 corresponds to the (a1)-th to (a8)-th pixels Pa1 to Pa8 of the first panel 100. In this case, the first pixel area PA1 may be adjacent to the boundary area of the first panel 100 and the second panel 110, and the second pixel area PA2 may be adjacent to an area opposite the boundary area of the first panel 100 and the second panel 110. Furthermore, the first to eighth pixels P1 to P8 of the first panel 100 may be called a first pixel group PGA, and the (a1)-th to the (a8)-th pixels Pa1 to Pa8 may be called a second pixel group PGB.

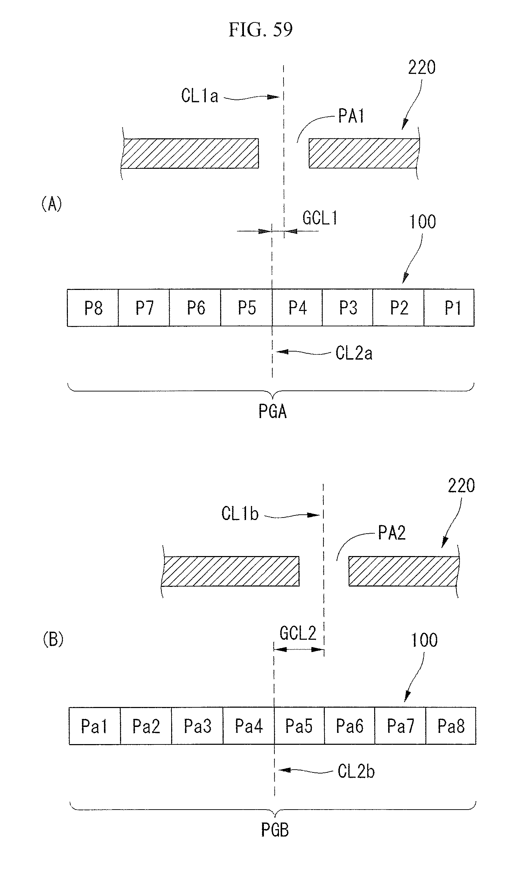

In such a case, as illustrated in (A) of FIG. 59, a distance GCL1 between a straight line CL2a vertical to the center of the first pixel group PGA and a straight line CL1a vertical to the center of the first pixel area PA1 is assumed to be a first interval. In other words, the interval between the center of the first pixel group PGA and the center of the first pixel area PA1 of the first 3-D filter 220, corresponding to the first pixel group PGA, in the horizontal direction of the first and the second panels 100 and 110 is assumed to be the first interval.

Furthermore, as illustrated in (B) of FIG. 59, a distance GCL2 between a straight line CL2b vertical to the center of the second pixel group PGB and a straight line CL1b vertical to the center of the second pixel area PA2 is assumed to be a second interval. In other words, the interval between the center of the second pixel group PGB and the center of the second pixel area PA2 of the first 3-D filter 220, corresponding to the second pixel group PGB, in the horizontal direction of the first and the second panels 100 and 110 is assumed to be the second interval.

In such a case, the first interval may be smaller than the second interval.

In other words, assuming that the first panel 100 and the second panel 110 include a first area and a second area opposite the first area, respectively, and the first area of the first panel 100 and the second area of the second panel 110 are disposed adjacent to each other, the center view of the first panel 100 may be disposed close to the first area of the first panel 100.

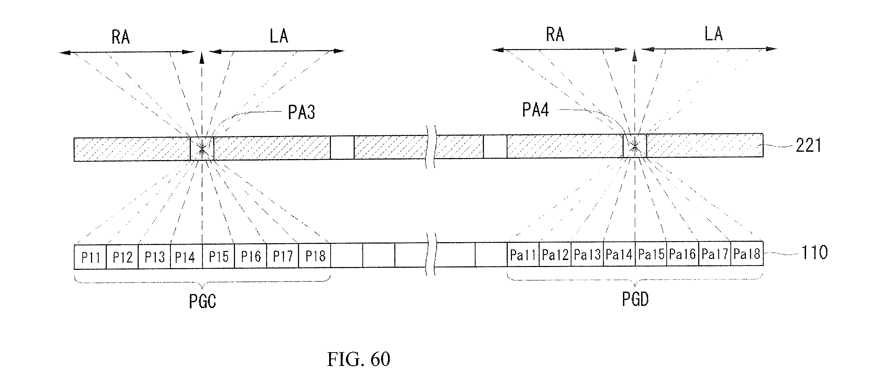

Furthermore, as illustrated in FIG. 60, it is assumed that the second 3-D filter 221 includes a third pixel area PA3 and a fourth pixel area PA4, the third pixel area PA3 corresponds to the eleventh to eighteenth pixels P11 to P18 of the second panel 110, and the fourth pixel area PA4 corresponds to the (a11)-th to (a18)-th pixels Pa11 to Pa18 of the second panel 110. In this case, the third pixel area PA3 may be adjacent to the boundary area of the first panel 100 and the second panel 110, and the fourth pixel area PA4 may be adjacent to an area corresponding to the boundary area of the first panel 100 and the second panel 110. Furthermore, the eleventh to eighteenth pixels P11 to P18 of the second panel 110 may be called a third pixel group PGC and the (a11)-th to (a18)-th pixels Pa11 to Pa18 of the second panel 110 may be called a fourth pixel group PGD.

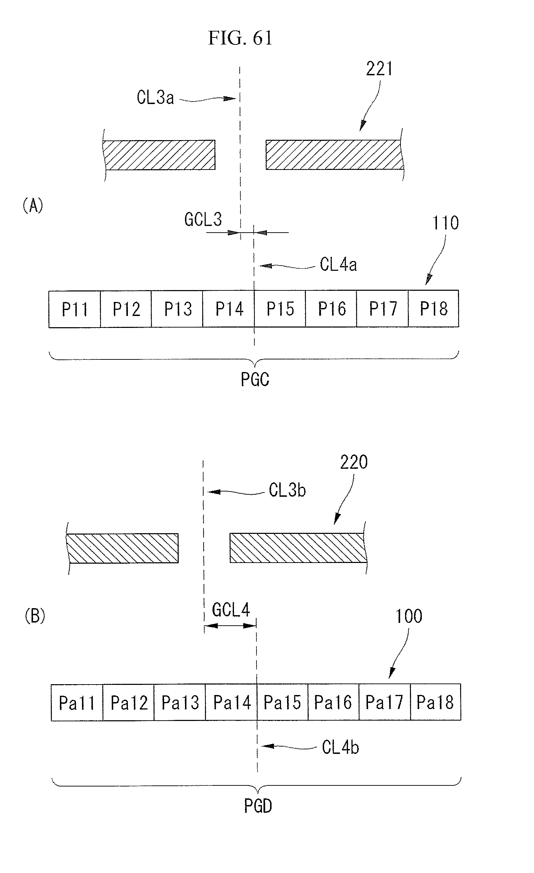

In such a case, as illustrated in (A) of FIG. 61, it is assumed that a distance GCL3 between a straight line CL4a vertical to the center of the third pixel group PGC and a straight line CL3a vertical to the center of the third pixel area PA3 is a third interval. In other words, the interval between the center of the third pixel group PGC and the center of the third pixel area PA3 of the second 3-D filter 221, corresponding to the third pixel group PGC, in the horizontal direction of the first and the second panels 100 and 110 is called the third interval.

Furthermore, as illustrated in (B) of FIG. 61, it is assumed that a distance GCL4 between a straight line CL4b vertical to the center of the fourth pixel group PGD and a straight line CL3b vertical to the center of the fourth pixel area PA4 is a fourth interval. In other words, the interval between the center of the fourth pixel group PGD and the center of the fourth pixel area PA4 of the second 3-D filter 221, corresponding to the fourth pixel group PGD, in the horizontal direction of the first and the second panels 100 and 110 is called the fourth interval.

In such a case, the third interval may be smaller than the fourth interval.

In other words, assuming that the first panel 100 and the second panel 110 include a first area and a second area opposite the first area, respectively, and the first area of the first panel 100 is disposed adjacent to the second area of the second panel 110, the center view of the second panel 110 may be disposed close to the second area of the second panel 110.

This is described below from a viewpoint of a PDP.

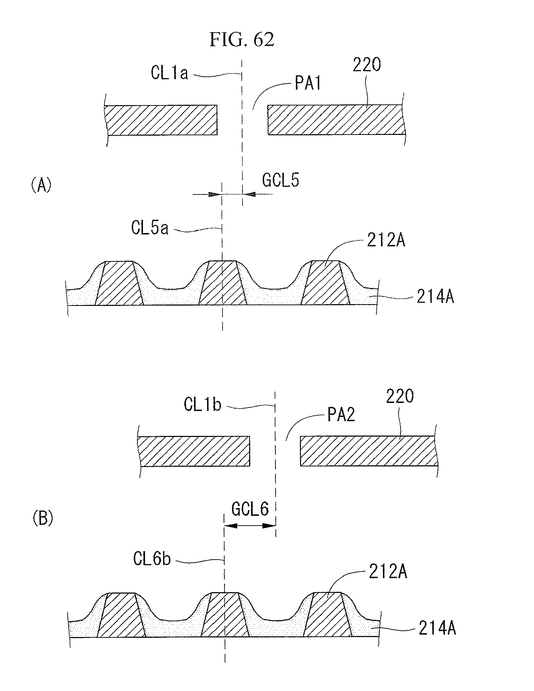

Assuming that a straight line CL1a vertical to the center of a first pixel area PA1 is a first straight line as illustrated in (A) of FIG. 62, the interval between the straight line CL1a and a second straight line CL5a that passes through the center of a barrier rib 212A most adjacent to the first straight line CL1a is assumed to be a tenth interval.

Assuming that a straight line CL1b vertical to the center of a second pixel area PA2 is a third straight line as illustrated in (B) of FIG. 62, the interval between the straight line CL1b and a fourth straight line CL6b that passes through the center of the barrier rib 212A most adjacent to the third straight line CL1b is assumed to be an eleventh interval.

In such a case, the tenth interval may be smaller than the eleventh interval.

The reason for this is that the center view of each panel has moved from the central area of the panel to the boundary area of two adjacent panels.

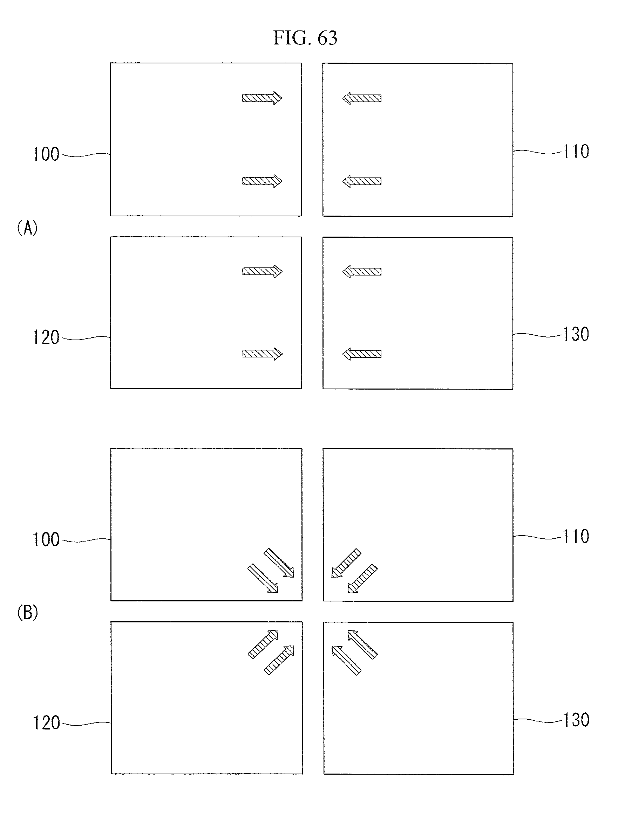

It is assumed that the first panel 100, the second panel 110, the third panel 120, and the fourth panel 130 are arranged in a 2x2 matrix form, as illustrated in FIG. 63.

In such a case, as illustrated in (A) of FIG. 63, the center view of the display panel may be moved to an area between two panels adjacent to each other in the horizontal direction. The movements of the center views are indicated by arrows.

For example, the center views of the first panel 100 and the second panel 110 adjacent to each other in the horizontal direction may be moved to the boundary area of the first panel 100 and the second panel 110.

Such a case may correspond to a case where the center views of the panels have been moved in the horizontal direction.

Alternatively, as illustrated in (B) of FIG. 63, the center view of the first panel 100, the second panel 110, the third panel 120, and the fourth panel 130 may be moved to the common boundary area of the first panel 100, the second panel 110, the third panel 120, and the fourth panel 130, that is, to the central area of the multiple 3-D display device.

Such a case may correspond to a case where the center views of the respective panels have been moved in the horizontal direction and the vertical direction.

In order to arrange a plurality of display panels in an N×M matrix form, a cradle may be required. This is described below, and redundant descriptions are omitted.

A multiple 3-D display device in accordance with an embodiment of the present invention may include a plurality of main frames, one or more cradles disposed in each of the main frames, a display panel connected to the panel cradle, a 3-D filter disposed in front of the display panel, a filter cradle connected to the edge of the 3-D filter, and a filter connection unit configured to connect the filter cradle to the main frame. This is described in detail below.

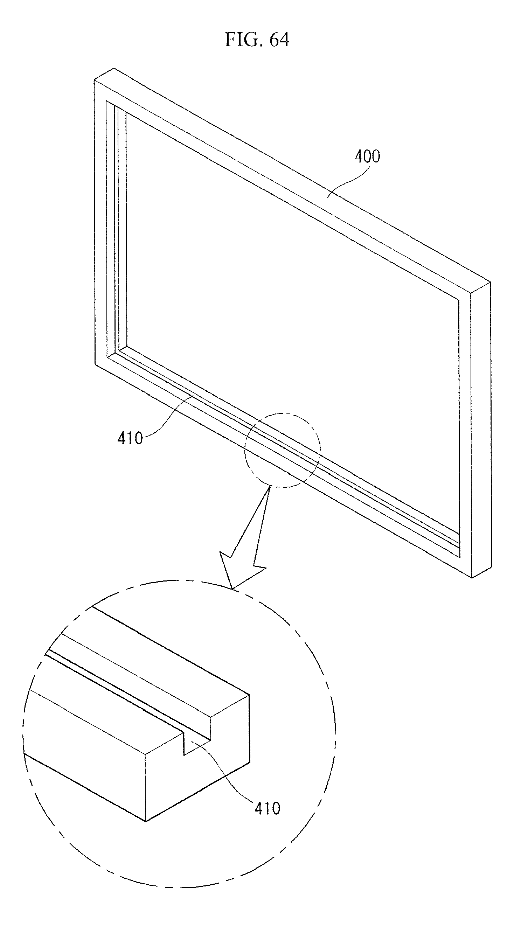

Referring to FIG. 64, the cradle of a multi-display panel and a multi-display device in accordance with an embodiment of the present invention may include a main frame 400. The main frame 400 may have high strength enough to support the display panel. The main frame 400 may be made of metallic materials, such as aluminum materials or iron materials, or may be made of non-metallic materials, such as a tree.

The main frame 400 may have a square frame form. Furthermore, a groove 410 may be formed at the edge of the main frame 400. The groove 410 may be formed on the inside of the edge of the main frame 400.

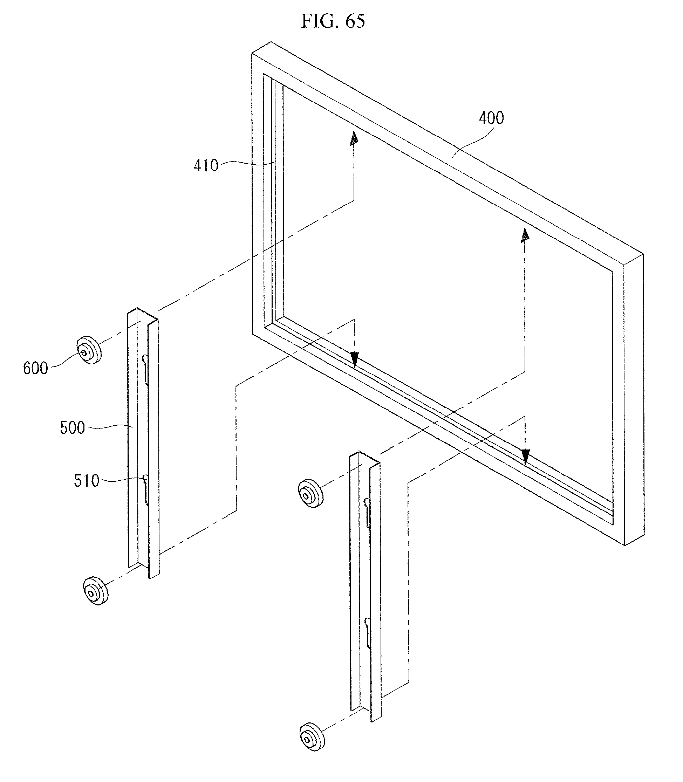

Referring to FIG. 65, the cradle of a multi-display panel and a multi-display device in accordance with an embodiment of the present invention may include at least one panel cradle 500 disposed in the main frame 400. Although not illustrated, the display panel, such as a PDP, may be cradled in the panel cradle 500. To this end, the panel cradle 500 may have sufficiently high strength.

Holes 510 in which the display panel is cradled may be formed in the panel cradle 500. The use of the holes 510 is described in detail below.

Furthermore, rollers 600 may be installed at the ends on both sides of the panel cradle 500.

The rollers 600 installed at the ends of the panel cradle 500 may be inserted into the groove 410 formed in the main frame 400. Accordingly, the display panel cradled in the panel cradle 500 may be freely moved within the main frame 400 left and right.

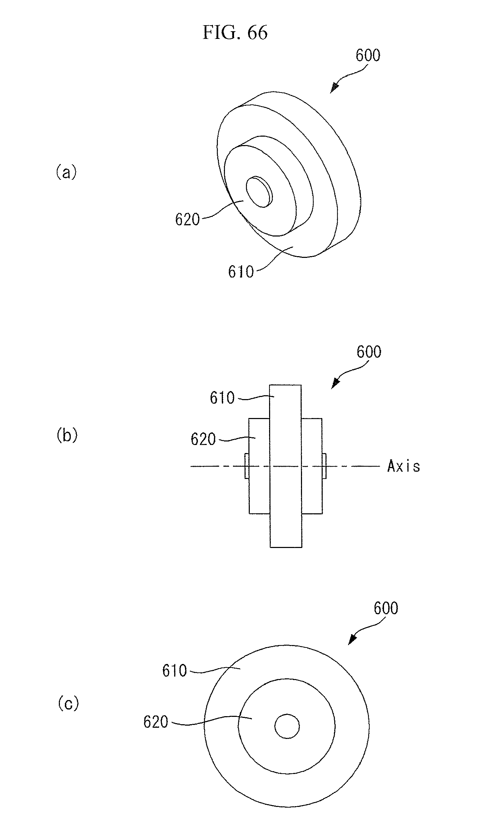

Referring to (a), (b), and (c) of FIG. 66, the roller 600 may include a main roller 610 and guide rollers 620 disposed on both sides of the main roller 610.

The diameter of the guide rollers 620 may be smaller than that of the main roller 610, and the axis of the guide rollers 620 may be the same as that of the main roller 610.

The main roller 610 and the guide rollers 620 may be separately formed and combined, thus forming a single roller 600. Alternatively, in order to maintain the strength of the roller 600 to a sufficiently high level, the main roller 610 and the guide rollers 620 may be integrated and formed.

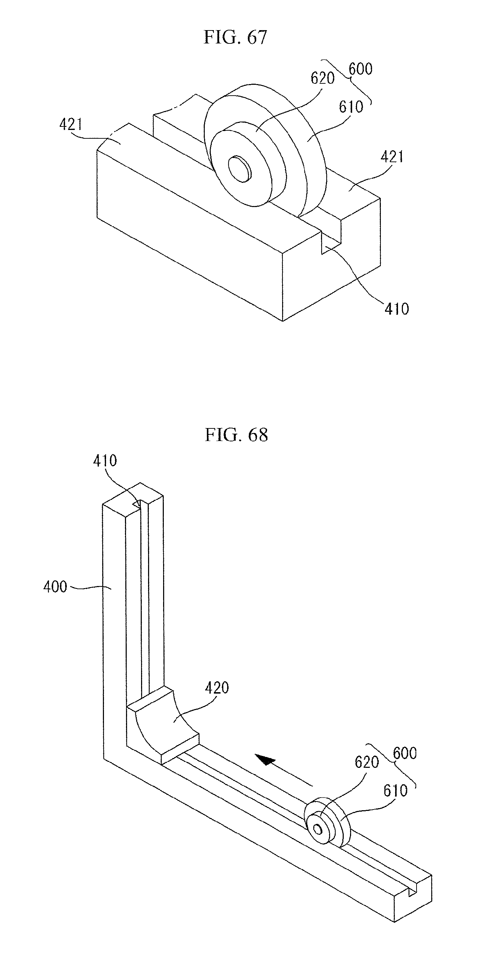

As illustrated in FIG. 67, the main roller 610 may be inserted into the groove 410 formed in the main frame 400 and placed within the groove 410. The guide rollers 620 may be placed in the fringe 420 of the groove 410.

The main roller 610 may be freely moved along the groove 410 in accordance with the guide of the guide rollers 620.

Referring to FIG. 68, a first buffer portion 420 configured to prevent a collision between the roller 600 installed in the panel cradle 500 and/or at the end of the panel cradle 500 and the main frame 400 may be disposed at the corner of the main frame 400.

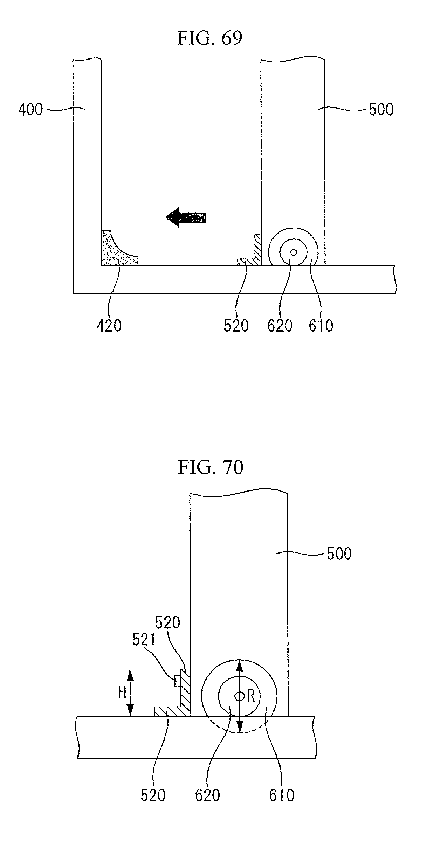

Furthermore, as illustrated in FIG. 69, second buffer portions 520 configured to prevent a collision between the panel cradle 500 and/or the roller 600 and the first buffer portion 420 may be disposed at the ends on both sides of the panel cradle 500.

In this case, the first buffer portion 420 and/or the second buffer portions 520 may include rubber materials for reducing a shock. Alternatively, if a case where the first buffer portion 420 and/or the second buffer portions 520 are capable of separating the panel cradle 500 and/or the roller 600 and the main frame 400 at a specific interval is taken into consideration, the amount of shock occurring when the panel cradle 500 and/or the roller 600 and the main frame 400 collide against each other can be reduced although the first buffer portion 420 and/or the second buffer portions 520 include metallic materials.

For example, the first buffer portion 420 may include rubber materials.

Although a user strongly moves the display panel cradled in the panel cradle 500 in the direction of an arrow indicated in FIG. 68 and/or FIG. 69, the amount of shock attributable to the shock of the first buffer portion 420 and/or the second buffer portions 520 can be reduced.

Referring to FIG. 70, the second buffer portions 520 may be fixed to the panel cradle 500 by specific clamping means 521. If the second buffer portions 520 are fixed to the panel cradle 500 through the clamping means 521 as described above, the second buffer portions 520 may include metallic materials.

Furthermore, the size of the second buffer portion 520 does not need to be large only if the second buffer portion 520 has only to prevent the panel cradle 500 and/or the roller 600 from colliding against the main frame 400 and/or the first buffer portion 420.

For example, as illustrated in FIG. 70, the height H of the second buffer portion 520 may be smaller than the diameter of the roller 600, that is, the diameter R of the main roller 610.

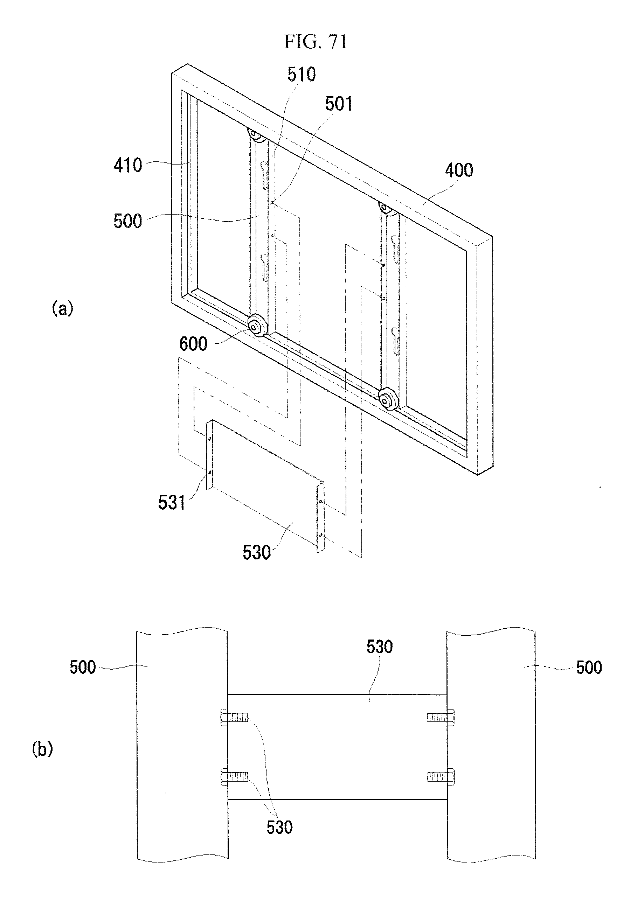

Furthermore, the number of panel cradles 500 may be plural. For example, the number of panel cradles 500 may be 2, as illustrated in FIG. 71.

Furthermore, a support 530 may be disposed between adjacent panel cradles 500 and may connect the two adjacent panel cradles 500. To this end, holes 531 may be formed in the sides of the support 530, holes 501 may be formed in the sides of the panel cradle 500, and the support 530 and the panel cradle 500 may be fixed using specific clamping means 530 through the holes 531 of the support 530 and the holes 501 of the panel cradle 500.

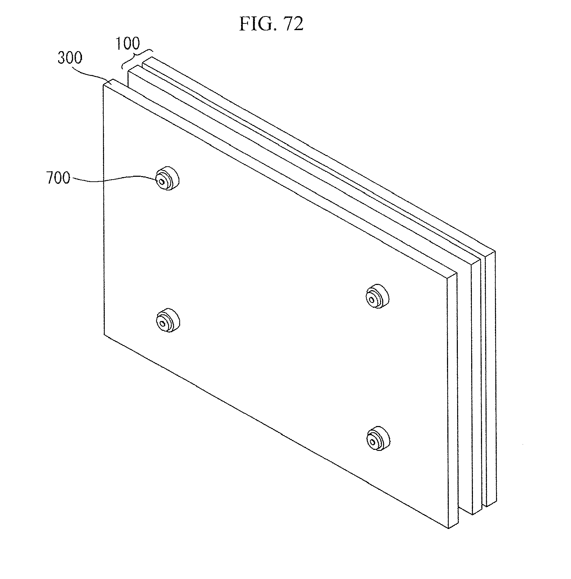

A display panel may be cradled in the panel cradle 500. In order for the display panel to be cradled in the panel cradle 500 as described above, fixing portions 700 may be disposed at the back of the plate 300 disposed at the back of the display panel 100, as illustrated in FIG. 72.

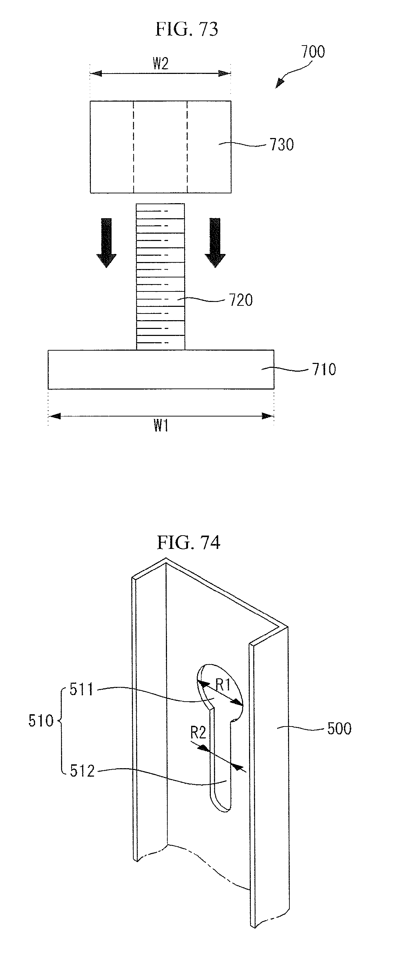

Each of the fixing portions 700 may include a base portion 710, a protruding portion 720 disposed in the base portion 710, and a head portion 730 coupled with the protruding portion 720, as illustrated in FIG. 73.

The width W2 of the head portion 720 may be smaller than the width W1 of the base portion 710.

Furthermore, the protruding portion 720 may include a male screw, and the head portion 730 may include a female screw corresponding to the male screw of the protruding portion 720. Accordingly, the head portion 730 and the protruding portion 720 may be strongly combined.

A display panel may be connected to the front of the fixing portions 700, that is, to the base portion 710 of the fixing portions 700. That is, a plate is disposed at the back of the display panel, and the back of the plate is connected to the base portion 710 of the fixing portions 700.

The fixing portions 700 is inserted into the holes 500 formed in the panel cradle 500, and thus the display panel is cradled in the panel cradle 500.

In order for the fixing portion 700 to be easily inserted into the hole 500 of the panel cradle 500 as described above, as illustrated in FIG. 74, the hole 510 may include a first portion 511 configured to have a width R1 greater than the diameter W2 of the head portion 730 of the fixing portion 700 and a second portion 512 connected to the first portion 511 and configured to have a width R2 smaller than the diameter W2 of the head portion 730.

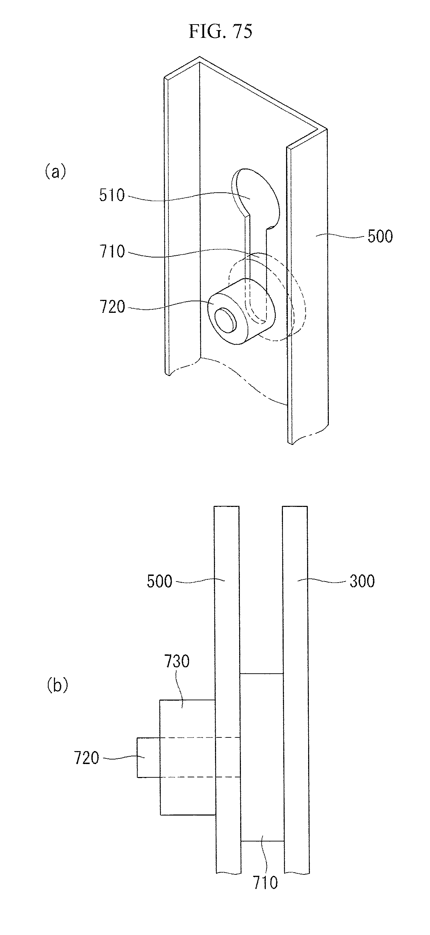

In such a structure, as illustrated in (a) of FIG. 75, the head portion 730 of the fixing portion 700 may pass through the first portion 511 and may be placed on the other side of the hole 510. In this case, the base portion 710 of the fixing portion 700 may be disposed on the side opposite the head portion 730, that is, on one side of the hole 510. Accordingly, the protruding portion 720 disposed between the base portion 710 and the head portion 730 is placed within the hole 510.

In this case, if the head portion 730 is tightened by rotating the head portion 730 so that it moves to the base portion 710, the fixing portion 700 may be tightly fixed to the panel cradle 500. Accordingly, as illustrated in (b) of FIG. 75, the plate 300 connected to the base portion 710 may also be fixed to the panel cradle 500. As a result, the display panel may be cradled in the panel cradle 500.

The fixing portion 700 may move the panel back and forth in the state in which the fixing portion 700 has been fixed to the panel cradle 500.

To this end, the fixing portion 700 may include the base portion 710, the protruding portion 720 configured to have a male screw thread formed therein, the head portion 730 configured to have a female screw thread formed therein in order to be fixed to the protruding portion 720, and a housing portion 740 configured to dispose elastic portion 750, such as a spring, around the protruding portion 720.

In this case, the housing portion 740 may not be fixed to the protruding portion 720, but may be moved independently of the protruding portion 720.

A handle portion 731 may be disposed in the head portion 730.

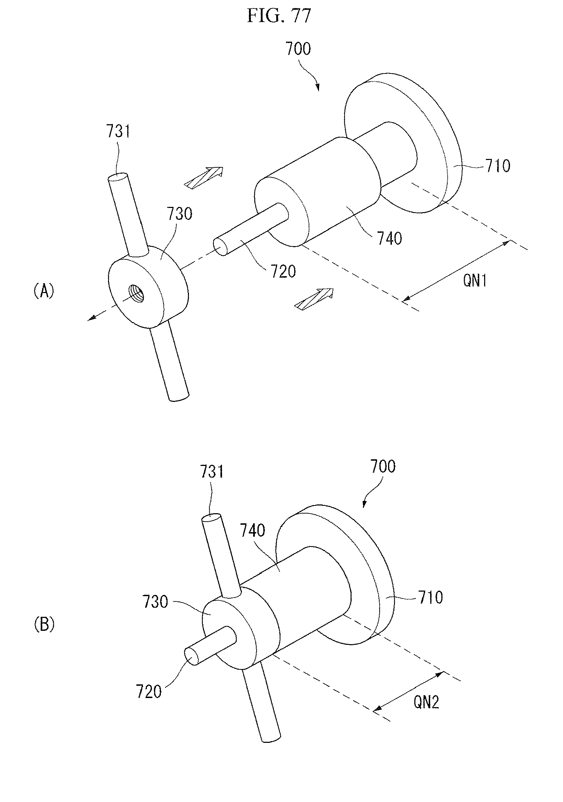

When a user inserts the head portion 730 into the protruding portion 720, rotates the head portion 730, and moves the head portion 730 in the direction of an arrow as illustrated in (A) of FIG. 77, the elastic portion 750 placed within the housing portion 740 may be compressed as illustrated in (B) of FIG. 77. Accordingly, when the housing portion 740 moves in the direction of the arrow, the interval between the head portion 730 and the base portion 710 is reduced from QN1 to QN2.

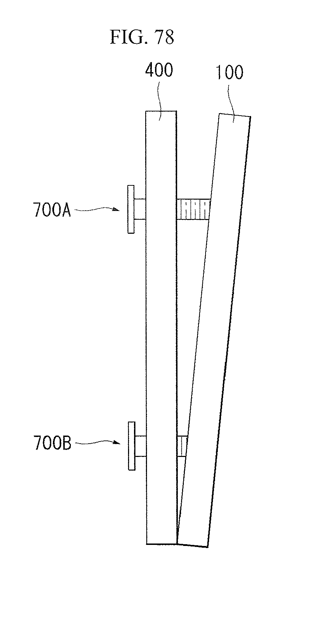

Accordingly, the panel 100 can be moved back and forth from the main frame 400 as illustrated in FIG. 78. For example, if a first fixing portion 700A and a second fixing portion 700B are disposed in the main frame 400 up and down as illustrated in FIG. 78, when the first fixing portion 700A is driven using a method opposite the method of (B) of FIG. 77, the upper part of the panel 100 may be inclined to the front of the main frame 400.

A tilting portion for tilting the panel connected to the panel cradle 500 to the front of the panel is described below.

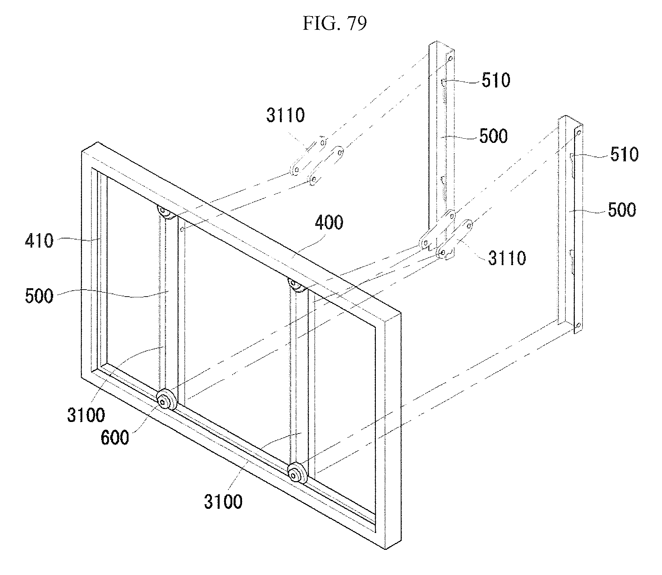

Referring to FIG. 79, at least one fixing frame 3100 may be fixed to the main frame 400. In this case, holes for fixing a display panel do not need to be formed unlike in the panel cradle 500 because the display panel is not fixed to the fixing frame 3100.

When the case of FIG. 79 is compared with the case of FIG. 65, it may be seen that the panel cradle 500 has been replaced with the fixing frame 3100. Accordingly, the rollers 600 are disposed in the fixing frame 3100.

The panel cradle 500 to which the display panel is fixed may be connected to the fixing frame 3100.

Furthermore, tilting portions 3110 configured to tilt the display panel to the front of the display panel may be disposed between the panel cradle 500 and the fixing frame 3100. In this case, the tilting portions 3110 may be connected to the fixing frame 3100 and the panel cradle 500 to the extent that the tilting portions 3110 can be moved without being fixed to the fixing frame 3100 and the panel cradle 500.

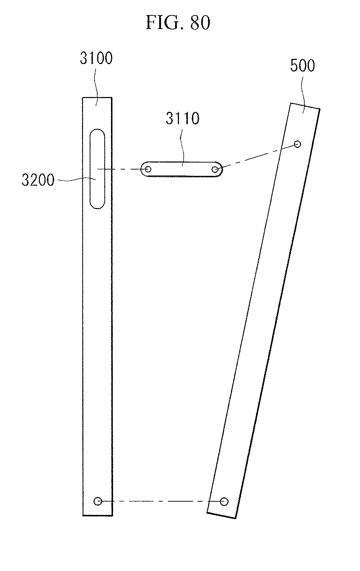

Referring to FIG. 80, a guide hole 3200 configured to guide the tilting portion 3110 may be formed in the fixing frame 3100.

Furthermore, one side of the tilting portion 3110 may be connected to the guide hole 3200, the other side of the tilting portion 3110 may be connected to one side of the panel cradle 500, and the other side of the panel cradle 500 may be connected to the fixing frame 3100. In this case, the other side of the panel cradle 500 is connected to the fixing frame 3100 to the extent that the panel cradle 500 can be moved without being fixed to the fixing frame 3100.

In such a structure, when the tilting portions 3110 move, the panel cradle 500 may be tilted forward. Accordingly, the display panel fixed to the panel cradle 500 may be tilted forward.

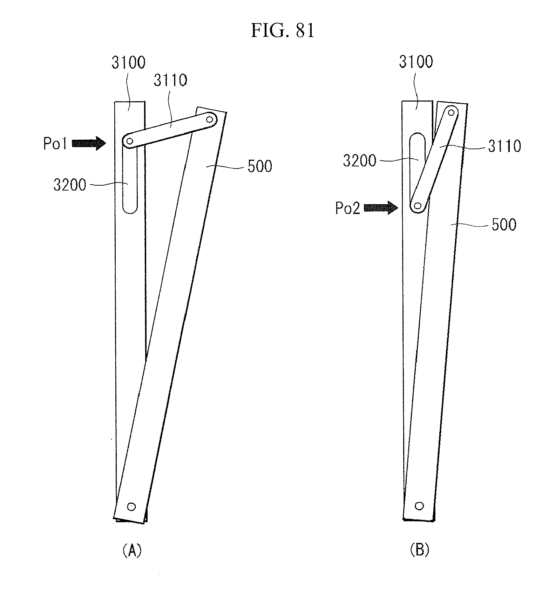

For example, as illustrated in (A) of FIG. 81, if one side of the tilting portion 3110 is placed at the upper part Po1 of the guide hole 3200, the other side of the tilting portion 3110 becomes distant from the fixing frame 3100, and thus the panel cradle 500 may be tilted forward.

In contrast, as illustrated in (B) of FIG. 81, if one side of the tilting portion 3110 is placed at the lower part Po2 of the guide hole 3200, the other side of the tilting portion 3110 may approach the fixing frame 3100, and thus the panel cradle 500 may move toward the fixing frame 3100.

If the display panel may be moved forward as described above, a process of connecting display panels may be further facilitated.

The configuration of a height adjustment unit is described below.

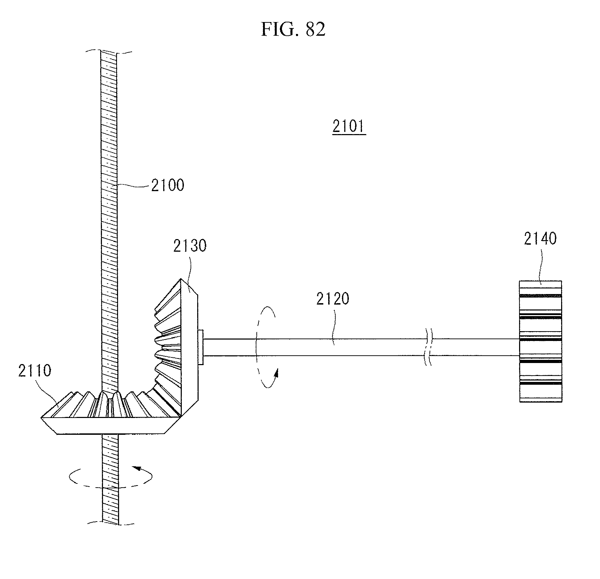

Referring to FIG. 82, a height adjustment unit 2101 configured to control the height of a display panel connected through the holes 510 the may be disposed in the rear of the panel cradle 500. The height adjustment unit 2101 may control the height of the display panel by changing rotating force in the vertical direction so that the display panel is moved in the vertical direction.

In this case, as illustrated in FIG. 82, the height adjustment unit 2101 may include a bevel-gear unit configured to change rotating force in the vertical direction. More specifically, the bevel-gear unit may include a first shaft 2100 disposed in the length direction of the panel cradle 500, a first gear 2110 connected to the first shaft 2100, a second gear 2130 engaged with the first gear 2110 in a direction orthogonal to the first gear 2110, and a second shaft 2120 connected to the second gear 2130.

The second shaft 2120 may be orthogonal to the first shaft 2100, and a handle 2140 may be connected to the end of the second shaft 2120.

When a user rotates the handle 2140 connected to the second shaft 2120, rotary power applied to the handle 2140 rotates the second gear 2130 and the first gear 2110. In response thereto, the first gear 2110 may rotate and move the first shaft 2100 up and down. That is, the first gear 2110 may rotate and push or pull the first shaft 2100 up or down. To this end, a screw thread may be formed in the first shaft 2100.

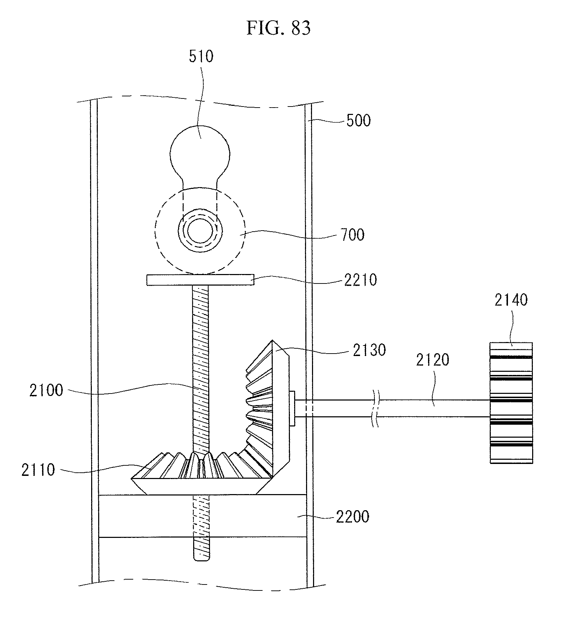

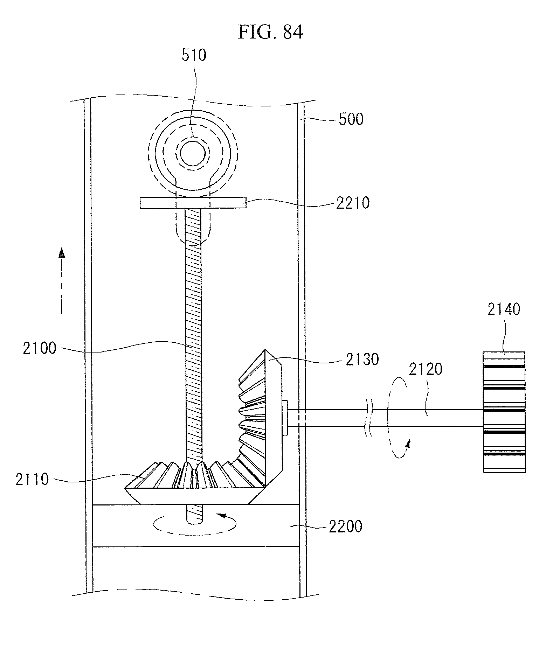

For example, when the handle 2140 is rotated in the state, such as that of FIG. 83, the first gear 2110 may rotate and upward move the first shaft 2100. Accordingly, as illustrated in FIG. 84, the fixing portion 700 is upward pushed by a prop 2210 formed at the end of the first shaft 2100, and thus the display panel connected to the fixing portion 700 is upward moved.

Furthermore, in order to control the height of the display panel more easily, the height adjustment unit 2101 may be disposed in each of the panel cradles 500.

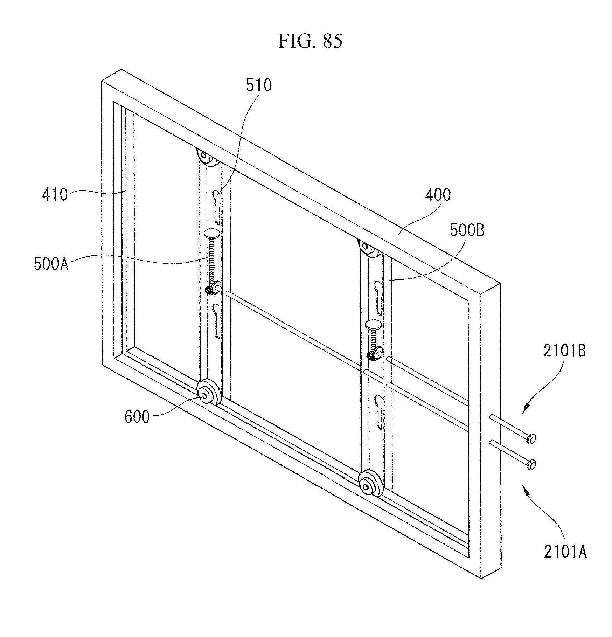

For example, as illustrated in FIG. 85, two panel cradles 500A and 550B, that is, a first panel cradle 500A and a second panel cradle 500B, may be disposed in a single main frame 400. Height adjustment units 2101A and 2101B may be disposed in the first panel cradle 500A and the second panel cradle 500B, respectively.

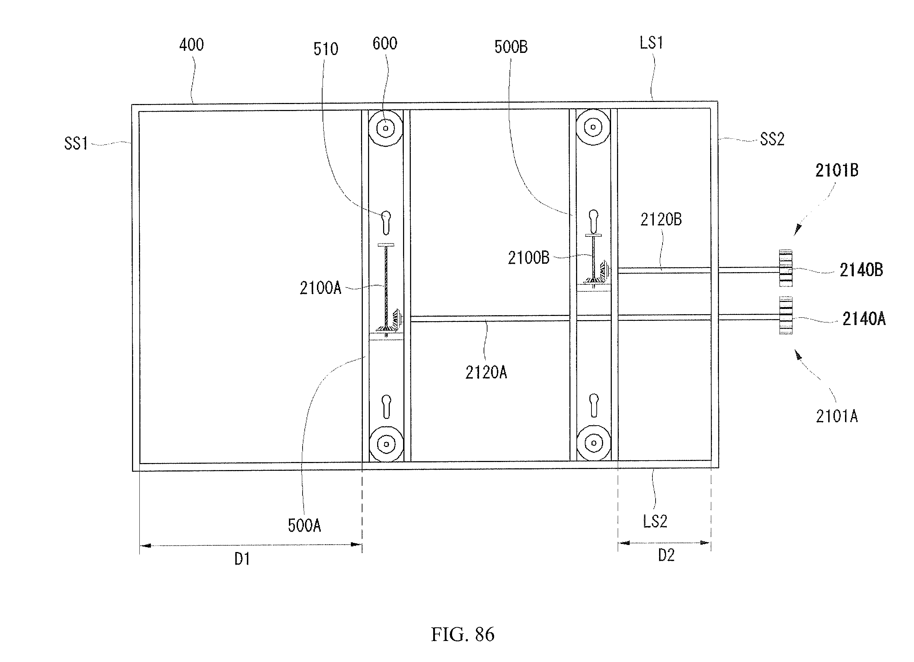

More specifically, as illustrated in FIG. 86, the first height adjustment unit 2101A may be disposed in the first panel cradle 500A, and the second height adjustment unit 2101B may be disposed in the second panel cradle 500B.

Furthermore, assuming that the first panel cradle 500A and the second panel cradle 500B extend on the first long side LS1 and the second long side LS2 of the main frame 400, the handles 2140A and 2140B of the first height adjustment unit 2101A and the second height adjustment unit 2101B may be placed on any one side of a first short side SS1 and a second short side SS2.

If an interval D1 between the second short sides SS2 of the first panel cradle 500A and the main frame 400 is greater than an interval D2 between the first short sides SS1 of the second panel cradle 500B and the main frame 400, the handles 2140A and 2140B of the first height adjustment unit 2101A and the second height adjustment unit 2101B may be placed on the first short side SS1.

In such a case, the length of the second shafts 2120A and 2120B of the first height adjustment unit 2101A and the second height adjustment unit 2101B can be reduced.

Furthermore, the length of the second shaft 2120A of the first height adjustment unit 2101A may be longer than that of the second shaft 2120B of the second height adjustment unit 2101B. The length of the first shaft 2100A of the first height adjustment unit 2101A may be longer than that of the second shaft 2100B of the second height adjustment unit 2101B.

Furthermore, the second shaft 2120A of the first height adjustment unit 2101A having a length longer than the second shaft 2120B of the second height adjustment unit 2101B may penetrate the second panel cradle 500B.

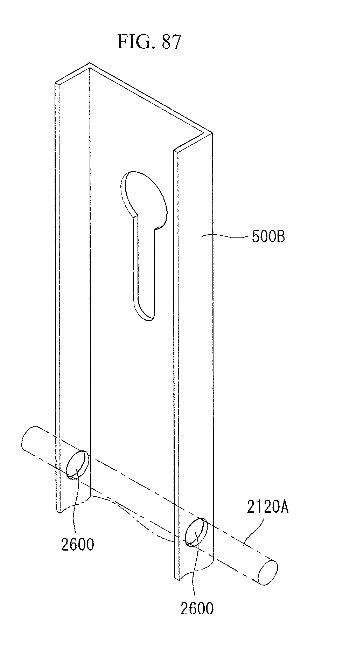

To this end, as illustrated in FIG. 87, specific holes 2600 may be formed in the second panel cradle 500B, and the second shaft 2120A of the first height adjustment unit 2101A may pass through the holes 2600.

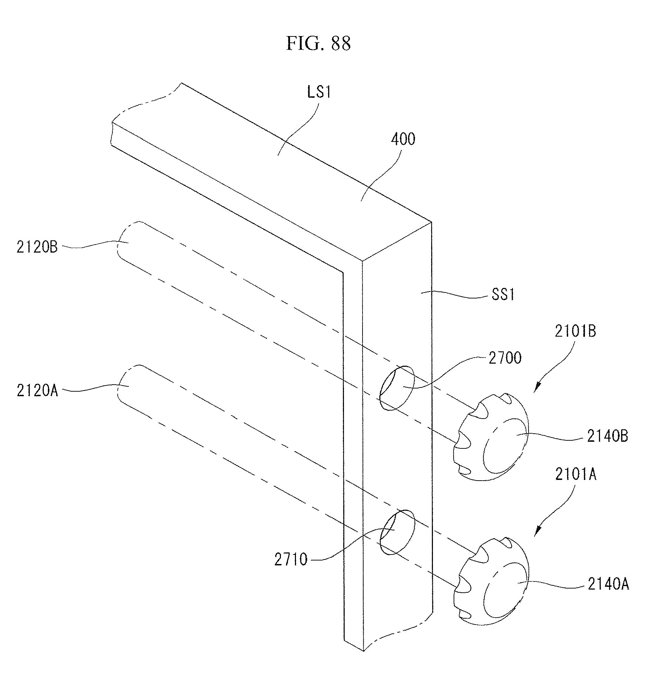

Furthermore, as illustrated in FIG. 88, the second shaft 2120A of the first height adjustment unit 2101A and the second shaft 2120B of the second height adjustment unit 2101B may penetrate the main frame 400. To this end, specific holes 2700 and 2710 may be formed in the main frame 400. The second shaft 2120A of the first height adjustment unit 2101A and the second shaft 2120B of the second height adjustment unit 2101B may pass through the holes 2700 and 2710.

In such a case, the handle 2140A of the first height adjustment unit 2101A and the handle 2140B of the second height adjustment unit 2101B may be placed in the outer wall of the main frame 400.

Furthermore, if a plurality of the main frames 400 is disposed adjacent to each other, the handles 2140 of the height adjustment units 2101 may be placed at different locations of two adjacent main frames 400.

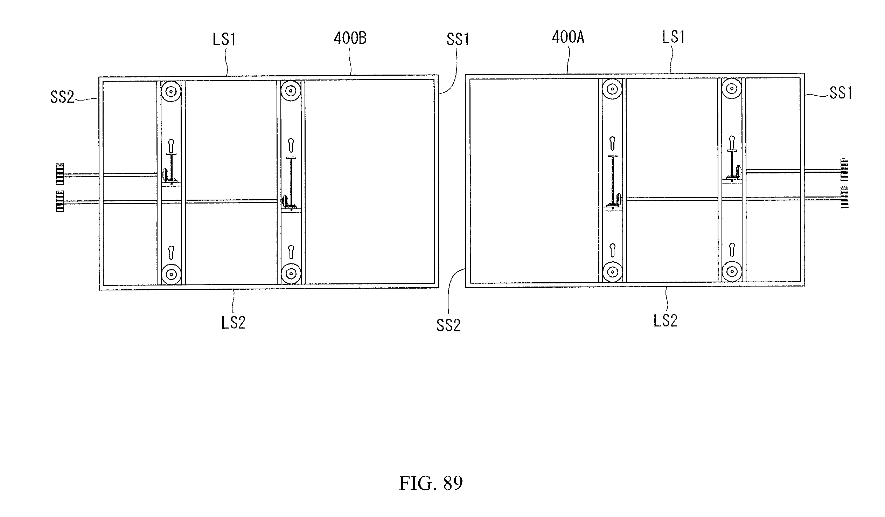

For example, it is assumed that the second short side SS2 of a first main frame 400A and the first short side SS1 of a second main frame 400B are disposed adjacent to each other as illustrated in FIG. 89.

In such a case, the handle 2140A of the first height adjustment unit 2101A and the handle 2140B of the second height adjustment unit 2101B may be disposed on the first short side SS1 of the first main frame 400A. The handle 2140A of the first height adjustment unit 2101A and the handle 2140B of the second height adjustment unit 2101B may be disposed on the second short side SS2 of the second main frame 400B.

In such a case, control of the height of display panels may be further facilitated.

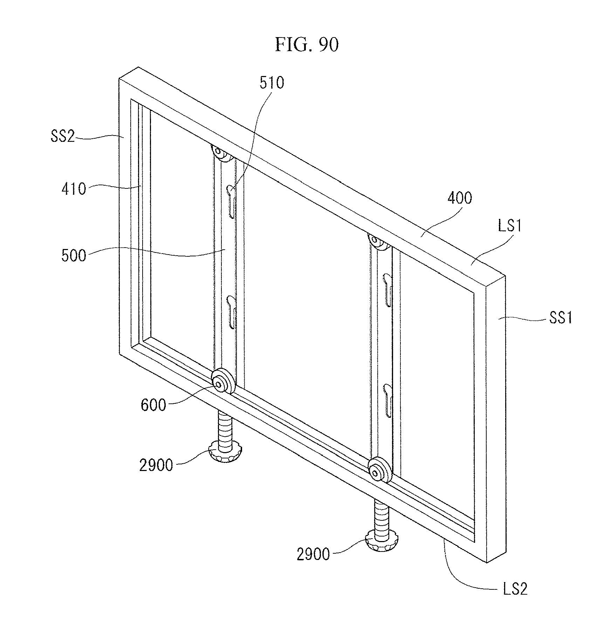

Alternatively, as illustrated in FIG. 90, a height adjustment unit 2900 of a different form may be disposed under the panel cradle 500. For example, the height adjustment unit 2900 may be disposed on the second long side LS2 of the main frame 400.

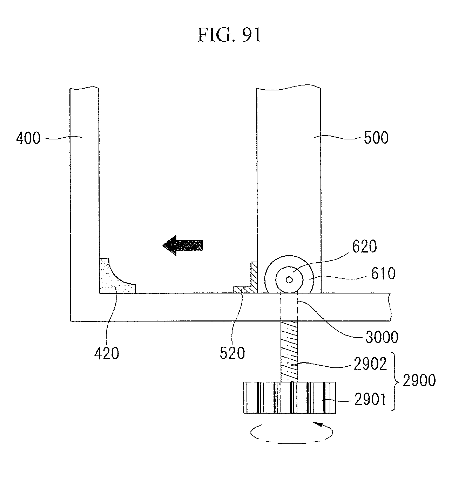

The height adjustment unit 2900 may include a handle 2901 and a screw thread 2902, as illustrated in FIG. 91.

In this case, the screw thread 2902 may control the height of a display panel by delivering rotary power, applied through the handle 2901, to the panel cradle 500 in the vertical direction. To this end, a specific hole 3000 through which the screw thread 2902 of the height adjustment unit 2900 passes may be formed in the main frame 400.

A horizontal location adjustment unit is described below.

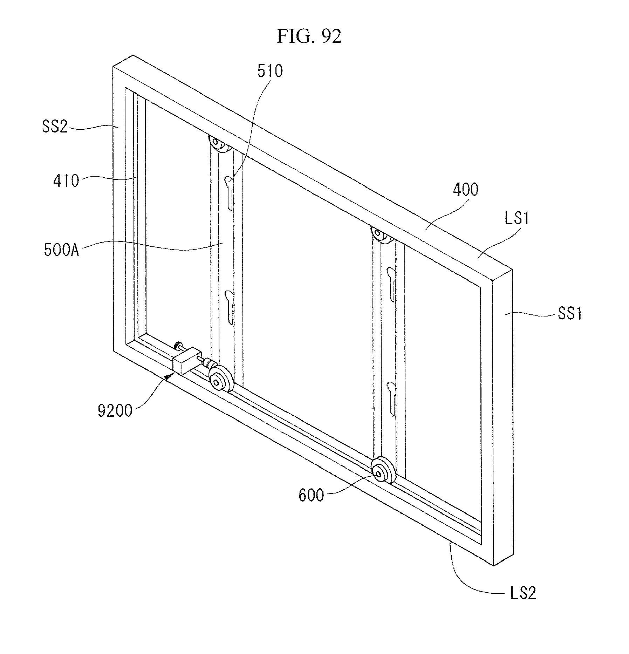

Referring to FIG. 92, a horizontal location adjustment unit 9200 configured to control the horizontal location of a panel cradle 500A may be installed in the main frame 400.

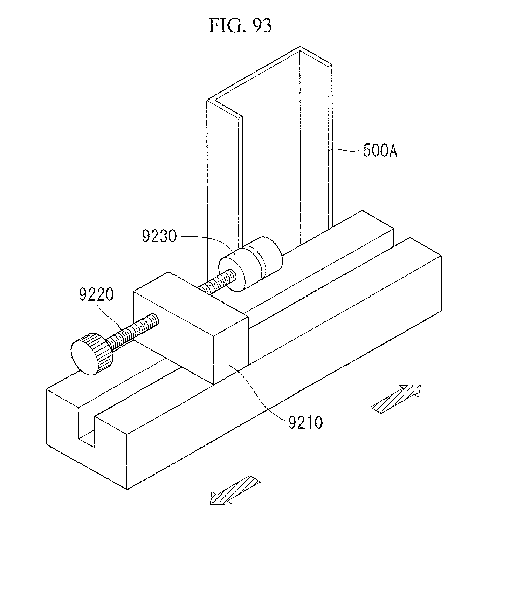

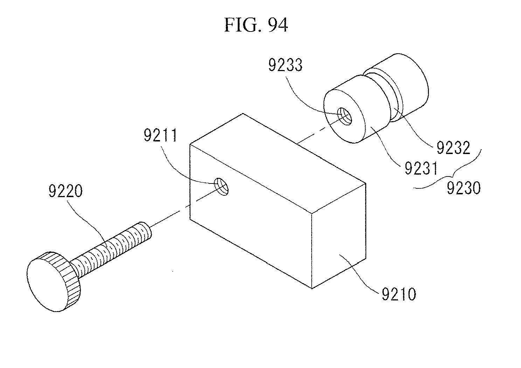

As illustrated in FIGS. 93 and 94, the horizontal location adjustment unit 9200 may include a main fixing portion 9210 fixed to the main frame 400 and configured to have a hole 9211 formed therein, a screw portion 9220 disposed in the hole 9211 of the main fixing portions 9210 and configured to have a male screw thread formed therein, and a cradle connection portion 9230 connected to the end on one side of the screw portion 9220 and engaged with the panel cradle 500A.

A female screw thread may be formed in the hole 9211 of the main fixing portions 9210.

In this case, the cradle connection portion 9230 may include a cylindrical body 9231 and a rail 9232 formed in the cylindrical body 9231 and configured to have the panel cradle 500A engaged therewith.

The cradle connection portion 9230 may further include a groove 9233 into which the screw portion 9220 is inserted.

Furthermore, the end of the panel cradle 500A may be inserted into the rail 9232 of the cradle connection portion 9230.

In such a structure, when a user rotates the screw portion 9220 by applying force, the panel cradle 500A may be moved from side to side by the rotation of the screw portion 9220. Accordingly, a display panel disposed in the panel cradle 500A can be moved from side to side.

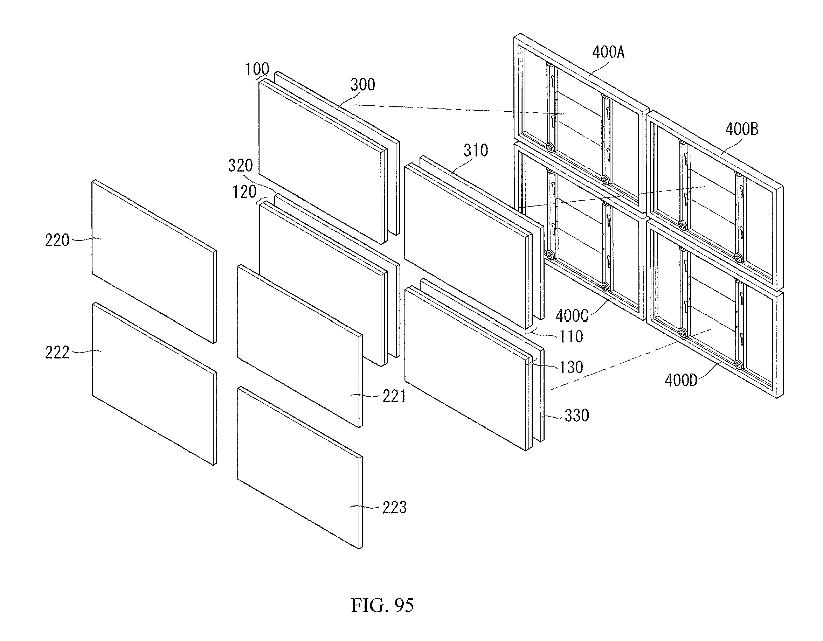

Referring to FIG. 95, the first, the second, the third, and the fourth panels 100 to 130 may be disposed in a plurality of main frames 400 in which the panel cradle 500 is disposed. The first 3-D filter 220 may be disposed in front of the first panel 100, the second 3-D filter 221 may be disposed in front of the second panel 110, the third 3-D filter 222 may be disposed in front of the third panel 120, and the fourth 3-D filter 223 may be disposed in front of the fourth panel 130.

Furthermore, the multiple 3-D display device in accordance with an embodiment of the present invention may further include a specific structure for mounting the 3-D filters on the main frame. This is described below, and redundant descriptions are omitted.

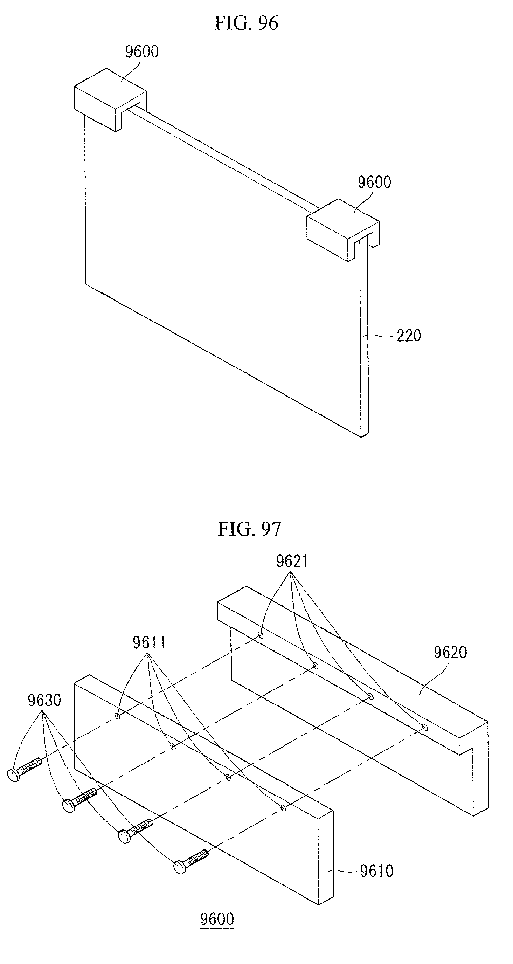

Referring to FIG. 96, filter cradles 9600 may be disposed at the edges of the first 3-D filter 220. The first 3-D filter 220 is described as an example, but the same principle may be applied to the second, the third, and the fourth 3-D filters 221 to 223.

At least two filter cradles 9600 may be applied to a single 3-D filter. A case where two filter cradles 9600 are applied to a single 3-D filter is described below as an example.

Referring to FIG. 97, the filter cradle 9600 may include a front cradle 9610 placed at the edge of the front of the first 3-D filter 220 and a rear cradle 9620 placed at the edge of the rear of the first 3-D filter 220. In this case, the front cradle 9610 and the rear cradle 9620 may be connected to each other.

For example, the front cradle 9610 may include a plurality of first holes 9611, and the rear cradle 9620 may include a plurality of second holes 9621 corresponding to the first holes 9611.

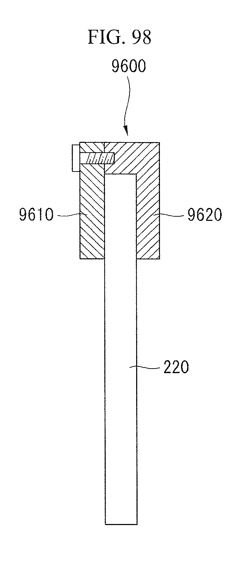

Furthermore, specific clamping means 9630 may connect the front cradle 9610 and the rear cradle 9620 through the first holes 9611 and the second holes 9621. Accordingly, the first 3-D filter 220 may be fixed between the front cradle 9610 and the rear cradle 9620, as illustrate din FIG. 98.

Such a filter cradle 9600 is connected to the filter connection unit. Furthermore, the filter connection unit may be connected to the main frame 400 or the side cover directly or indirectly. Accordingly, the filter cradle 9600 may be connected to the main frame 400 through the filter connection unit.

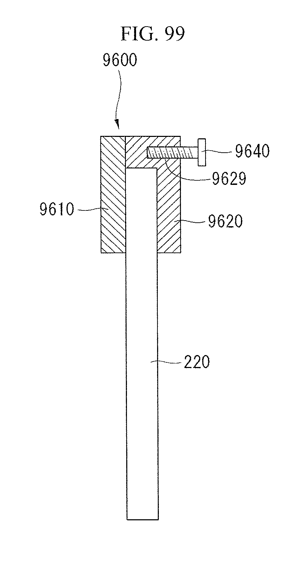

In order to connect the filter cradle 9600 to the filter connection unit as described above, first latch portions 9640 may be disposed in the filter cradle 9600 as illustrated in FIG. 99. The first latch portions 9640 may be inserted into respective grooves 9629 formed in the rear cradle 9620 of the filter cradle 9600. Furthermore, the first latch portion 9640 may have a screw form in which the size of a head portion is greater than that of a body portion.

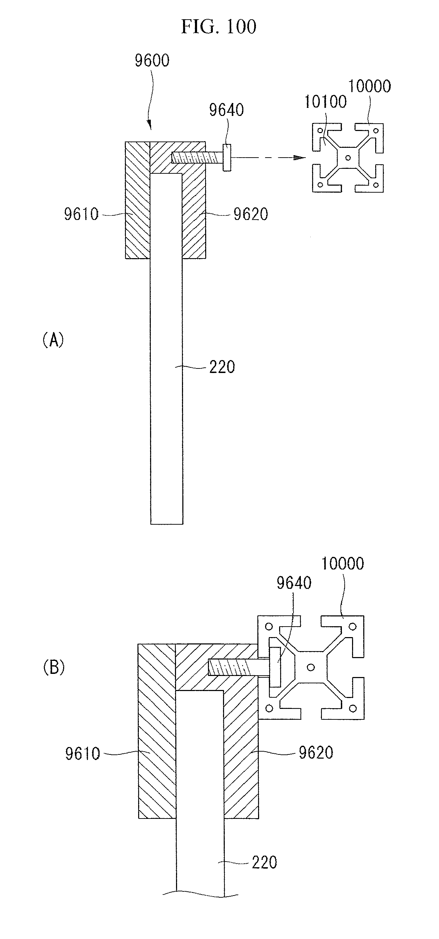

Referring to (A) of FIG. 100, the first latch portions 9640 may be inserted into the first connection portion 10100 of the filter connection unit 10000.

The state in which the first latch portions 9640 and the filter connection unit 10000 have been connected may correspond to (B) of FIG. 100.

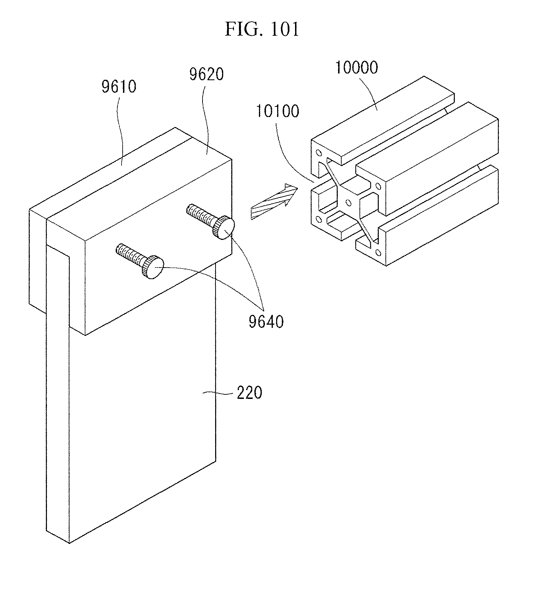

Furthermore, the first latch portions 9640 may be connected to the first connection portion 10100 of the filter connection unit 10000 in a sliding way, as illustrated in FIG. 101.

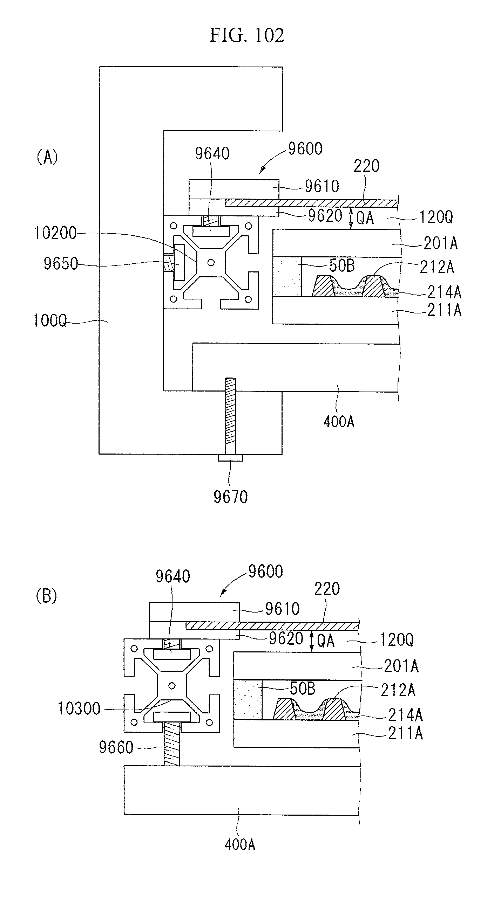

Referring to (A) of FIG. 102, the side cover 100Q may include second latch portions 9650, and the second latch portions 9650 may be inserted into the second connection portion 10200 of the filter connection unit 10000. For example, the second latch portions 9650 may be inserted into the second connection portion 10200 of the filter connection unit 10000 in a sliding way, as in the case of FIG. 101.

Furthermore, the side cover 100Q may be connected to the main frame 400A. For example, specific clamping means 9670 may be used to connect the side cover 100Q and the main frame 400A.

In this way, the filter cradle 9600, the side cover 100Q, and the main frame 400A may be connected.

Referring to (B) of FIG. 102, third latch portions 9660 may be disposed in the main frame 400A. The third latch portions 9660 may be inserted into the third connection portion 10300 of the filter connection unit 10000.

In this way, the filter cradle 9600 and the main frame 400A may be connected.

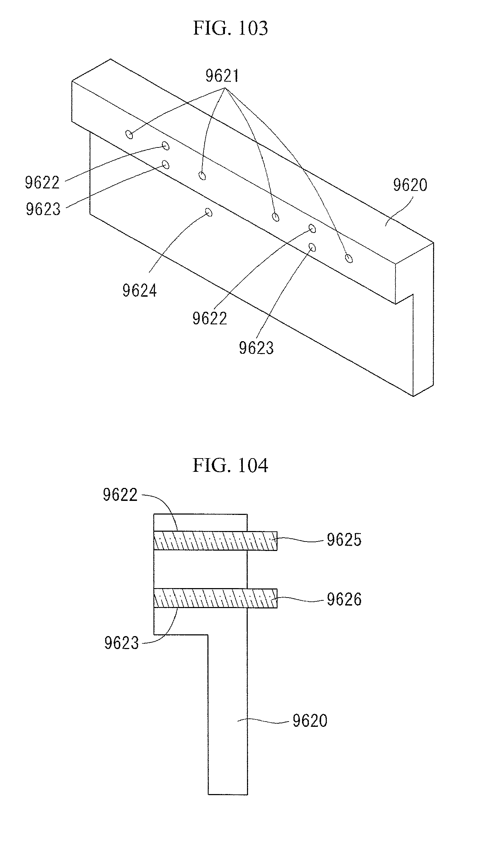

Referring to FIG. 103, the rear cradle 9620 may include one or more third holes 9622 and 9623 and at least one fourth hole 9624.

Furthermore, tilting means 9625 and 9626 configured to control the tilt of the 3-D filter may be disposed in the third holes 9622 and 9623.

More specifically, as illustrated in FIG. 104, first tilting means 9625 may be disposed in a (3-1)-th hole 9622, and second tilting means 9626 may be disposed in a (3-2)-th hole 9623.

In this case, the tilting means 9625 and 9626 may be screws.

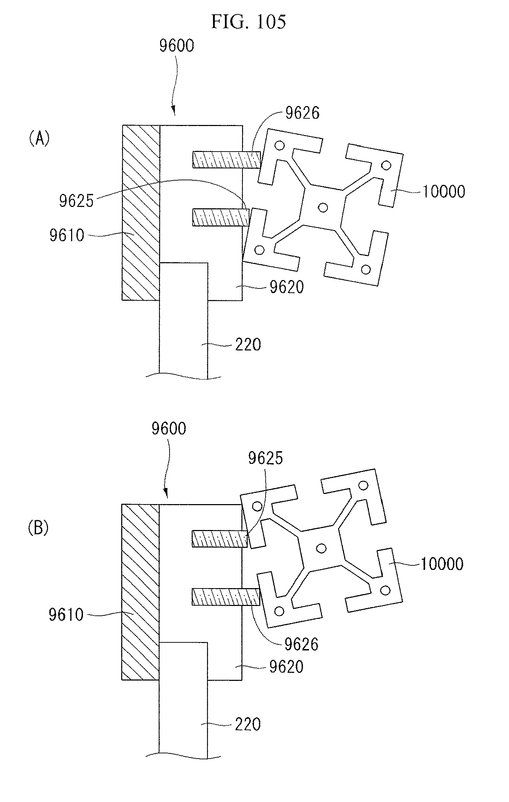

If the second tilting means 9626 is strongly tightened compared to the first tilting means 9625, the first tilting means 9625 may be further protruded compared to the second tilting means 9626 as illustrated in (A) of FIG. 105. In such a case, the first tilting means 9625 may push out the filter connection unit 10000. Accordingly, the upper portion of the first 3-D filter 220 connected to the filter cradle 9600 may be tilted forward.

In contrast, if the first tilting means 9625 is strongly tightened compared to the second tilting means 9626, the second tilting means 9626 may be further protruded compared to the first tilting means 9625 as illustrated in (B) of FIG. 105. In such a case, the second tilting means 9626 may push out the filter connection unit 10000. Accordingly, the upper portion of the first 3-D filter 220 connected to the filter cradle 9600 may be tilted backward.

FIGS. 105(A) and 105(B) illustrate that the first 3-D filter 220 and the filter cradle 9600 seem to be fixed and the filter connection unit 10000 seems to move. However, it may be seen that the filter connection unit 10000 is fixed and the first 3-D filter 220 and the filter cradle 9600 are moved by taking into consideration that the filter connection unit 10000 is fixed to the side cover 100Q or the main frame 400.

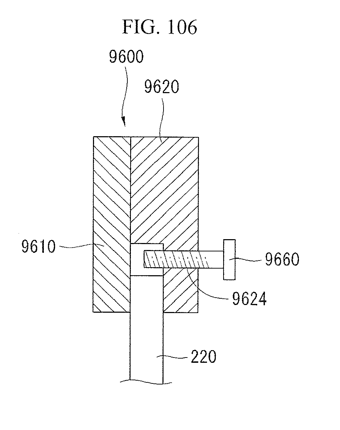

Referring to FIG. 106, a vertical location adjustment portion 9660 configured to control the vertical location of the first 3-D filter 220 may be disposed in the filter cradle 9600. The vertical location adjustment portion 9660 may be disposed in the fourth hole 9624 of the rear cradle 9620 of the filter cradle 9600.

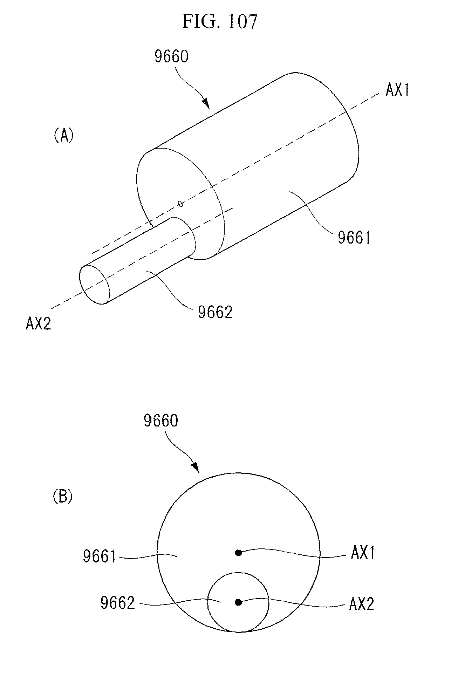

As illustrated in (A) and (B) of FIG. 107, the vertical location adjustment portion 9660 may include a cylindrical first rotation portion 9661 having a first pivot Ax1 orthogonal to the 3-D filter and a cylindrical second rotation portion 9662 having a second pivot Ax2 that is different from the first pivot Ax1 and that is horizontal to the first pivot Ax1.

From (B) of FIG. 107, it may be seen that the first pivot Ax1 of the first rotation portion 9661 and the second pivot Ax2 of the second rotation portion 9662 have deviated from each other.

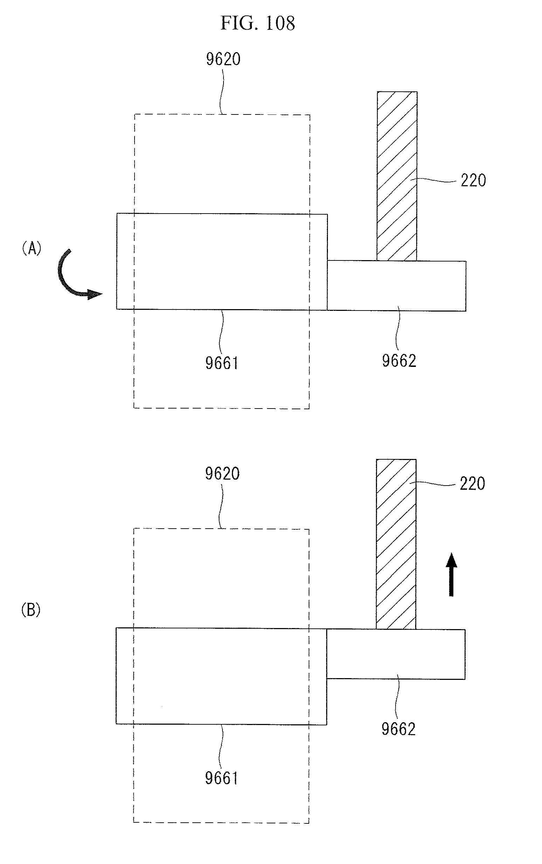

Referring to FIG. 108, the first rotation portion 9661 may correspond to the rear cradle 9620, and the second rotation portion 9662 may correspond to the first 3-D filter 220.

Accordingly, as illustrated in (A) and (B) of FIG. 108, when the first rotation portion 9661 is rotated, the location of the second rotation portion 9662 may be changed, and thus the vertical location of the first 3-D filter 220 corresponding to the second rotation portion 9662 may be changed.

In the multiple 3-D display device in accordance with an embodiment of the present invention, the vertical location of the 3-D filter can be controlled in this way.

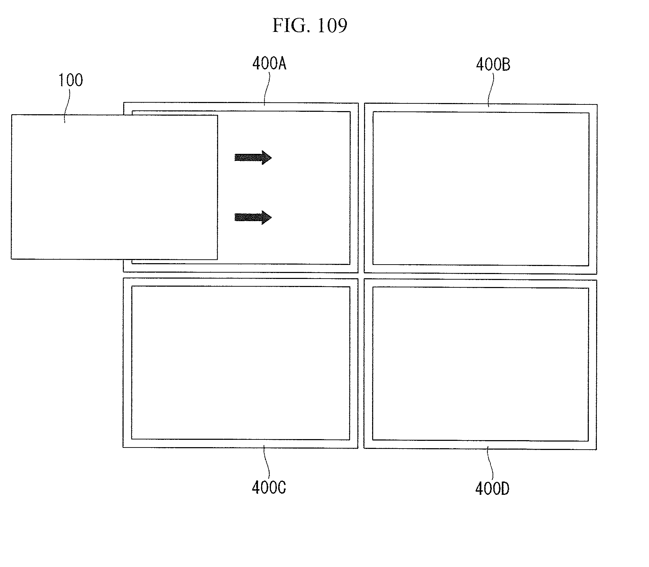

Referring to FIG. 109, in a multiple 3-D display device in accordance with an embodiment of the present invention, the first panel 100 may be inserted into the side of the main frame 400A using the rollers 600 disposed at the ends on both sides of the panel cradle 500. Accordingly, the assembly process of the multiple 3-D display device can be simplified.

Furthermore, since the display panel 100 can be inserted into the side of the main frame 400A, two adjacent panels can be further fastened in the horizontal direction. Accordingly, the interval between the first panel 100 and the second panel 110 and the interval between the third panel 120 and the fourth panel 130 can be further reduced. That is, the size of the seam area of two adjacent panels can be reduced. Accordingly, picture quality of an image implemented by the multiple 3-D display device can be improved.

Furthermore, fine control can be easily performed because each of the display panels 100 to 130 can be freely moved in the horizontal direction.

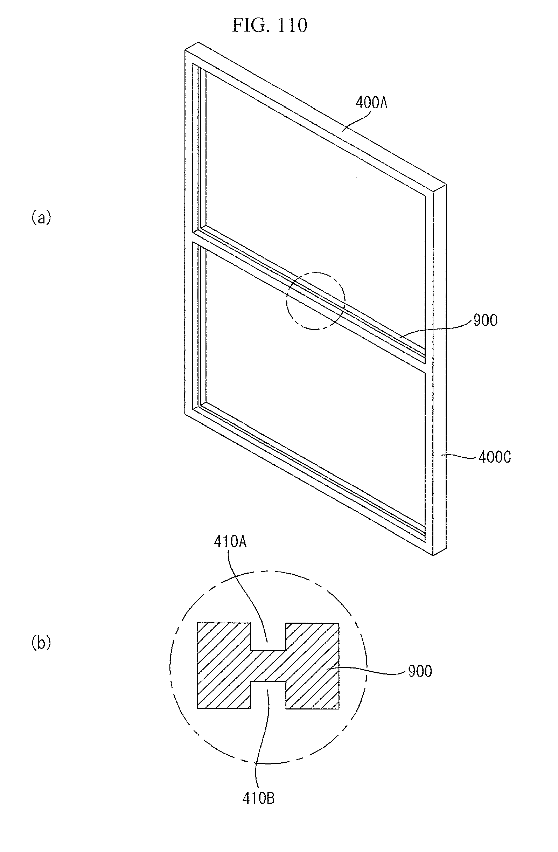

Furthermore, referring to FIG. 110, the first main frame 400A and a third main frame 400C adjacent to the first main frame 400A in the vertical direction may share a common bar 900.

The common bar 900 may be disposed between the first main frame 400A and the third main frame 400C and may include grooves 410A and 410B for guiding the rollers 600 on both inner sides thereof. That is, the two main frames 400A and 400B adjacent to each other in the vertical direction may be integrated and formed, and the common bar 900 disposed between the two main frames 400A and 400B adjacent to each other in the vertical direction may include both the groove 410A used in the first main frame 400A and the groove 400B used in the second main frame 400B.

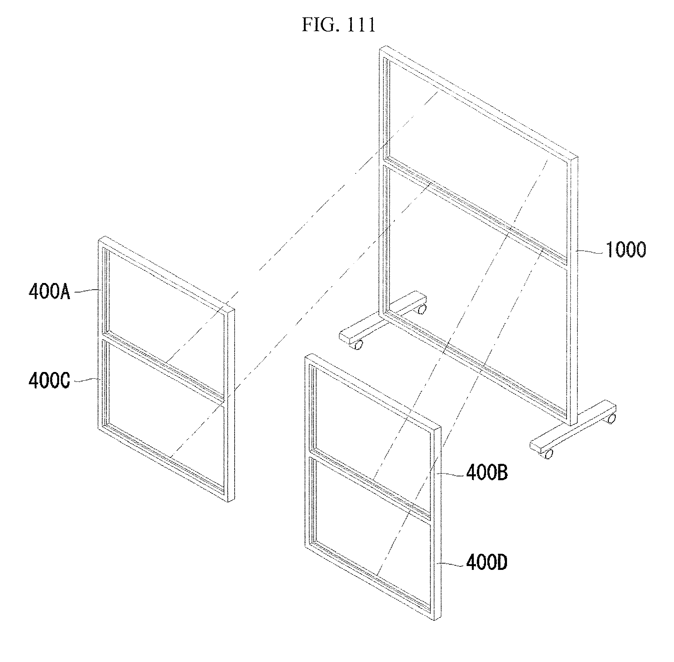

Referring to FIG. 111, the cradle of the multi-display panel and the multi-display device in accordance with an embodiment of the present invention may further include a base frame 1000.

The main frames 400A to 400D may be connected to the base frame 1000. Accordingly, a multi-display device of a stand type may be completed.

Alternatively, a multi-display device may be completed by omitting the base frame 1000 and fixing the main frames 400A to 400D to a wall.

The tilting portions 3110 may be applied in accordance with at least one of a plurality of display panels.

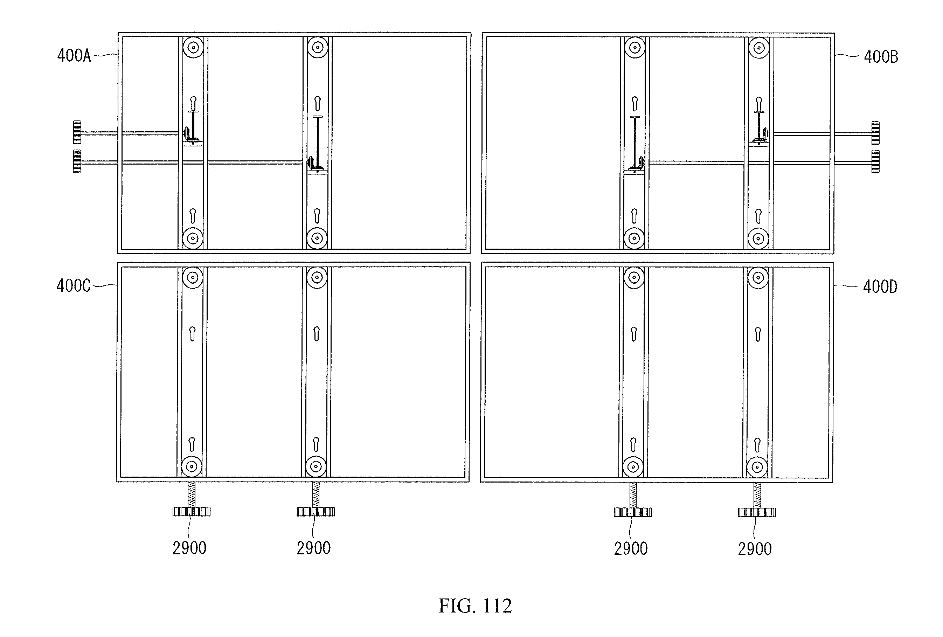

For example, it is assumed that a multi-display device includes the first, the second, the third, and the fourth panels 400A to 400D arranged in a 2x2 matrix form, as illustrated in FIG. 112.

In such a case, the height adjustment unit 2101 of a bevel-gear type may be applied to the multi-display device in accordance with the first and the second panels 400A and 400B.

This has been described in detail with reference to FIGS. 82 to 89.

The first and the second panels 400A and 400B can be easily lifted up using the height adjustment unit of a bevel-gear type because they are placed over the third and the fourth panels 400C and 400D. Accordingly, the first and the second panels 400A and 400B can be easily separated from or combined with the 3-D multi-display device in the upper direction DR30, as illustrated in FIG. 113.

It may be difficult to separate the third and the fourth display panels 400C and 400D from the 3-D multi-display device by lifting the third and the fourth display panels 400C and 400D up because the third and the fourth display panels 400C and 400D are placed under the first and the second panels 400A and 400B. If the aforementioned tilting portions are used, however, the third and the fourth display panels 400C and 400D can be tilted forward. Accordingly, as illustrated in FIG. 113, the third and the fourth display panels 400C and 400D can be easily separated from or combined with the 3-D multi-display device in the forward direction DR31 in the state in which the first and the second panels 400A and 400B have been combined with the 3-D multi-display device.

The multiple 3-D display device in accordance with an embodiment of the present invention has an advantage in that a number of viewers who do not wear 3-D glasses can watch a 3-D image because a plurality of the 3-D filters are disposed in front of respective display panels.

As described above, those skilled in the art to which the present invention pertains will understand that the present invention may be implemented in other various forms without departing from the technical spirit or essential characteristics of the present invention.

Accordingly, it will be understood that the aforementioned embodiments are illustrative and not limitative from all aspects. The scope of the present invention is defined by the appended claims rather than the detailed description, and the present invention should be construed as covering all modifications or variations derived from the meaning and scope of the appended claims and their equivalents.

## Claims

1. A multiple 3-D display device, comprising
a first panel;
a first 3-D filter in front of the first panel;
a second panel disposed adjacent to the first panel in a first direction; and
a second 3-D filter disposed in front of the second panel,
wherein an interval between the first 3-D filter and the second 3-D filter in the first direction is smaller than an interval between the first panel and the second panel.

2. The multiple 3-D display device of claim 1, wherein each of the first and the second 3-D filters comprises a pixel area for transmitting light generated by a left eye pixel or right eye pixel of each of the first and the second panels without changing a phase of the light.

3. The multiple 3-D display device of claim 2, wherein a direction in which the pixel area extends is an oblique direction based on a side of the first and the second 3-D filters.

4. The multiple 3-D display device of claim 1, wherein a width of at least one of the first 3-D filter and the second 3-D filter in the first direction is greater than a width of each of the first panel and the second panel.

5. The multiple 3-D display device of claim 1, wherein:
the first panel is spatially separated from the first 3-D filter, and
the second panel is spatially separated from the second 3-D filter.

6. The multiple 3-D display device of claim 1, wherein the first 3-D filter and the second panel are overlapped or the second 3-D filter and the first panel are overlapped in a width direction of the first and the second panels.

7. The multiple 3-D display device of claim 6, wherein a length of the first 3-D filter is different from a length of the second 3-D filter in the first direction.

8. The multiple 3-D display device of claim 1, further comprising:
a first transparent substrate disposed between the first panel and the first 3-D filter; and
a second transparent substrate disposed between the first panel and the second 3-D filter.

9. The multiple 3-D display device of claim 1, further comprising a structure disposed at a boundary portion of the first panel and the second panel,
wherein the structure comprises a portion disposed between the first panel and the first 3-D filter and a portion disposed between the second panel and the second 3-D filter.

10. The multiple 3-D display device of claim 9, wherein the structure comprises:
a body portion extended in a width direction of the first and the second panels and configured to comprise a portion disposed between the first 3-D filter and the second 3-D filter;
a first extension portion extended from the body portion in the first direction and disposed in front of the first 3-D filter;
a second extension portion extended from the body portion in the first direction and disposed in front of the second 3-D filter;
a third extension portion extended from the body portion in the first direction and disposed between the first panel and the first 3-D filter; and
a fourth extension portion extended from the body portion in the first direction and disposed between the second panel and the second 3-D filter.

11. The multiple 3-D display device of claim 1, wherein:
each of the first and the second 3-D filters comprises a pixel area for transmitting light generated by a left eye pixel or right eye pixel of each of the first and the second panels without changing a phase of the light;
the first panel and the second panel comprise a first area and a second area opposite the first area;
the first area of the first panel and the second area of the second panel are disposed adjacent to each other; and
assuming that an interval between a center of a first pixel group placed in the first area of the first panel and a center of a first pixel area of the first 3-D filter, corresponding to the first pixel group, in the first direction is a first interval, an interval between a center of the second pixel group placed in the second area of the first panel and a center of a second pixel area of the first 3-D filter, corresponding to the second pixel group, in the first direction is a second interval, an interval between a center of a third pixel group placed in the second area of the second panel and a center of a third pixel area of the second 3-D filter, corresponding to the third pixel group, in the first direction, is a third interval, and an interval between a center of a fourth pixel group placed in the first area of the second panel and a center of a fourth pixel area of the first 3-D filter, corresponding to the fourth pixel group, in the first direction, is a fourth interval,
the first interval is smaller than the second interval and the third interval is smaller than the fourth interval.

12. The multiple 3-D display device of claim 11, wherein the pixel area comprises lens units protruded from each of the first and the second panels so that the lens units become distant from the first and the second panels.

13. The multiple 3-D display device of claim 12, wherein a direction in which the lens units are extended is an oblique direction based on sides of the first and the second 3-D filters.

14. The multiple 3-D display device of claim 11, wherein each of the first and the second 3-D filters comprises blocking units configured to partitioning adjacent pixel area.

15. The multiple 3-D display device of claim 14, wherein a direction in which the blocking units are extended is an oblique direction based on sides of the first and the second 3-D filters.

16. The multiple 3-D display device of claim 1, wherein an air gap is formed between the first panel and the first 3-D filter and between the second panel and the second 3-D filter.

17. The multiple 3-D display device of claim 9, further comprising:
a first side cove disposed in the second area of the first panel; and
a second side cover disposed in the first area of the second panel,
wherein the first side cover is connected to the first 3-D filter, and
the second side cover is connected to the second 3-D filter.

18. The multiple 3-D display device of claim 10, wherein the body portion further comprises a portion disposed between the first panel and the second panel in the first direction.
